# EUROPEAN PATENT APPLICATION

(11) **EP 4 838 973 A1**
(43) Date of publication of application: **11.11.2026**
(21) Application number: 25741456.5
(22) Date of filing: 13.01.2025
(51) Int. Cl.: H04W 68/00

(54) **COMMUNICATION METHOD AND APPARATUS**

(30) Priority: 17.01.2024 CN 202410068633
(71) Applicant: Huawei Technologies Co., Ltd., Shenzhen, Guangdong 518129 (CN)
(72) Inventor: ZHANG, Tingrui, Shenzhen, Guangdong 518129 (CN); LIU, Mengting, Shenzhen, Guangdong 518129 (CN); XIE, Xi, Shenzhen, Guangdong 518129 (CN); GAO, Xin, Shenzhen, Guangdong 518129 (CN); CHANG, Junren, Shenzhen, Guangdong 518129 (CN)
(74) Representative: Huawei European IPR
(86) International application number: PCT/CN2025/072051
(87) International publication number: WO 2025/152895

(57) **Abstract**

This application discloses a communication method and apparatus, and relates to the communication field. The method includes: measuring signal quality of a serving cell; monitoring first information when the signal quality of the serving cell is greater than a second threshold, where the first information is related to paging; and/or measuring signal quality of a neighboring cell when the signal quality of the serving cell is less than the second threshold. In this application, a terminal device may be reminded to improve a channel condition or a reception status, thereby improving communication performance of the terminal device.

## Description

This application claims priority to Chinese Patent Application No. 202410068633.X, filed on January 17, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A paging message (paging message) is a message for sending a call or other important information to a user equipment (user equipment, UE) in a communication network. When a network side needs to communicate with a UE, the network side may send a paging message to the UE, so that the UE can make a corresponding response based on the paging message, for example, establishing a call connection. A process in which the network side sends the paging message to the UE may be referred to as paging.

When the network side sends the paging message to the UE, the paging message may fail to reach the UE. For example, the UE cannot receive the paging message.

### SUMMARY

This application provides a communication method and apparatus, to remind a terminal device to improve a channel condition or a reception status, and improve communication performance of the terminal device, for example, improve performance of receiving a paging message by the terminal device.

According to a first aspect, this application provides a communication method. The method includes: obtaining signal quality of a serving cell; monitoring first information when the signal quality of the serving cell is greater than a second threshold, where the first information is related to paging; and/or obtaining signal quality of a neighboring cell when the signal quality of the serving cell is less than the second threshold.

For example, the method in the first aspect may be applied to a terminal device. For example, the method is performed by a terminal device or an apparatus (for example, a chip) built in the terminal device.

In the communication method, a network device may send the first information to the terminal device, where the first information is related to paging. The terminal device may monitor the first information when the signal quality of the serving cell is greater than the second threshold, and obtain the signal quality of the neighboring cell when the signal quality of the serving cell is less than the second threshold. The terminal device monitors the first information, and responds to the first information to improve a channel condition, so that communication performance of receiving a paging message by the terminal device can be improved.

For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may preferentially camp on the current serving cell to monitor the first information, to improve a channel condition, thereby continuing to receive paging in the current serving cell. The terminal device starts neighboring cell measurement only when the SSB quality of the serving cell is excessively poor, for example, when the signal quality of the serving cell is less than the second threshold (in this case, it may also be considered that the first information is unreachable, or the terminal device cannot receive paging even if the terminal device improves the channel condition), to ensure a communication service of the terminal device. When the terminal device continues receiving paging in the current serving cell and does not start neighboring cell measurement, there is no subsequent cell reselection procedure evaluation, thereby reducing power consumption of performing neighboring cell measurement and cell reselection evaluation by the terminal device.

In other words, when the terminal device is in an environment in which the terminal device is unreachable due to obstruction, the terminal device has an opportunity to adjust or improve a channel condition of the terminal device by receiving the first information from the network side, so that neighboring cell measurement and cell reselection evaluation do not need to be triggered, and a service is preferentially received in the current serving cell, thereby reducing some overheads of neighboring cell measurement and cell reselection evaluation to some extent.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell. The terminal device may not perform a neighboring cell measurement procedure and a cell reselection procedure.

In a possible design, monitoring the first information when the signal quality of the serving cell is greater than the second threshold includes: monitoring the first information when the signal quality of the serving cell is less than a first threshold and greater than the second threshold. When the signal quality of the serving cell is greater than the first threshold, it may be considered that the terminal device has good communication quality in the current serving cell and can normally receive paging. Therefore, the terminal device may neither monitor the first information nor start neighboring cell measurement.

In this design, when the signal quality of the serving cell is greater than the first threshold, the terminal device may neither monitor the first information nor start neighboring cell measurement, thereby reducing power consumption of monitoring the first information, or reducing power consumption caused by unnecessary monitoring.

In a possible design, the first threshold and the second threshold are predefined, preconfigured, or configured.

In another possible design, the first threshold and a difference between the first threshold and the second threshold may be predefined, preconfigured, or configured.

In a possible design, the first threshold is related to a priority of the neighboring cell.

For example, when the neighboring cell includes only a neighboring cell having a priority lower than that of the serving cell, the first threshold is determined based on an inter-frequency or inter-RAT measurement initiation threshold; when the neighboring cell includes only a neighboring cell having a priority the same as that of the serving cell, the first threshold is determined based on an intra-frequency measurement initiation threshold; when the neighboring cell includes only a neighboring cell having a priority higher than that of the serving cell, the first threshold is determined based on a first value, where the first value is an inter-frequency or inter-RAT measurement initiation threshold or another defined value; when the neighboring cell includes only the neighboring cell having a priority lower than that of the serving cell and the neighboring cell having a priority the same as that of the serving cell, the first threshold is determined based on a larger value of the inter-frequency or inter-RAT measurement initiation threshold and the intra-frequency measurement initiation threshold; when the neighboring cell includes only the neighboring cell having a priority lower than that of the serving cell and the neighboring cell having a priority higher than that of the serving cell, the first threshold is determined based on a larger value of the inter-frequency or inter-RAT measurement initiation threshold and the first value; when the neighboring cell includes only the neighboring cell having a priority the same as that of the serving cell and the neighboring cell having a priority higher than that of the serving cell, the first threshold is determined based on a larger value of the intra-frequency measurement initiation threshold and the first value; or when the neighboring cell includes the neighboring cell having a priority lower than that of the serving cell, the neighboring cell having a priority the same as that of the serving cell, and the neighboring cell having a priority higher than that of the serving cell, the first threshold is determined based on a largest value of the inter-frequency or inter-RAT measurement initiation threshold, the intra-frequency measurement initiation threshold, and the first value.

In this design, a value of the first threshold is related to the priority of the neighboring cell, and the value of the first threshold is determined based on a priority type of the neighboring cell, so that the value of the first threshold better matches a measurement initiation threshold involved in a neighboring cell measurement scenario, or the value of the first threshold better meets requirements of the neighboring cell measurement scenario.

In a possible design, a difference between the first threshold and the second threshold is determined based on a first parameter, and the first parameter includes at least one of the following: a signal quality gain obtainable by adjusting a channel condition; a signal quality difference between the first information and a paging message; or maximum signal quality that can be received.

For example, a manner of determining the difference between the first threshold and the second threshold based on the first parameter may include: using the signal quality gain (or a value close to the signal quality gain) that can be obtained by adjusting the channel condition as the difference between the first threshold and the second threshold; using the signal quality difference (or a value close to the signal quality difference) between the first information and the paging message as the difference between the first threshold and the second threshold; or using a difference between the maximum signal quality that can be received by the terminal device and signal quality of a conventional paging message (or a value close to the difference between the maximum signal quality and the signal quality of the conventional paging message) as the difference between the first threshold and the second threshold.

In a possible design, the method further includes: when detecting that a first condition is met, stopping monitoring the first information, and obtaining the signal quality of the neighboring cell, where the first condition includes at least one of the following: a duration for which the signal quality of the serving cell is less than the first threshold reaches a first duration, or the received first information is ignored.

In this design, the first condition may be considered as a back-off condition when the terminal device is in a monitoring state. When it is detected that the first condition is met, monitoring the first information is stopped, and the signal quality of the neighboring cell is measured, so that the terminal device can consider the back-off condition in the monitoring state, and can be detached from unnecessary monitoring in a timely manner, to perform normal neighboring cell measurement and cell reselection evaluation, thereby ensuring communication performance of the terminal device.

According to a second aspect, this application provides a communication apparatus. The apparatus has a function of implementing the method according to the first aspect. The function may be implemented by hardware, or may be implemented by executing corresponding software by hardware. The hardware or the software includes one or more units or modules corresponding to the function in the method in the first aspect, for example, a measurement unit and a monitoring unit.

The measurement unit is configured to obtain signal quality of a serving cell. The monitoring unit is configured to monitor first information when the signal quality of the serving cell is greater than a second threshold, where the first information is related to paging. The measurement unit is further configured to obtain signal quality of a neighboring cell when the signal quality of the serving cell is less than the second threshold.

In a possible design, the monitoring unit is specifically configured to monitor the first information when the signal quality of the serving cell is less than a first threshold and greater than the second threshold.

In a possible design, the first threshold is related to a priority of the neighboring cell.

In a possible design, when the neighboring cell includes only a neighboring cell having a priority lower than that of the serving cell, the first threshold is determined based on an inter-frequency or inter-RAT measurement initiation threshold; when the neighboring cell includes only a neighboring cell having a priority the same as that of the serving cell, the first threshold is determined based on an intra-frequency measurement initiation threshold; when the neighboring cell includes only a neighboring cell having a priority higher than that of the serving cell, the first threshold is determined based on a first value, where the first value is an inter-frequency or inter-RAT measurement initiation threshold or another defined value; when the neighboring cell includes only the neighboring cell having a priority lower than that of the serving cell and the neighboring cell having a priority the same as that of the serving cell, the first threshold is determined based on a larger value of the inter-frequency or inter-RAT measurement initiation threshold and the intra-frequency measurement initiation threshold; when the neighboring cell includes only the neighboring cell having a priority lower than that of the serving cell and the neighboring cell having a priority higher than that of the serving cell, the first threshold is determined based on a larger value of the inter-frequency or inter-RAT measurement initiation threshold and the first value; when the neighboring cell includes only the neighboring cell having a priority the same as that of the serving cell and the neighboring cell having a priority higher than that of the serving cell, the first threshold is determined based on a larger value of the intra-frequency measurement initiation threshold and the first value; or when the neighboring cell includes the neighboring cell having a priority lower than that of the serving cell, the neighboring cell having a priority the same as that of the serving cell, and the neighboring cell having a priority higher than that of the serving cell, the first threshold is determined based on a largest value of the inter-frequency or inter-RAT measurement initiation threshold, the intra-frequency measurement initiation threshold, and the first value.

In a possible design, a difference between the first threshold and the second threshold is determined based on a first parameter, and the first parameter includes at least one of the following: a signal quality gain obtainable by adjusting a channel condition; a signal quality difference between the first information and a paging message; or maximum signal quality that can be received.

In a possible design, the monitoring unit is further configured to: when detecting that a first condition is met, stop monitoring the first information; and the measurement unit is further configured to obtain the signal quality of the neighboring cell after monitoring the first information is stopped, where the first condition includes at least one of the following: a duration for which the signal quality of the serving cell is less than the first threshold reaches a first duration, or the received first information is ignored.

According to a third aspect, an embodiment of this application further provides a communication apparatus, including a processor, configured to execute computer instructions stored in a memory. When the computer instructions are executed, the apparatus is enabled to perform the method according to any one of the first aspect or the possible designs of the first aspect.

According to a fourth aspect, this application further provides a communication apparatus, including a processor and an interface circuit. The processor is configured to: communicate with another apparatus through the interface circuit, and perform the method according to any one of the first aspect or the possible designs of the first aspect.

For example, in the third aspect and the fourth aspect, the processor is configured to perform the method according to any one of the first aspect or the possible designs of the first aspect.

The communication apparatus according to the second aspect to the fourth aspect may be a terminal device, or may be an apparatus (for example, a chip) built in the terminal device.

According to a fifth aspect, this application further provides a computer-readable storage medium, including computer software instructions. When the computer software instructions are executed, the method according to any one of the first aspect or the possible designs of the first aspect is implemented. For example, when the computer software instructions are executed by the terminal device or the apparatus (for example, a chip) built in the terminal device, the terminal device is enabled to implement the method according to any one of the first aspect or the possible designs of the first aspect.

It may be understood that, for beneficial effects that can be achieved in the second aspect to the fifth aspect, refer to the beneficial effects in any one of the first aspect and the possible designs thereof. Details are not described herein again.

According to a sixth aspect, this application provides a communication method. The method includes: obtaining signal quality of a serving cell; obtaining signal quality of a neighboring cell; and monitoring first information when the signal quality of the serving cell is greater than a fourth threshold, where the first information is related to paging; and/or performing cell reselection evaluation when the signal quality of the serving cell is less than the fourth threshold.

For example, the method in the sixth aspect may be applied to a terminal device. For example, the method is performed by a terminal device or an apparatus (for example, a chip) built in the terminal device.

In the communication method, a network device may send the first information to the terminal device, where the first information is related to paging. After the terminal device obtains the signal quality of the serving cell and the neighboring cell, when the signal quality of the serving cell is greater than the fourth threshold, the terminal device may monitor the first information; when the signal quality of the serving cell is less than the fourth threshold, the terminal device may perform cell reselection evaluation. The terminal device monitors the first information, and responds to the first information to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may preferentially camp on the current serving cell to monitor the first information, to improve a channel condition, thereby continuing to receive paging in the current serving cell. The terminal device starts cell reselection evaluation only when the SSB quality of the serving cell is excessively poor, for example, when the signal quality of the serving cell is less than the fourth threshold (in this case, it may also be considered that the first information is unreachable, or the terminal device cannot receive paging even if the terminal device improves the channel condition), to ensure a communication service of the terminal device. When the terminal device continues receiving paging in the current serving cell and does not start cell reselection evaluation, power consumption of performing cell reselection evaluation by the terminal device is reduced.

In other words, when the terminal device is in an environment in which the terminal device is unreachable due to obstruction, the terminal device has an opportunity to adjust or improve a channel condition of the terminal device by receiving the first information from the network side, so that cell reselection evaluation does not need to be triggered, and a service is preferentially received in the current serving cell, thereby reducing some overheads of cell reselection to some extent.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell. The terminal device may not perform a cell reselection evaluation procedure.

In a possible design, monitoring the first information when the signal quality of the serving cell is greater than the fourth threshold includes: monitoring the first information when the signal quality of the serving cell is less than a third threshold and greater than the fourth threshold.

In this design, when the signal quality of the serving cell is greater than the third threshold, the terminal device may neither monitor the first information nor start cell reselection evaluation, thereby reducing power consumption of monitoring the first information, or reducing power consumption caused by unnecessary monitoring.

In a possible design, the third threshold and the fourth threshold are predefined, preconfigured, or configured.

In another possible design, the third threshold and a difference between the third threshold and the fourth threshold may be predefined, preconfigured, or configured.

In a possible design, the third threshold is related to a priority of the neighboring cell.

For example, when the neighboring cell includes a neighboring cell having a priority lower than that of the serving cell, the third threshold is determined based on a low-priority neighboring cell reselection threshold; or when the neighboring cell does not include a neighboring cell having a priority lower than that of the serving cell, the third threshold is determined based on a second value, where the second value is an S-criterion threshold or another defined value.

In this design, a value of the third threshold is related to the priority of the neighboring cell, and the value of the third threshold is determined based on a priority type of the neighboring cell, so that the value of the third threshold can better match a cell reselection threshold involved in a cell reselection scenario, or the value of the third threshold can better meet requirements of the cell reselection scenario.

In a possible design, a difference between the third threshold and the fourth threshold is determined based on a second parameter, and the second parameter includes at least one of the following: a signal quality gain obtainable by adjusting a channel condition; a signal quality difference between the first information and a paging message; or maximum signal quality that can be received.

For example, a manner of determining the difference between the third threshold and the fourth threshold based on the second parameter may include: using the signal quality gain (or a value close to the signal quality gain) that can be obtained by adjusting the channel condition as the difference between the third threshold and the fourth threshold; using the signal quality difference (or a value close to the signal quality difference) between the first information and the paging message as the difference between the third threshold and the fourth threshold; or using a difference between the maximum signal quality that can be received by the terminal device and signal quality of a conventional paging message (or a value close to the difference between the maximum signal quality and the signal quality of the conventional paging message) as the difference between the third threshold and the fourth threshold.

In a possible design, the method further includes: when detecting that a second condition is met, stopping monitoring the first information, and performing cell reselection evaluation, where the second condition includes at least one of the following: a duration for which the signal quality of the serving cell is less than the third threshold reaches a second duration, or the received first information is ignored.

In this design, the second condition may be considered as a back-off condition when the terminal device is in a monitoring state. When it is detected that the second condition is met, monitoring the first information is stopped, and cell reselection evaluation is performed, so that the terminal device can consider the back-off condition in the monitoring state, and can be detached from unnecessary monitoring in a timely manner, to perform normal cell reselection evaluation, thereby ensuring communication performance of the terminal device.

According to a seventh aspect, this application provides a communication apparatus. The apparatus has a function of implementing the method according to the sixth aspect. The function may be implemented by hardware, or may be implemented by executing corresponding software by hardware. The hardware or the software includes one or more units or modules corresponding to the function in the method in the sixth aspect, for example, a measurement unit, a monitoring unit, and a reselection unit.

The measurement unit is configured to obtain signal quality of a serving cell. The measurement unit is further configured to obtain signal quality of a neighboring cell. The monitoring unit is configured to monitor first information when the signal quality of the serving cell is greater than a fourth threshold, where the first information is related to paging. The reselection unit is configured to perform cell reselection evaluation when the signal quality of the serving cell is less than the fourth threshold.

In a possible design, the monitoring unit is specifically configured to monitor the first information when the signal quality of the serving cell is less than a third threshold and greater than the fourth threshold.

In a possible design, the third threshold is related to a priority of the neighboring cell.

In a possible design, when the neighboring cell includes a neighboring cell having a priority lower than that of the serving cell, the third threshold is determined based on a low-priority neighboring cell reselection threshold; or when the neighboring cell does not include a neighboring cell having a priority lower than that of the serving cell, the third threshold is determined based on a second value, where the second value is an S-criterion threshold or another defined value.

In a possible design, a difference between the third threshold and the fourth threshold is determined based on a second parameter, and the second parameter includes at least one of the following: a signal quality gain obtainable by adjusting a channel condition; a signal quality difference between the first information and a paging message; or maximum signal quality that can be received.

In a possible design, the monitoring unit is further configured to: when detecting that a second condition is met, stop monitoring the first information; and the reselection unit is further configured to perform cell reselection evaluation after monitoring the first information is stopped. The second condition includes at least one of the following: a duration for which the signal quality of the serving cell is less than the third threshold reaches a second duration, or the received first information is ignored.

According to an eighth aspect, an embodiment of this application further provides a communication apparatus, including a processor, configured to execute computer instructions stored in a memory. When the computer instructions are executed, the apparatus is enabled to perform the method according to any one of the sixth aspect or the possible designs of the sixth aspect.

According to a ninth aspect, this application further provides a communication apparatus, including a processor and an interface circuit. The processor is configured to: communicate with another apparatus through the interface circuit, and perform the method according to any one of the sixth aspect or the possible designs of the sixth aspect.

For example, in the eighth aspect and the ninth aspect, the processor is configured to perform the method according to any one of the sixth aspect or the possible designs of the sixth aspect.

The communication apparatus according to any one of the seventh aspect to the ninth aspect may be a terminal device, or may be an apparatus (for example, a chip) built in the terminal device.

According to a tenth aspect, this application further provides a computer-readable storage medium, including computer software instructions. When the computer software instructions are executed, the method according to any one of the sixth aspect or the possible designs of the sixth aspect is implemented. For example, when the computer software instructions are executed by the terminal device or the apparatus (for example, a chip) built in the terminal device, the terminal device is enabled to implement the method according to any one of the sixth aspect or the possible designs of the sixth aspect.

It may be understood that, for beneficial effects that can be achieved in the seventh aspect to the tenth aspect, refer to the beneficial effects in any one of the sixth aspect and the possible designs thereof. Details are not described herein again.

According to an eleventh aspect, this application provides a communication method. The method includes: obtaining signal quality of a serving cell; obtaining signal quality of a neighboring cell; and performing cell reselection evaluation, and monitoring first information, where the first information is related to paging.

For example, the method in the eleventh aspect may be applied to a terminal device. For example, the method is performed by a terminal device or an apparatus (for example, a chip) built in the terminal device.

In the communication method, a network device may send the first information to the terminal device, where the first information is related to paging. After obtaining the signal quality of the serving cell and the neighboring cell, the terminal device may perform cell reselection evaluation, and may monitor the first information during cell reselection evaluation. The terminal device monitors the first information, and responds to the first information to improve a channel condition, so that communication performance of receiving a paging message by the terminal device can be improved.

For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may simultaneously perform cell reselection evaluation and monitor the first information. When the first information is preferentially monitored, the terminal device may improve a channel condition, to continue receiving paging in the current serving cell. According to the method, the first information may be monitored without changing an existing cell reselection evaluation procedure, to continue camping on the current serving cell to receive paging.

In other words, when the terminal device is in an environment in which the terminal device is unreachable due to obstruction, and performs cell reselection evaluation, the terminal device has an opportunity to adjust or improve a channel condition of the terminal device by receiving the first information from the network side, so that a service is preferentially received in the current serving cell.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell.

In a possible design, performing cell reselection evaluation, and monitoring the first information includes: performing cell reselection evaluation and monitoring the first information when the signal quality of the serving cell is less than a fifth threshold. The method further includes: performing cell reselection evaluation when the signal quality of the serving cell is greater than the fifth threshold.

In this design, the case in which the signal quality of the serving cell is greater than the fifth threshold may be considered as a case in which the terminal device cannot normally receive paging even if the channel condition is improved. For example, the terminal device may be located at a cell edge but is not obstructed. When the signal quality of the serving cell is less than the fifth threshold, cell reselection evaluation is performed, and the first information is monitored; and when the signal quality of the serving cell is greater than the fifth threshold, cell reselection evaluation is performed, and monitoring of the first information performed when the signal quality of the serving cell is greater than the fifth threshold can be omitted, so that unnecessary monitoring is reduced.

Optionally, in this design, similar to a condition of monitoring the first information in a cell reselection evaluation phase, when cell selection is performed because no suitable cell is reselected through cell reselection evaluation, if signal quality of a last serving cell is less than the fifth threshold, the first information may be monitored on the last serving cell while cell selection is performed; and if the signal quality of the last serving cell is greater than the fifth threshold, cell selection may be performed, while the first information may not be monitored.

It should be understood that, when the terminal device is in an environment in which the terminal device is unreachable due to obstruction, and performs cell selection, the terminal device has an opportunity to adjust or improve a channel condition of the terminal device by receiving the first information from the network side, so that a service is preferentially received on the last serving cell.

In a possible design, the fifth threshold is predefined, preconfigured, or configured.

In a possible design, the fifth threshold is determined based on a third value, and the third value is an S-criterion threshold or another defined value.

For example, the value of the fifth threshold may be an S-criterion threshold or another defined value.

In a possible design, performing cell reselection evaluation and monitoring the first information when the signal quality of the serving cell is less than the fifth threshold includes: performing cell reselection evaluation and monitoring the first information when the signal quality of the serving cell is less than the fifth threshold and greater than a sixth threshold. The method further includes: performing cell reselection evaluation when the signal quality of the serving cell is less than the sixth threshold.

In this design, when the signal quality of the serving cell is less than the sixth threshold, the terminal device may not monitor the first information, but only perform cell reselection evaluation, thereby reducing power consumption of monitoring the first information, or reducing power consumption caused by unnecessary monitoring.

Optionally, in this design, similar to a condition of monitoring the first information in a cell reselection evaluation phase, when cell selection is performed because no suitable cell is reselected through cell reselection evaluation, if signal quality of a last serving cell is less than the fifth threshold and greater than the sixth threshold, the first information may be monitored on the last serving cell while cell selection is performed; and if the signal quality of the last serving cell is greater than the fifth threshold or less than the sixth threshold, cell selection may be performed, while the first information may not be monitored.

Alternatively, in some other possible designs, when cell selection is performed because no suitable cell is reselected through cell reselection evaluation, monitoring the first information may be started when cell selection is triggered; or when a suitable cell is selected through cell selection, when the received first information is ignored, or when signal quality of a last serving cell is less than a seventh threshold, monitoring the first information is stopped.

In a possible design, the sixth threshold may be predefined, preconfigured, or configured. Alternatively, a difference between the fifth threshold and the sixth threshold may be predefined, preconfigured, or configured.

In a possible design, the difference between the sixth threshold and the fifth threshold is determined based on a third parameter. The third parameter includes at least one of the following: a signal quality gain obtainable by adjusting a channel condition; a signal quality difference between the first information and a paging message; or maximum signal quality that can be received.

For example, a manner of determining the difference between the fifth threshold and the sixth threshold based on the third parameter may include: using the signal quality gain (or a value close to the signal quality gain) that can be obtained by adjusting the channel condition as the difference between the fifth threshold and the sixth threshold; using the signal quality difference (or a value close to the signal quality difference) between the first information and the paging message as the difference between the fifth threshold and the sixth threshold; or using a difference between the maximum signal quality that can be received by the terminal device and signal quality of a conventional paging message (or a value close to the difference between the maximum signal quality and the signal quality of the conventional paging message) as the difference between the fifth threshold and the sixth threshold.

In a possible design, the method further includes: when no suitable cell is reselected through cell reselection evaluation, performing cell selection and monitoring the first information.

In an implementation, when no suitable cell is reselected through cell reselection evaluation, performing cell selection and monitoring the first information includes: when no suitable cell is reselected through cell reselection evaluation, performing cell selection and monitoring the first information on a last serving cell.

For example, that no suitable cell is reselected through cell reselection evaluation includes: Search and measurement are performed during a third duration, and no new suitable cell is found.

In a possible design, the method further includes: when detecting that a third condition is met, stopping monitoring the first information. The third condition includes at least one of the following: a suitable cell is selected through cell reselection or cell selection or the received first information is ignored.

In this design, the third condition may be considered as a back-off condition when the terminal device is in a monitoring state. When it is detected that the third condition is met, monitoring the first information is stopped, so that the terminal device can consider the back-off condition in the monitoring state, and can be detached from unnecessary monitoring in a timely manner, thereby ensuring communication performance of the terminal device.

According to a twelfth aspect, this application provides a communication apparatus. The apparatus has a function of implementing the method according to the eleventh aspect. The function may be implemented by hardware, or may be implemented by executing corresponding software by hardware. The hardware or the software includes one or more units or modules corresponding to the function in the method in the eleventh aspect, for example, a measurement unit, a reselection unit, and a monitoring unit.

The measurement unit is configured to obtain signal quality of a serving cell. The measurement unit is further configured to obtain signal quality of a neighboring cell. The reselection unit is configured to perform cell reselection evaluation. The monitoring unit is configured to monitor first information when the reselection unit performs cell reselection evaluation, where the first information is related to paging.

In a possible design, the reselection unit is specifically configured to perform cell reselection evaluation when the signal quality of the serving cell is less than a fifth threshold. The monitoring unit is specifically configured to monitor the first information when the reselection unit performs cell reselection evaluation when the signal quality of the serving cell is less than the fifth threshold. The reselection unit is further configured to perform cell reselection evaluation when the signal quality of the serving cell is greater than the fifth threshold.

In a possible design, the fifth threshold is determined based on a third value, and the third value is an S-criterion threshold or another defined value.

In a possible design, the reselection unit is specifically configured to perform cell reselection evaluation when the signal quality of the serving cell is less than the fifth threshold and greater than a sixth threshold. The monitoring unit is specifically configured to monitor the first information when the reselection unit performs cell reselection evaluation when the signal quality of the serving cell is less than the fifth threshold and greater than the sixth threshold. The reselection unit is further configured to perform cell reselection evaluation when the signal quality of the serving cell is less than the sixth threshold.

In a possible design, the difference between the sixth threshold and the fifth threshold is determined based on a third parameter. The third parameter includes at least one of the following: a signal quality gain obtainable by adjusting a channel condition; a signal quality difference between the first information and a paging message; or maximum signal quality that can be received.

In a possible design, the apparatus further includes: a selection unit, configured to perform cell selection when no suitable cell is reselected through cell reselection evaluation. The monitoring unit is further configured to monitor the first information when the selection unit performs cell selection.

In an implementation, the monitoring unit is specifically configured to monitor the first information on a last serving cell when the selection unit performs cell selection.

For example, that no suitable cell is reselected through cell reselection evaluation includes: Search and measurement are performed during a third duration, and no new suitable cell is found.

In a possible design, the monitoring unit is further configured to: when detecting that a third condition is met, stop monitoring the first information. The third condition includes at least one of the following: a suitable cell is selected through cell reselection or cell selection or the received first information is ignored.

According to a thirteenth aspect, an embodiment of this application further provides a communication apparatus, including a processor, configured to execute computer instructions stored in a memory. When the computer instructions are executed, the apparatus is enabled to perform the method according to any one of the eleventh aspect or the possible designs of the eleventh aspect.

According to a fourteenth aspect, this application further provides a communication apparatus, including a processor and an interface circuit. The processor is configured to: communicate with another apparatus through the interface circuit, and perform the method according to any one of the eleventh aspect or the possible designs of the eleventh aspect.

For example, in the thirteenth aspect and the fourteenth aspect, the processor is configured to perform the method according to any one of the eleventh aspect or the possible designs of the eleventh aspect.

The communication apparatus according to the twelfth aspect to the fourteenth aspect may be a terminal device, or may be an apparatus (for example, a chip) built in the terminal device.

According to a fifteenth aspect, this application further provides a computer-readable storage medium, including computer software instructions. When the computer software instructions are executed, the method according to any one of the eleventh aspect or the possible designs of the eleventh aspect is implemented. For example, when the computer software instructions are executed by a terminal device or an apparatus (for example, a chip) built in the terminal device, the terminal device is enabled to implement the method according to any one of the eleventh aspect or the possible designs of the eleventh aspect.

It may be understood that, for beneficial effects that can be achieved in the twelfth aspect to the fifteenth aspect, refer to the beneficial effect in any one of the eleventh aspect and the possible designs thereof. Details are not described herein again.

According to a sixteenth aspect, this application provides a communication method. The method includes: performing cell reselection evaluation; and when no suitable cell is reselected through cell reselection evaluation, performing cell selection and monitoring first information, where the first information is related to paging.

For example, the method in the sixteenth aspect may be applied to a terminal device. For example, the method is performed by a terminal device or an apparatus (for example, a chip) built in the terminal device.

In the communication method, a network device may send the first information to the terminal device, where the first information is related to paging. When no suitable cell is reselected through cell reselection evaluation, the terminal device may perform cell selection and monitor the first information. The terminal device monitors the first information, and responds to the first information to improve a channel condition, so that communication performance of receiving a paging message by the terminal device can be improved.

For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may simultaneously perform cell selection and monitor the first information. When the first information is preferentially monitored, the terminal device may improve a channel condition, to return to the last serving cell to receive paging. In the method, the first information may be monitored without changing an existing cell selection procedure, to return to camp on a last serving cell to receive paging.

In other words, when the terminal device is in an environment in which the terminal device is unreachable due to obstruction, and performs cell selection, the terminal device has an opportunity to adjust or improve a channel condition of the terminal device by receiving the first information from the network side, to return to the last serving cell to receive a service.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service, for example, returns to the last serving cell to receive paging.

In an implementation, monitoring the first information includes: monitoring the first information on a last serving cell.

For example, that no suitable cell is reselected through cell reselection evaluation includes: Search and measurement are performed during a third duration, and no new suitable cell is found.

In a possible design, the method further includes: when detecting that a fourth condition is met, stopping monitoring the first information. The fourth condition includes at least one of the following: a suitable cell is selected through cell selection, the received first information is ignored, or signal quality of the last serving cell is less than a seventh threshold.

In this design, the third condition may be considered as a back-off condition when the terminal device is in a monitoring state. When it is detected that the third condition is met, monitoring the first information is stopped, so that the terminal device can consider the back-off condition in the monitoring state, and can be detached from unnecessary monitoring in a timely manner, thereby ensuring communication performance of the terminal device. For example, when detecting that the fourth condition is met, the terminal device stops monitoring the first information, so that power consumption of monitoring the first information is reduced, or power consumption caused by unnecessary monitoring is reduced.

In a possible design, the seventh threshold is predefined, preconfigured, or configured.

In a possible design, the seventh threshold is determined based on a fourth value, and the fourth value is an S-criterion threshold or another defined value.

In some examples, the value of the seventh threshold may be a value obtained by decreasing the S-criterion threshold or another defined value by a specific adjustment value.

In a possible design, a difference between the seventh threshold and the fourth value is determined based on a fourth parameter. The fourth parameter includes at least one of the following: a signal quality gain obtainable by adjusting a channel condition; a signal quality difference between the first information and a paging message; or maximum signal quality that can be received.

For example, a manner of determining the difference between the seventh threshold and the fourth value based on the fourth parameter may include: using the signal quality gain (or a value close to the signal quality gain) that can be obtained by adjusting the channel condition as the difference between the seventh threshold and the fourth value; using the signal quality difference (or a value close to the signal quality difference) between the first information and the paging message as the difference between the seventh threshold and the fourth value; or using a difference between the maximum signal quality that can be received by the terminal device and signal quality of a conventional paging message (or a value close to the difference between the maximum signal quality and the signal quality of the conventional paging message) as the difference between the seventh threshold and the fourth value.

Optionally, when the terminal device in a cell selection and pre-prompt monitoring state (that is, a state of monitoring the first information) finds an acceptable cell, the terminal device may ignore the acceptable cell and does not camp on the acceptable cell, for example, continue searching for a suitable cell and monitor the first information.

According to a seventeenth aspect, this application provides a communication apparatus. The apparatus has a function of implementing the method according to the sixteenth aspect. The function may be implemented by hardware, or may be implemented by executing corresponding software by hardware. The hardware or software includes one or more units or modules corresponding to the function in the method in the sixteenth aspect, for example, a reselection unit, a selection unit, and a monitoring unit.

The reselection unit is configured to perform cell reselection evaluation. The selection unit is configured to perform cell selection when no suitable cell is reselected through cell reselection evaluation. The monitoring unit is configured to monitor first information when cell selection is performed because no suitable cell is reselected through cell reselection evaluation, where the first information is related to paging.

In an implementation, the monitoring unit is specifically configured to monitor the first information on a last serving cell.

For example, that no suitable cell is reselected through cell reselection evaluation includes: Search and measurement are performed during a third duration, and no new suitable cell is found.

In a possible design, the monitoring unit is further configured to: when detecting that a fourth condition is met, stop monitoring the first information. The fourth condition includes at least one of the following: a suitable cell is selected through cell selection, the received first information is ignored, or signal quality of the last serving cell is less than a seventh threshold.

In a possible design, the seventh threshold is determined based on a fourth value, and the fourth value is an S-criterion threshold or another defined value.

In a possible design, a difference between the seventh threshold and the fourth value is determined based on a fourth parameter. The fourth parameter includes at least one of the following: a signal quality gain obtainable by adjusting a channel condition; a signal quality difference between the first information and a paging message; or maximum signal quality that can be received.

According to an eighteenth aspect, an embodiment of this application further provides a communication apparatus, including a processor, configured to execute computer instructions stored in a memory. When the computer instructions are executed, the apparatus is enabled to perform the method according to any one of the sixteenth aspect or the possible designs of the sixteenth aspect.

According to a nineteenth aspect, this application further provides a communication apparatus, including a processor and an interface circuit. The processor is configured to: communicate with another apparatus through the interface circuit, and perform the method according to any one of the sixteenth aspect or the possible designs of the sixteenth aspect.

For example, in the eighteenth aspect and the nineteenth aspect, the processor is configured to perform the method according to any one of the sixteenth aspect or the possible designs of the sixteenth aspect.

The communication apparatus according to the seventeenth aspect to the nineteenth aspect may be a terminal device, or may be an apparatus (for example, a chip) built in the terminal device.

According to a twentieth aspect, this application further provides a computer-readable storage medium, including computer software instructions. When the computer software instructions are executed, the method according to any one of the sixteenth aspect or the possible designs of the sixteenth aspect is implemented. For example, when the computer software instructions are executed by the terminal device or the apparatus (for example, a chip) built in the terminal device, the terminal device is enabled to implement the method according to any one of the sixteenth aspect or the possible designs of the sixteenth aspect.

It may be understood that, for beneficial effects that can be achieved in the seventeenth aspect to the twentieth aspect, refer to the beneficial effects in any one of the sixteenth aspect and the possible designs thereof. Details are not described herein again.

According to a twenty-first aspect, this application provides a communication method. The method includes: sending a paging message; and sending first information, where the first information is related to paging.

For example, the method according to the twenty-first aspect may be applied to a network device. For example, the method is performed by a network device or an apparatus (for example, a chip) built in the network device.

In some possible implementations, when the terminal device cannot be paged (the terminal device is in a paging unreachable state), the network device may send the first information. For example, the first information may indicate that the terminal device is in the paging unreachable state, or indicate that the terminal device cannot be paged.

In some other possible implementations, alternatively, when time consumed for paging the terminal device is long, the network device may send the first information. The first information may be related to paging. For example, the first information may indicate that quality of paging the terminal device is poor or the time consumed for paging is long.

Optionally, the first information may directly indicate that the terminal device is paging unreachable or has poor paging quality, or may indirectly indicate that the terminal device is paging unreachable or has poor paging quality.

In a possible design, signal quality of a signal (for example, the first signal) that carries the first information is designed to be strong enough. For example, when a conventional paging message cannot be received by the UE, the signal that carries the first information can still be normally received by the UE. For example, in a same channel condition, the signal quality of the signal that carries the first information is better than that of another signal (for example, a paging message).

Optionally, the signal that carries the first information may be an enhanced existing signal, and the first information may be an existing field or a newly added field in the existing signal. Alternatively, the signal that carries the first information may be a newly designed signal on an existing channel, and the first information may be a field in the newly designed signal. Alternatively, a new channel or a new hardware architecture may be designed, to send the signal that carries the first information. This is not limited in this application.

In the communication method, the first information may be used to remind the terminal device to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

According to a twenty-second aspect, this application provides a communication apparatus. The apparatus has a function of implementing the method according to the first aspect. The function may be implemented by hardware, or may be implemented by executing corresponding software by hardware. The hardware or the software includes one or more units or modules corresponding to the function in the method in the first aspect, for example, a first sending unit and a second sending unit.

The first sending unit is configured to send a paging message. The second sending unit is configured to send first information, where the first information is related to paging.

According to a twenty-third aspect, this application further provides a communication apparatus, including a processor, configured to execute computer instructions stored in a memory. When the computer instructions are executed, the apparatus is enabled to perform the method according to any one of the twenty-first aspect or the possible designs of the twenty-first aspect.

According to a twenty-fourth aspect, this application further provides a communication apparatus, including a processor and an interface circuit. The processor is configured to communicate with another apparatus through the interface circuit, and perform the method according to any one of the twenty-first aspect or the possible designs of the twenty-first aspect.

For example, in the twenty-third aspect and the twenty-fourth aspect, the processor is configured to perform the method according to any one of the twenty-first aspect or the possible designs of the twenty-first aspect.

The communication apparatus according to the twenty-second aspect to the twenty-fourth aspect may be a network device, or may be an apparatus (for example, a chip) built in the network device.

According to a twenty-fifth aspect, this application further provides a computer-readable storage medium, including computer software instructions. When the computer software instructions are executed, the method according to any one of the twenty-first aspect or the possible designs of the twenty-first aspect is implemented.

For example, when the computer software instructions are executed by a network device or an apparatus (for example, a chip) built in the network device, the network device is enabled to implement the method according to any one of the twenty-first aspect or the possible designs of the twenty-first aspect.

It may be understood that, for beneficial effects that can be achieved in the twenty-second aspect to the twenty-fifth aspect, refer to beneficial effects in any one of the twenty-first aspect and the possible designs thereof. Details are not described herein again.

According to a twenty-sixth aspect, this application further provides a communication apparatus, including a transceiver unit and a processing unit. The transceiver unit may be configured to send and receive information, or configured to communicate with another network element. The processing unit may be configured to process data. The apparatus may implement, via the transceiver unit and the processing unit, the method according to any one of the first aspect and the possible designs thereof, the method according to any one of the sixth aspect and the possible designs thereof, the method according to any one of the eleventh aspect and the possible designs thereof, the method according to any one of the sixteenth aspect and the possible designs thereof, or the method according to any one of the twenty-first aspect and the possible designs thereof.

According to a twenty-seventh aspect, this application further provides a computer program product. When the computer program product is executed, the method according to any one of the first aspect and the possible designs thereof, the method according to any one of the sixth aspect and the possible designs thereof, the method according to any one of the eleventh aspect and the possible designs thereof, the method according to any one of the sixteenth aspect and the possible designs thereof, or the method according to any one of the twenty-first aspect and the possible designs thereof.

According to a twenty-eighth aspect, this application further provides a chip system, where the chip system includes one or more interface circuits and one or more processors. The interface circuits and the processors are interconnected through a line. The processor receives computer instructions from a memory of an electronic device through the interface circuit, and executes the computer instructions, to implement the method according to any one of the first aspect and the possible designs thereof, the method according to any one of the sixth aspect and the possible designs thereof, the method according to any one of the eleventh aspect and the possible designs thereof, the method according to any one of the sixteenth aspect and the possible designs thereof, or the method according to any one of the twenty-first aspect and the possible designs thereof.

According to a twenty-ninth aspect, this application further provides a communication system, including a network device and a terminal device. The network device performs the method according to any one of the twenty-first aspect and the possible designs thereof, and the terminal device performs the method according to any one of the first aspect and the possible designs thereof, the method according to any one of the sixth aspect and the possible designs thereof, the method according to any one of the eleventh aspect and the possible designs thereof, or the method according to any one of the sixteenth aspect and the possible designs thereof.

According to a thirtieth aspect, this application further provides a network element or a network device, which may be configured to implement the method according to any one of the twenty-first aspect and the possible designs thereof.

According to a thirty-first aspect, this application further provides a terminal device, which may be configured to implement the method according to any one of the first aspect and the possible designs thereof, the method according to any one of the sixth aspect and the possible designs thereof, the method according to any one of the eleventh aspect and the possible designs thereof, or the method according to any one of the sixteenth aspect and the possible designs thereof.

It may be understood that, for beneficial effects that can be achieved in the twenty-sixth aspect to the thirty-first aspect, refer to beneficial effects in the first aspect, the sixth aspect, the eleventh aspect, the sixteenth aspect, the twenty-first aspect, and the like. Details are not described herein again.

### BRIEF DESCRIPTION OF DRAWINGS

FIG. 1 is a composition diagram of a communication system according to an embodiment of this application;
FIG. 2 is a composition diagram of a terminal device according to an embodiment of this application;
FIG. 3 is a schematic flowchart of a communication method according to an embodiment of this application;
FIG. 4 is another schematic flowchart of a communication method according to an embodiment of this application;
FIG. 5 is a diagram of a principle of neighboring cell signal quality measurement according to an embodiment of this application;
FIG. 6 is a diagram of a monitoring threshold and a principle according to an embodiment of this application;
FIG. 7 is still another schematic flowchart of a communication method according to an embodiment of this application;
FIG. 8 is a diagram of a principle of cell reselection evaluation according to an embodiment of this application;
FIG. 9 is another diagram of a monitoring threshold and a principle according to an embodiment of this application;
FIG. 10 is still another schematic flowchart of a communication method according to an embodiment of this application;
FIG. 11 is still another diagram of a monitoring threshold and a principle according to an embodiment of this application;
FIG. 12 is still another schematic flowchart of a communication method according to an embodiment of this application;
FIG. 13 is a diagram of a structure of a communication apparatus according to an embodiment of this application;
FIG. 14 is another diagram of a structure of a communication apparatus according to an embodiment of this application;
FIG. 15 is still another diagram of a structure of a communication apparatus according to an embodiment of this application;
FIG. 16 is still another diagram of a structure of a communication apparatus according to an embodiment of this application;
FIG. 17 is still another diagram of a structure of a communication apparatus according to an embodiment of this application; and
FIG. 18 is still another diagram of a structure of a communication apparatus according to an embodiment of this application.

### DESCRIPTION OF EMBODIMENTS

A paging message (paging message) is a message for sending a call or other important information to a user equipment (user equipment, UE) in a communication network. When needing to communicate with a UE, the network side may send a paging message to the UE, so that the UE can make a corresponding response based on the paging message, for example, establishing a call connection. A process in which the network side sends the paging message to the UE may be referred to as paging.

For example, in 5G new radio (new radio, NR), the UE may have three radio resource control (radio resource control, RRC) states: an RRC connected/active (active) state, an RRC idle (idle) state, and an RRC inactive (inactive) state. The RRC idle state and the RRC inactive state may be collectively referred to as an RRC non-connected state. The RRC connected state may be described as RRC_CONNECTED or RRC_ACTIVE, the RRC idle state may be described as RRC_IDLE, and the RRC inactive state may be described as RRC_INACTIVE. The RRC inactive state may also be referred to as an RRC inactive mode. A network may use paging to notify a UE in an RRC idle state or RRC inactive state to receive a paging message, or the network may use paging to send a short message (short message) to a UE in an RRC idle state, RRC inactive state, or RRC connected state to indicate system information (system information, SI) update, or earthquake and tsunami warning/commercial mobile alert (earthquake and tsunami warning system / commercial mobile alert service, ETWS/CMAS).

A UE in an RRC idle or RRC inactive state monitors its own paging occasion (paging occasion, PO) in each paging cycle (paging cycle) to determine whether the network performs paging. The UE may calculate a PO position of the UE according to a calculation formula specified in a protocol and based on UE identification information and a paging-related parameter of the UE. PO positions calculated by different UEs may be the same. In other words, a plurality of UEs may monitor a same PO.

When the network side sends the paging message to the UE, the paging message may be unreachable. For example, the UE cannot receive the paging message.

For example, when the UE is in an environment with a low signal-to-noise ratio (signal-to-noise ratio, SNR) or a non-line-of-sight (non-line of sight, NLOS), for example, the UE is placed in a backpack pocket or the UE is obstructed by tree shade, the UE may be unable to receive a paging message due to a penetration loss, that is, the UE is in a state in which the paging message is unreachable.

In this background, this application provides a communication method, to remind a UE to improve a channel condition or a reception status, and improve communication performance of the UE, for example, improve performance of receiving a paging message by the UE.

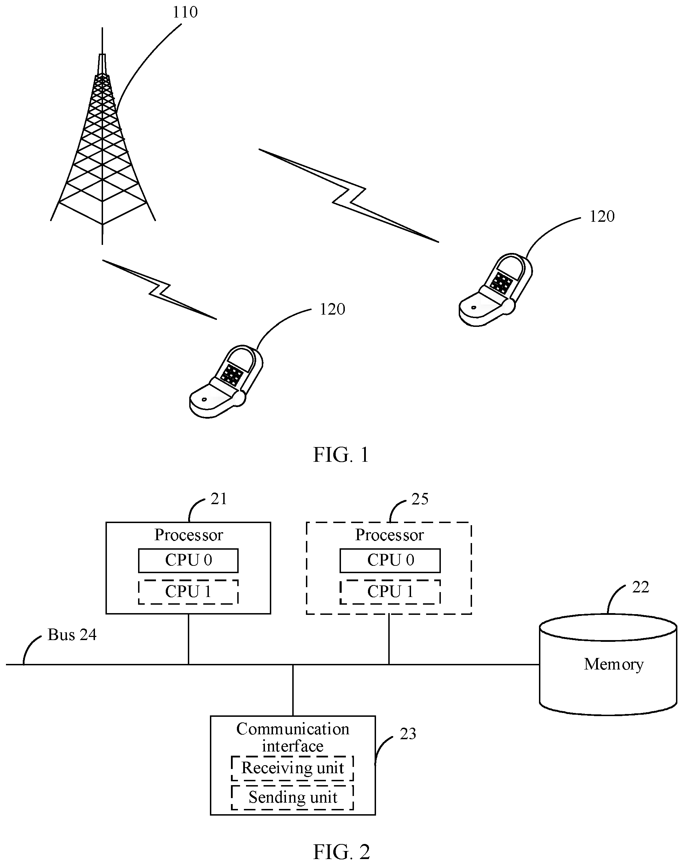

For example, FIG. 1 is a composition diagram of a communication system according to an embodiment of this application. The communication method provided in embodiments of this application may be applied to the communication system shown in FIG. 1. As shown in FIG. 1, the communication system may include a network device 110 and a terminal device 120.

The network device 110 may be referred to as an access network device, a radio access network (radio access network, RAN) device, or a next-generation radio access network device. For example, the network device 110 may be a base station, an access point, or a device that communicates with a wireless terminal over an air interface in an access network by using one or more sectors. Different access network devices may communicate with each other through an Xn interface.

Optionally, in this embodiment of this application, the network device 110 may include a macro base station, a micro base station (also referred to as a small cell), or the like in various forms. For example, the network device 110 may include: a base station in wideband code division multiple access (wideband code division multiple Access, WCDMA) or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), a wireless fidelity (wireless fidelity, Wi-Fi) access point (access point, AP), a wireless relay node, a wireless backhaul node, a transmission point (transmission point, TP), or a transmission and reception point (transmission and reception point, TRP).

In some deployments, the gNB may include a central unit (central unit, CU) and the distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna.

The terminal device 120 may also be referred to as a user equipment (user equipment, UE). In some examples, the terminal device 120 may be an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, a target terminal, or the like. This is not limited herein.

In this embodiment of this application, the terminal device 120 may be a wireless terminal, or may be a wired terminal. The wireless terminal may be a device that provides a user with voice and/or other service data connectivity, a handheld device with a wireless connection function, or another processing device connected to a wireless modem. For example, the terminal device 120 may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in autonomous driving (autonomous driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal in a 5G mobile communication system, a terminal in a future evolved network, or the like. A specific product form of the terminal device 120 is not limited in this application.

Optionally, the communication system shown in FIG. 1 may be a WCDMA system, an LTE system, a long term evolution-advanced LTE-A (LTE advanced) system, an LTE frequency division duplex (frequency division duplex, FDD) system, a universal mobile telecommunications system (universal mobile telecommunications system, UMTS), a 5G NR system, another wireless communication system to which an OFDM technology is applied, or the like, or may be a future 6th generation mobile communication technology (the 6th generation mobile communication technology, 6G) network communication system, or another future communication system. A specific type of the communication system is not limited in this application.

In addition, the communication system is merely intended to describe the technical solutions in embodiments of this application more clearly, and does not constitute a limitation on the technical solutions provided in embodiments of this application. For example, the communication system may further include another device, for example, a network control device or a core network device or network element such as an access and mobility management function (access and mobility management function, AMF) network element or a user plane function (user plane function, UPF) network element. The network control device may be an operation, administration, and maintenance (operation administration and maintenance, OAM) system, which is also referred to as a network management system.

In some possible embodiments, the communication system shown in FIG. 1 may be implemented based on a non-terrestrial network (non-terrestrial network, NTN). The NTN is a generic term for networks involving flying objects, including satellite communication networks, high altitude platform stations (high altitude platform station, HAPS), and air-to-ground networks. Key value scenarios mainly include areas with poor land coverage, maritime communication, public safety needs, direct communication between aircraft, railways, and the like, aiming to provide mobile broadband services for users.

The HAPS is carried on an airborne platform, and mainly includes an airplane, a balloon, and an airship. The high altitude platform station serves as a mobile communication base station and provides a mobile service by using a same frequency band of terrestrial mobile networks. In this example, the network device 110 may include a high altitude platform station.

The satellite communication network relies on a satellite-borne platform, and mainly includes a low earth orbit (low earth orbit, LEO) satellite, a medium earth orbit (medium earth orbit, MEO) satellite, and a geostationary earth orbit (geostationary earth orbit, GEO) satellite. Based on a relationship between a satellite and a base station, satellite communication networks can be classified into a transparent payload (transparent payload) architecture and a regenerative payload (regenerative payload) architecture.

In the transparent payload (transparent payload) architecture, a satellite is only responsible for signal forwarding but does not have a data processing capability. A base station (gNB) is located on the ground, and the satellite is connected to the base station through a gateway (gateway) on the ground. Signal transmission is performed between a UE and the base station through the satellite, and a data processing function is still in the base station. A link between the satellite and the UE is referred to as a service link (service link), and a link between the satellite and the base station is referred to as a feeder link (feeder link).

In the regenerative payload (regenerative payload) architecture, a satellite has all or some functions of a base station, that is, the satellite may perform data processing. Specifically, there are two forms: The entire base station is located on the satellite and a base station DU is located on the satellite. A link between the satellite/base station and a UE is referred to as a service link (service link).

Based on movement of NTN cells in a ground coverage area, the NTN cells may be classified into three types: an earth-fixed (earth-fixed) NTN cell, a quasi-earth-fixed (quasi-earth-fixed) NTN cell, and an earth-moving (earth-moving) NTN cell. A coverage area of the earth-fixed NTN cell is a fixed area on the ground, that is, continuous fixed-point coverage. An NTN cell provided by the GEO satellite is of this type. A coverage area of the quasi-earth-fixed NTN cell is a fixed area on the ground for a period of time, and after the period of time, the coverage area is changed to another area on the ground, that is, fixed-point coverage within a period of time. The LEO satellite and MEO satellite can provide this type of NTN cell. A coverage area of the earth-moving NTN cell slides on the ground. The LEO satellite and MEO satellite can provide this type of NTN cell.

For example, FIG. 2 is a composition diagram of a terminal device according to an embodiment of this application. The terminal device may be the terminal device 120 in the foregoing communication system. As shown in FIG. 2, the terminal device may include at least one processor 21, a memory 22, a communication interface 23, and a bus 24.

The processor 21 is a control center of the terminal device, and may be one processor, or may be a collective term for a plurality of processing elements. For example, the processor 21 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 21 may run or execute a software program stored in the memory 22 and invoke data stored in the memory 22, to perform various functions of the terminal device. For example, steps performed by the terminal device in the communication method provided in embodiments of this application may be performed.

During specific implementation, in an embodiment, the processor 21 may include one or more CPUs, for example, a CPU 0 and a CPU 1 shown in FIG. 2.

During specific implementation, in an embodiment, the terminal device may include a plurality of processors, for example, the processor 21 and a processor 25 shown in FIG. 2. Each of the processors may be a single-core processor (single-CPU), or may be a multi-core processor (multi-CPU). The processor herein may be one or more devices, circuits, and/or processing cores configured to process data (for example, computer program instructions).

The memory 22 may store a software program of the method steps performed by the terminal device, and the processor 21 controls execution. The memory 22 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, optical disc storage (including a compact disc, a laser disc, an optical disc, a digital versatile disc, a Blu-ray disc, or the like), magnetic disk storage medium or another magnetic storage device, or any other medium that can be used for carrying or storing expected program code in a form of an instruction structure or a data structure and that can be accessed by a computer, but is not limited thereto.

The memory 22 may exist independently and be connected to the processor 21 through the bus 24. Alternatively, the memory 22 may be integrated with the processor 21. This is not limited herein.

The communication interface 23 is configured to communicate with another device or communication network through any transceiver-type apparatus. The communication interface 23 may be an Ethernet interface, a radio access network (radio access network, RAN) interface, a wireless local area network (wireless local area network, WLAN) interface, or the like. The communication interface 23 may include a receiving unit for implementing a receiving function and a sending unit for implementing a sending function.

The bus 24 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 2, but this does not mean that there is only one bus or only one type of bus.

Although the bus 24 is used in FIG. 2, it may be understood that the bus may alternatively be replaced with a connection relationship in another form, and is not limited to the bus itself.

Optionally, in embodiments of this application, for composition of the network device (for example, the base station), refer to FIG. 2. Alternatively, the network device may include more or fewer components than those shown in FIG. 2. This is not limited herein.

The following describes the communication method provided in embodiments of this application by using examples. Processing described below as being performed by a single execution body may alternatively be performed by a plurality of execution bodies. These execution bodies may be logically and/or physically separated. It should be further understood that with evolution of network architectures and emergence of new service scenarios, the technical solutions provided in embodiments of this application are also applicable to similar technical problems.

For example, in the following descriptions, steps performed by a network device (for example, a base station) may be specifically performed by the network device or an apparatus (for example, a chip) built in the network device. Steps performed by a terminal device (for example, a UE) may be specifically performed by the terminal device or an apparatus (for example, a chip) built in the terminal device.

It should be noted that, in the descriptions of embodiments of this application, words such as "first" and "second" are merely intended for distinguishing, and are not used to specially limit a feature. In other words, "first" or "second" may include more content, but is not limited to a specific concept. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more, and "a plurality of" means two or more. In embodiments of this application, only fewer steps than all steps may be performed, or more steps may be performed. This is not limited. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and A, B, and C all exist. A, B, and C may be singular or plural.

Unless otherwise defined, all technical and scientific terms used in this specification have same meanings as those usually understood by a person skilled in the art of this application. The terms used in this specification of this application are merely for the purpose of describing specific embodiments, and are not intended to limit this application.

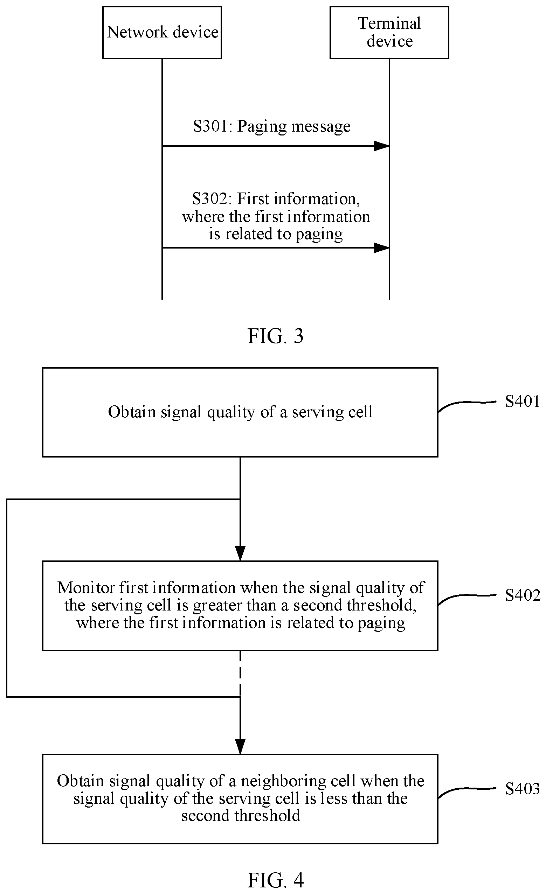

FIG. 3 is a schematic flowchart of a communication method according to an embodiment of this application. As shown in FIG. 3, the communication method may include S301 and S302.

S301: A network device sends a paging message to a terminal device.

For example, as described in the foregoing embodiment, the network device may send the paging message to the UE, so that the UE can make a corresponding response based on the paging message, for example, establishing a call connection. For example, the network device may notify, through paging, a UE in an RRC idle state or RRC inactive state to receive a paging message.

S302: The network device sends first information to the terminal device, where the first information is related to paging.

For example, when the terminal device is in a state in which a channel condition is good, the network device may normally page the terminal device. When the terminal device is in a state in which a channel condition is poor, for example, in an NTN scenario, the terminal device is in an environment with a low signal-to-noise ratio or a non-line-of-sight, for example, the terminal device is placed in a backpack pocket or the terminal device is obstructed by tree shade, the terminal device may be unable to receive a paging message due to a penetration loss, that is, the terminal device is in a state in which paging is unreachable.

In some possible implementations, when the terminal device cannot be paged (the terminal device is in a paging unreachable state), the network device may perform S302 to send the first information to the terminal device. The first information may be related to paging. For example, the first information may indicate that the terminal device is in the paging unreachable state, or indicate that the terminal device cannot be paged. In other words, the network device may send the first information to the terminal device when determining that the terminal device is in the paging unreachable state.

Optionally, the network device or a network side may determine, by comparing whether a quantity of paging attempts exceeds a maximum value of a quantity of paging times configured by the network side, whether the terminal device is in the paging unreachable state. For example, when the quantity of paging attempts exceeds the maximum value of the quantity of paging times configured by the network side, it may be determined that the terminal device is in the paging unreachable state. Alternatively, the network device may determine, in another manner, whether the terminal device is in the paging unreachable state. For example, when no response from the terminal device to the paging message is received within preset duration, the network device determines that the terminal device is in the paging unreachable state. A manner of determining whether the terminal device is in the paging unreachable state is not limited herein.

In some other possible implementations, alternatively, when time consumed for paging the terminal device is long, the network device may perform S302 to send the first information to the terminal device. The first information may be related to paging. For example, the first information may indicate that quality of paging the terminal device is poor or the time consumed for paging is long. In other words, the network device may send the first information to the terminal device when determining that time during which the terminal device responds to the paging or time consumed for paging the terminal device is greater than specific duration. An occasion at which the network device sends the first information to the terminal device is not limited in this application either.

Correspondingly, the terminal device may receive the first information.

After receiving the first information, the terminal device may improve a channel condition based on an indication of the first information, to normally receive the paging message, thereby improving communication performance of the UE, for example, improving performance of receiving the paging message by the UE.

For example, the terminal device may receive the first information, and adjust the channel condition of the terminal device after receiving the first information. Optionally, a manner of adjusting the channel condition of the terminal device may include: The terminal device actively adjusts hardware and/or software of the terminal device to adjust the channel condition, and/or a user adjusts a posture and/or an external environment of the terminal device to adjust the channel condition.

For example, the terminal device may adjust an antenna to improve the channel condition. Alternatively, the terminal device may send prompt information, and prompt, based on the prompt information, a user that the terminal device is paging unreachable, has poor paging quality, or the like, to prompt the user to adjust a posture of the terminal device, thereby improving the channel condition. For example, the user may take the terminal device out of a backpack pocket, or may move the terminal device to a location (for example, an open area) that is not obstructed by tree shade.

The prompt information may include one or more of a sound prompt, a light prompt, a text prompt, and the like, which is not limited herein.

Optionally, the first information may be carried in a first signal. The first signal may also be referred to as a pre-prompt signal, a pre-paging signal, a pre-notification (pre-notification), a pre-alert signal, or the like. A name of the signal carrying the first information is not limited herein.

Optionally, the first information may directly indicate that the terminal device is paging unreachable or has poor paging quality, or may indirectly indicate that the terminal device is paging unreachable or has poor paging quality.

In a possible design, signal quality of a signal (for example, the first signal) that carries the first information is designed to be strong enough. For example, when a conventional paging message cannot be received by the UE, the signal that carries the first information can still be normally received by the UE. For example, in a same channel condition, the signal quality of the signal that carries the first information is better than that of another signal (for example, a paging message).

Optionally, in this embodiment of this application, the signal that carries the first information may be an enhanced existing signal, and the first information may be an existing field or a newly added field in the existing signal. Alternatively, the signal that carries the first information may be a newly designed signal on an existing channel, and the first information may be a field in the newly designed signal. Alternatively, a new channel or a new hardware architecture may be designed, to send the signal that carries the first information. This is not limited in this application.

Optionally, in this embodiment of this application, the terminal device may monitor the first information, to receive the first information. For example, the terminal device may start a monitoring procedure to monitor the first information. The terminal device does not receive the first information or does not respond to the first information if the terminal device does not start the monitoring procedure or after the terminal device ends the monitoring procedure. That the first information is not responded may be: ignoring the first information, for example, not adjusting the channel condition of the terminal device.

The following describes an example of an occasion at which the terminal device monitors the first information (or an occasion at which the monitoring procedure is started) in this embodiment of this application.

In some embodiments, the terminal device may obtain/measure signal quality of a serving cell; determine, based on the signal quality of the serving cell, whether to monitor the first information; and when not monitoring the first information, measure signal quality of a neighboring cell, or obtain signal quality of a neighboring cell.

For example, FIG. 4 is another schematic flowchart of a communication method according to an embodiment of this application. As shown in FIG. 4, the communication method may include S401 to S403. S401 to S403 may be performed by a terminal device or an apparatus (for example, a chip) built in the terminal device.

S401: Obtain the signal quality of a serving cell.

For example, mobility management is an important operation in wireless mobile communication, and means that when signal quality of a serving cell of a terminal device deteriorates to a specific level, the serving cell of the terminal device is changed through switching (behavior in a connected state) or cell selection/reselection (behavior in a non-connected state), for example, a neighboring cell with better communication quality is selected as a new serving cell of the terminal device, to ensure that a communication link between a network and the terminal device is not interrupted due to movement of the terminal device.

Radio resource management (radio resource management, RRM) measurement (measurement) means that a terminal device measures communication quality of a serving cell and/or a neighboring cell (a non-serving cell) of the terminal device. The switching and the cell selection/reselection in the foregoing mobility management operation need to be performed based on a signal quality measurement result of the serving cell and a signal quality measurement result of the neighboring cell.

For example, after the terminal device successfully camps on a cell, the cell may be referred to as a serving cell or a current serving cell. The terminal device obtains signal quality of the serving cell and a neighboring cell (a cell adjacent to the serving cell), for example, may periodically measure the signal quality of the serving cell and the neighboring cell (the cell adjacent to the serving cell). If the signal quality of the serving cell is poorer but the signal quality of the neighboring cell is better, the terminal device may actively reselect a cell with a higher priority or better signal quality as a serving cell. This process is referred to as cell reselection.

For example, when the terminal device is in an RRC idle state (RRC_IDLE) or an RRC inactive state (RRC_INACTIVE), a network device (for example, a base station) may broadcast a measurement configuration. The terminal device may perform measurement based on the broadcast measurement configuration, and perform an operation such as cell selection/reselection based on a measurement result, without reporting the measurement result to the network. A measurement process in an idle/inactive state mainly includes the following two steps: 1. measurement configuration; and 2. measurement execution.

In the measurement configuration step, the network device (for example, a base station) may provide the measurement configuration (measurement configuration) to the terminal device in a broadcast manner. For example, the measurement configuration is delivered by using system information (system information, SI). For example, the measurement configuration may be sent in a system information block 2 (system information block 2, SIB2), a SIB3, a SIB4, a SIB5, or the like in the system information. The measurement configuration may include frequency information, a measurement time window configuration, threshold and offset parameters, and the like.

The frequency information is related information of a frequency used by the terminal device to perform cell reselection, and may include a center frequency (center frequency), a subcarrier spacing (subcarrier spacing, SCS), information about a band (band) to which the frequency belongs, a cell list on the frequency, information about a to-be-measured reference signal set, and the like.

The measurement time window configuration is measurement time configuration information used by the terminal device to measure the frequency. In other words, the terminal device measures the frequency within a time window indicated by the configuration. The configuration may be specific to each frequency, that is, different frequencies may correspond to different measurement time window configurations.

The threshold and offset parameters may include thresholds and offsets used by the terminal device to perform operations such as measurement result derivation and cell reselection criterion evaluation.

In the measurement execution step, the terminal device may perform measurement based on the measurement configuration broadcast by the network device.

Neighboring cell measurement is classified into intra-frequency measurement (intra-frequency measurement), inter-frequency measurement (inter-frequency measurement), and inter-RAT measurement (inter-RAT measurement) based on a relationship between a measurement frequency and a serving cell frequency. The intra-frequency measurement and the inter-frequency measurement are intra-RAT measurement (intra-RAT measurement). In other words, a neighboring cell and a serving cell use a same radio access technology (radio access technology, RAT), for example, both the neighboring cell and the serving cell use a 5G NR technology. The inter-RAT measurement means that a neighboring cell and a serving cell use different RATs. For example, the serving cell uses a 5G NR technology, and the neighboring cell uses an LTE technology.

For example, a reference signal of the measurement frequency may include a synchronization signal block (synchronization signal block, SSB) and a channel state information reference signal (channel state information-reference signal, CSI-RS). The SSB may also be referred to as a synchronization signal/physical broadcast signal block (synchronization signal/physical broadcast channel block, SS/PBCH block).

Neighboring cell measurement may alternatively be classified into SSB-based measurement and CSI-RS-based measurement based on a reference signal type of a frequency. Measurement in a connected state may be based on an SSB, or may be based on a CSI-RS. Measurement in an idle/inactive state may be based on an SSB.

Based on the foregoing two classification manners of the measurement types, neighboring cell measurement may be specifically classified into SSB-based intra-frequency measurement, SSB-based inter-frequency measurement, CSI-RS-based intra-frequency measurement, CSI-RS-based inter-frequency measurement, inter-RAT measurement, and the like.

It may be understood that if an SSB center frequency of a specific measurement frequency is the same as an SSB center frequency of the serving cell, and SSB subcarrier spacings SCSs of the two are also the same, such frequency measurement is intra-frequency measurement. If either the SSB center frequencies or the SSB subcarrier spacings of the two are different, such frequency measurement is an inter-frequency measurement.

The terminal device measures the signal quality of the serving cell or the signal quality of the neighboring cell, to obtain three types of measurement results successively: reference signal received power (reference signal received power, RSRP), reference signal received quality (reference signal received quality, RSRQ), and a signal-to-noise and interference ratio (signal-to-noise and interference ratio, SINR). Each type of measurement result may be based on an SSB or a CSI-RS.

The RSRP is defined as a linear average value of power of resource elements (resource element, RE) carrying reference signals within considered measurement bandwidth.

The RSRQ is defined as a ratio. RSRQ = (N*RSRP)/NR Carrier RSSI. The RSSI is a received signal strength indicator (received signal strength indicator, RSSI). The NR carrier RSSI is a linear average value of total received power observed by the terminal device on N resource blocks (resource block, RB). Sources include co-channel serving and non-serving cells, adjacent channel interference, thermal noise, and the like. N is a quantity of resource blocks RBs in RSSI measurement of an NR carrier. The RSRP may be SS-RSRP or CSI-RSRP.

The SINR is defined as a ratio of the linear average value, namely, the RSRP, of the power of the resource elements REs carrying the reference signals within the considered measurement bandwidth to a linear average value of power of noise (Noise) and interference (Interference) on these REs, that is, SINR = RSRP/(Noise + Interference).

In this embodiment of this application, S401 is a process in which the terminal device measures the signal quality of the serving cell. Whether the terminal device measures the signal quality of the neighboring cell may be determined based on a criterion about the signal quality of the serving cell in S402 and S403.

It should be understood that the terminal device in this embodiment of this application may be in an RRC idle state or an RRC inactive state. In addition, the terminal device may normally receive an SSB, and use the SSB for synchronization and measurement.

S402: Monitor first information when the signal quality of the serving cell is greater than a second threshold, where the first information is related to paging.

S403: Obtain the signal quality of the neighboring cell when the signal quality of the serving cell is less than the second threshold.

The second threshold may be understood or defined as a threshold for stopping monitoring the first information. In this embodiment, after obtaining the signal quality of the serving cell through measurement, the terminal device may determine, based on the signal quality of the serving cell, whether to enable monitoring the first information or whether to measure the signal quality of the neighboring cell.

In a possible design, that the signal quality of the serving cell is greater than the second threshold may include: The signal quality of the serving cell is greater than the second threshold at a current moment. That the signal quality of the serving cell is less than the second threshold may include: The signal quality of the serving cell is less than the second threshold at the current moment. For example, the current moment may be a moment at which the signal quality of the serving cell is obtained through measurement.

In another possible design, that the signal quality of the serving cell is greater than the second threshold may include: The signal quality of the serving cell is greater than the second threshold in a period of time before or after a current moment.

That the signal quality of the serving cell is less than the second threshold may include: The signal quality of the serving cell is less than the second threshold in the period of time before or after the current moment.

A length of the period of time is not limited. For example, that the signal quality of the serving cell is greater than the second threshold means that the signal quality of the serving cell is greater than the second threshold in the period of time before the current moment. The current moment may be a moment after the foregoing period of time starting from a moment at which the signal quality of the serving cell is obtained through measurement. Alternatively, for example, that the signal quality of the serving cell is greater than the second threshold means that the signal quality of the serving cell is greater than the second threshold in the period of time after the current moment. The current moment may be a moment at which the signal quality of the serving cell is obtained through measurement.

In some other possible designs, that the signal quality of the serving cell is greater than the second threshold may include: The signal quality of the serving cell is greater than the second threshold (or an average value is greater than the second threshold) at a plurality of consecutive or non-consecutive time points. That the signal quality of the serving cell is less than the second threshold may include: The signal quality of the serving cell is less than the second threshold (or the average value is less than the second threshold) at a plurality of consecutive or non-consecutive time points. A quantity of time points is not limited.

A manner of determining whether the signal quality of the serving cell is greater than the second threshold or less than the second threshold is not limited in this application.

Optionally, when the signal quality of the serving cell is equal to the second threshold, S402 may be performed, or S403 may be performed. This is not limited herein.

For example, after the terminal device measures the signal quality of the serving cell, the signal quality of the serving cell may be greater than the second threshold, or may be less than or equal to the second threshold. When the signal quality of the serving cell is greater than the second threshold, the terminal device may not measure the signal quality of the neighboring cell, but monitor the first information. The first information is related to paging. For the first information, a process in which the terminal device monitors the first information, a manner in which the terminal device responds to the monitored first information, and the like, refer to the foregoing embodiments. Details are not described again. When the signal quality of the serving cell is less than or equal to the second threshold, the terminal device may measure the signal quality of the neighboring cell, and does not monitor the first information.

It should be understood that in this embodiment of this application, S402 and S403 may have an "and/or" relationship. For example, after S402 is performed, the signal quality of the serving cell may change, for example, decrease to be less than the second threshold. In this case, the terminal device may perform S403. Monitoring the first information is stopped when S403 is performed.

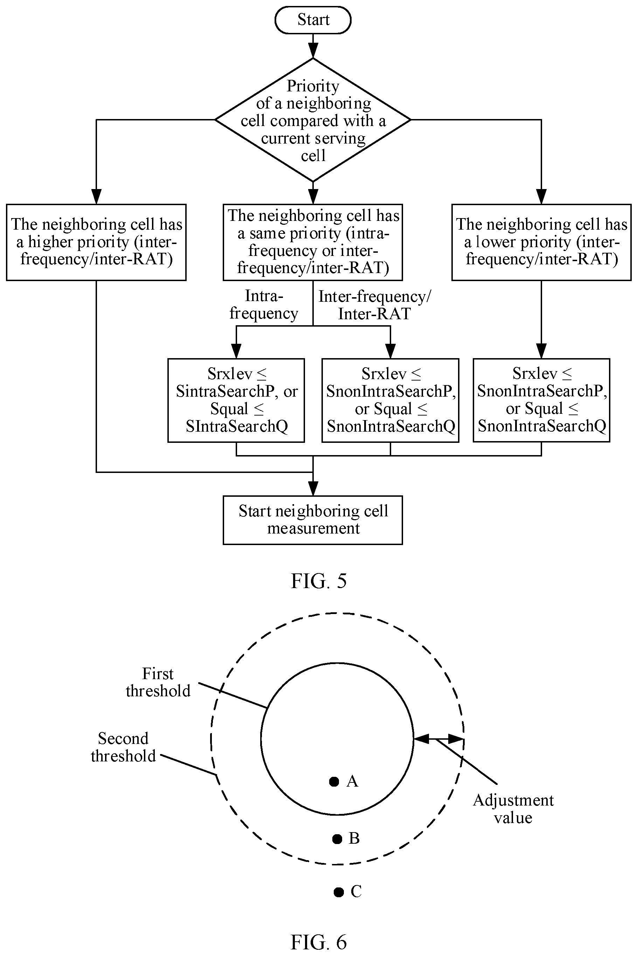

For example, when the signal quality of the neighboring cell is measured, it may be determined, based on the signal quality of the serving cell and a priority (or referred to as a reselection priority) of the neighboring cell, whether to start neighboring cell measurement. For example, FIG. 5 is a diagram of a principle of neighboring cell signal quality measurement according to an embodiment of this application. As shown in FIG. 5, the terminal device may first compare priorities of the neighboring cell and the current serving cell, and may classify the neighboring cell into the following three cases based on the priorities: (1) The neighboring cell has a higher priority, that is, the priority of the neighboring cell is higher than the priority of the serving cell. (2) The neighboring cell has an equal priority, that is, the priority of the neighboring cell is the same as that of the serving cell. (3) The neighboring cell has a lower priority, that is, the priority of the neighboring cell is lower than that of the serving cell. Cells on a same frequency and of a same RAT have an equal priority, and cells on different frequencies may have an equal priority or different priorities. For a case in which the neighboring cell has a higher priority, neighboring cell measurement may be inter-frequency measurement or inter-RAT measurement. For a case in which the neighboring cell has an equal priority, neighboring cell measurement may be intra-frequency measurement, inter-frequency measurement, or inter-RAT measurement. For a case in which the neighboring cell has a lower priority, neighboring cell measurement may be inter-frequency measurement or inter-RAT measurement.

For a case in which the neighboring cell has a higher priority, the terminal device may perform inter-frequency measurement or inter-RAT measurement with a higher priority. For example, when the neighboring cell and the serving cell belong to a same communication system but have different frequencies, or the neighboring cell and the serving cell belong to different communication systems, and the priority of the neighboring cell is higher than the priority of the serving cell, the terminal device may start to measure the signal quality of the neighboring cell.

For a case in which the neighboring cell has an equal priority, when the neighboring cell and the serving cell belong to a same communication system and have a same frequency (that is, intra-frequency), the terminal device may start to measure the signal quality of the neighboring cell when the signal quality of the serving cell is less than or equal to a first measurement threshold. The first measurement threshold may also be referred to as an intra-frequency measurement initiation threshold.

In an implementation, the signal quality of the serving cell may be represented as "Srxlev", where Srxlev may represent a received signal level (received signal level). Srxlev is an indicator of a received signal strength level, usually in dBm. Srxlev is for evaluating strength of a received signal, that is, received power of a radio signal. The first measurement threshold may be defined as "S_{intraSearchP}". For example, if the neighboring cell has an equal priority, when the neighboring cell and the serving cell belong to a same communication system and have a same frequency (that is, intra-frequency), if the serving cell fulfills Srxlev > S_{intraSearchP}, intra-frequency measurement is not performed; or when the serving cell fulfills Srxlev ≤ S_{intraSearchP}, the terminal device performs intra-frequency measurement (that is, starts neighboring cell measurement).

In another implementation, the signal quality of the serving cell may be represented as "Squal", where Squal may represent received signal quality (received signal quality). Squal is an indicator of the received signal quality, and is usually expressed in a form of a signal-to-noise ratio or a bit error rate. Squal is for evaluating quality of a received signal, that is, reliability and definition of the signal. This parameter mainly focuses on signal quality, including a signal-to-noise ratio, a bit error rate, and the like. The first measurement threshold may be defined as "S_{IntraSearchQ}". For example, if the neighboring cell has an equal priority, when the neighboring cell and the serving cell belong to a same communication system and have a same frequency (that is, intra-frequency), if the serving cell fulfills Squal > S_{IntraSearchQ}, intra-frequency measurement is not performed; or when the serving cell fulfills Squal ≤ S_{IntraSearchQ}, the terminal device performs intra-frequency measurement (that is, starts neighboring cell measurement).

It should be understood that Srxlev and Squal are signal quality of the current serving cell, and may be obtained by the terminal device through measurement and calculation based on an S-criterion calculation formula, and are not delivered by a network.

If the neighboring cell has an equal priority, when the neighboring cell and the serving cell belong to a same communication system and have different frequencies (that is, inter-frequency), or the neighboring cell and the serving cell belong to different communication systems (that is, inter-RAT), the terminal device may start to measure the signal quality of the neighboring cell when the signal quality of the serving cell is less than or equal to a second measurement threshold. The second measurement threshold may also be referred to as an inter-frequency/inter-RAT measurement initiation threshold.

Similarly, the signal quality of the serving cell may be represented as "Srxlev", and the second measurement threshold may be defined as "S_{nonIntraSearchP}". Alternatively, the signal quality of the serving cell may be represented as "Squal", and the second measurement threshold may be defined as "S_{nonIntraSearchQ}". For example, if the neighboring cell has an equal priority, when the neighboring cell and the serving cell belong to a same communication system but have different frequencies (that is, inter-frequency), or the neighboring cell and the serving cell belong to different communication systems (that is, inter-RAT), if the serving cell fulfills Srxlev > S_{nonIntraSearchP} or Squal > S_{nonIntraSearchQ}, neighboring cell measurement is not started; or when the serving cell fulfills Srxlev ≤ S_{nonIntraSearchP} or Squal ≤ S_{nonIntraSearchQ}, the terminal device starts neighboring cell measurement.

If the neighboring cell has a lower priority, when the neighboring cell and the serving cell belong to a same communication system and have different frequencies (that is, inter-frequency), or the neighboring cell and the serving cell belong to different communication systems (that is, inter-RAT), the terminal device may start to measure the signal quality of the neighboring cell when the signal quality of the serving cell is less than or equal to a third measurement threshold. The third measurement threshold may also be an inter-frequency/inter-RAT measurement initiation threshold.

For example, the signal quality of the serving cell may be represented as "Srxlev", and the third measurement threshold may be defined as "S_{nonIntraSearchP}". Alternatively, the signal quality of the serving cell may be represented as "Squal", and the third measurement threshold may be defined as "S_{nonIntraSearchQ}". If the neighboring cell has a lower priority, when the neighboring cell and the serving cell belong to a same communication system but have different frequencies (that is, inter-frequency), or the neighboring cell and the serving cell belong to different communication systems (that is, inter-RAT), if the serving cell fulfills Srxlev > S_{nonIntraSearchP} or Squal > S_{nonIntraSearchQ}, neighboring cell measurement is not started; or when the serving cell fulfills Srxlev ≤ S_{nonIntraSearchP} or Squal ≤ S_{nonIntraSearchQ}, the terminal device starts neighboring cell measurement.

In other words, in this embodiment of this application, when the signal quality of the serving cell is less than the second threshold, that the terminal device measures the signal quality of the neighboring cell may include: For a neighboring cell having a priority higher than that of the serving cell, regardless of how good quality of the serving cell is, measurement is started unconditionally; and for a neighboring cell having a priority equal to or lower than that of the serving cell, the terminal device may compare the signal quality of the serving cell with a quality threshold delivered by the network. If the signal quality is greater than the threshold, the neighboring cell is not measured; otherwise, the neighboring cell is measured.

This embodiment does not limit relative values of the second threshold, the intra-frequency measurement initiation threshold, and the inter-frequency/inter-RAT measurement initiation threshold.

For example, the cell priority (or the reselection priority) mentioned in the foregoing descriptions may be obtained from a system message of the current serving cell, configured by a network side, and delivered to the terminal device in a cell broadcast manner. This type of priority is a common cell reselection priority. The cell priority may also be obtained from an RRC release (Release) message or inherited from another system. This type of priority is a dedicated cell reselection priority. If the terminal device obtains the dedicated cell reselection priority, the terminal device may ignore the common cell reselection priority. However, when the terminal device enters different RRC states and valid time of the dedicated cell reselection priority expires, the terminal device may delete the dedicated cell reselection priority.

For example, a configuration of the common cell reselection priority includes a cell reselection priority and a cell reselection sub-priority. The terminal device may add the cell reselection priority and the cell reselection sub-priority, and use a priority obtained through the addition as a final cell reselection priority for a configured frequency to perform cell reselection. Cell reselection priorities are classified based on frequencies. That is, cells of a same frequency in a same RAT (a same communication system) have a same cell reselection priority, and cells of different frequencies may have a same cell reselection priority or different cell reselection priorities.

Optionally, a value range of a cell reselection priority variable (CellReselectionPriority) may be 0 to 7, and a larger variable value indicates a higher priority. A value range of a cell reselection sub-priority variable (CellReselectionSubPriority) may be 0.2, 0.4, 0.6, 0.8, and the like. A larger variable value indicates a higher priority.

It should be understood that after measuring the signal quality of the neighboring cell, the terminal device may perform cell reselection evaluation (cell reselection evaluation process). The cell reselection evaluation refers to determining whether a neighboring cell meets a reselection criterion based on signal quality of the neighboring cell and a priority of the neighboring cell, and based on a determining result, reselecting to a neighboring cell that meets the reselection criterion (that is, performing cell reselection), or not performing cell reselection when the reselection criterion is not met. For a process of the cell reselection evaluation, refer to the following descriptions.

As described above, in the communication method provided in this embodiment of this application, the network device may send the first information to the terminal device, and the first information is related to paging. The terminal device may monitor the first information when the signal quality of the serving cell is greater than the second threshold, and obtain the signal quality of the neighboring cell when the signal quality of the serving cell is less than the second threshold. The terminal device monitors the first information, and responds to the first information to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may preferentially camp on the current serving cell to monitor the first information, to improve a channel condition, thereby continuing to receive paging in the current serving cell. The terminal device starts neighboring cell measurement only when the SSB quality of the serving cell is excessively poor, for example, when the signal quality of the serving cell is less than the second threshold (in this case, it may also be considered that the first information is unreachable, or the terminal device cannot receive paging even if the terminal device improves the channel condition), to ensure a communication service of the terminal device. When the terminal device continues receiving paging in the current serving cell and does not start neighboring cell measurement, there is no subsequent cell reselection evaluation procedure, thereby reducing power consumption of performing neighboring cell measurement and cell reselection evaluation by the terminal device.

In other words, in this embodiment of this application, when the terminal device is in an environment in which the terminal device is unreachable due to obstruction, the terminal device has an opportunity to adjust or improve a channel condition of the terminal device by receiving the first information from the network side, so that neighboring cell measurement and cell reselection evaluation do not need to be triggered, and a service is preferentially received in the current serving cell, thereby reducing some overheads of neighboring cell measurement and cell reselection evaluation to some extent.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell. The terminal device may not perform a neighboring cell measurement procedure and a cell reselection evaluation procedure.

In a possible design, monitoring the first information when the signal quality of the serving cell is greater than the second threshold in the foregoing embodiment may include: monitoring the first information when the signal quality of the serving cell is less than a first threshold and greater than the second threshold.

For example, in this design, the first threshold may be set for starting monitoring the first information. The terminal device may monitor the first information when the signal quality of the serving cell is less than the first threshold and greater than the second threshold. When the signal quality of the serving cell is greater than the first threshold, it may be considered that the terminal device has good communication quality in the current serving cell and can normally receive paging. Therefore, the terminal device may neither monitor the first information nor start neighboring cell measurement.

Similar to the manner of determining whether the signal quality of the serving cell is greater than the second threshold or less than the second threshold in the foregoing embodiment, for example, in a possible design, that the signal quality of the serving cell is less than the first threshold may include that the signal quality of the serving cell is less than the first threshold at a current moment; and that the signal quality of the serving cell is greater than the first threshold may include that the signal quality of the serving cell is greater than the first threshold at the current moment. For example, the current moment may be a moment at which the signal quality of the serving cell is obtained through measurement.

In another possible design, that the signal quality of the serving cell is greater than the first threshold may include: The signal quality of the serving cell is greater than the first threshold in a period of time before or after a current moment. That the signal quality of the serving cell is less than the first threshold may include: The signal quality of the serving cell is less than the first threshold in the period of time before or after the current moment. A length of the period of time is not limited. For example, that the signal quality of the serving cell is greater than the first threshold means that the signal quality of the serving cell is greater than the first threshold in the period of time before the current moment. The current moment may be a moment after the foregoing period of time starting from a moment at which the signal quality of the serving cell is obtained through measurement. Alternatively, for example, that the signal quality of the serving cell is greater than the first threshold means that the signal quality of the serving cell is greater than the first threshold in the period of time after the current moment. The current moment may be a moment at which the signal quality of the serving cell is obtained through measurement.

In some other possible designs, that the signal quality of the serving cell is greater than the first threshold may include: The signal quality of the serving cell is greater than the first threshold (or an average value is greater than the first threshold) at a plurality of consecutive or non-consecutive time points. That the signal quality of the serving cell is less than the first threshold may include: The signal quality of the serving cell is less than the first threshold (or the average value is less than the first threshold) at a plurality of consecutive or non-consecutive time points. A quantity of time points is not limited.

A manner of determining whether the signal quality of the serving cell is greater than the first threshold or less than the first threshold is not limited in this application.

Optionally, the manner of determining whether the signal quality of the serving cell is greater than the second threshold or less than the second threshold may be the same as the manner of determining whether the signal quality of the serving cell is greater than the first threshold or less than the first threshold. For example, whether the signal quality of the serving cell is greater than the second threshold or less than the second threshold and whether the signal quality is greater than the first threshold or less than the first threshold may be determined based on the signal quality of the serving cell at the current moment.

Optionally, when the signal quality of the serving cell is equal to the first threshold, the terminal device may monitor the first information, or may perform an operation based on logic in which the signal quality of the serving cell is greater than the first threshold, for example, neither monitor the first information nor start neighboring cell measurement.

In other words, in this design, a start condition of monitoring the first information is that the signal quality of the serving cell is less than the first threshold and greater than the second threshold, and a stop/end condition of monitoring the first information is that the signal quality of the serving cell is less than the second threshold or is greater than the first threshold.

In this design, when the signal quality of the serving cell is greater than the first threshold, the terminal device may neither monitor the first information nor start neighboring cell measurement, thereby reducing power consumption of monitoring the first information, or reducing power consumption caused by unnecessary monitoring.

It should be understood that, in this design, an action performed by the terminal device may include monitoring the first information and performing neighboring cell measurement. Whether the terminal device performs cell reselection evaluation is implemented based on neighboring cell measurement, and is not discussed herein. In the communication method, when the terminal device monitors the first information, the signal quality of the serving cell is less than the first threshold and greater than the second threshold (for a case in which the signal quality is equal to the first threshold, refer to the foregoing descriptions); and when the terminal device performs neighboring cell measurement, the signal quality of the serving cell is less than the second threshold.

In a possible design, the first threshold and the second threshold are predefined, preconfigured, or configured.

For example, in an implementation, values of the first threshold and the second threshold may be preconfigured in hardware and/or software of the terminal device. For example, the values are recorded/written in advance, and may be changed by using software or hardware.

For another example, in another implementation, values of the first threshold and the second threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device.

For another example, in still another implementation, values of the first threshold and the second threshold may be configured by another device (for example, another terminal device) for the terminal device by using PC5-RRC signaling.

For another example, in still another implementation, the first threshold and the second threshold do not need to be configured by another device, but may be information predefined (which may be recorded/written in advance) in hardware and/or software of the terminal device, or may be understood as being unable to be changed by the network device or another terminal device. In other words, the first threshold and the second threshold may be predefined in the terminal device in a standard or a protocol.

The implementations of the first threshold and the second threshold are not limited in this application.

In another possible design, the first threshold and a difference between the first threshold and the second threshold may be predefined, preconfigured, or configured.

For example, in an implementation, values of the first threshold and the difference between the first threshold and the second threshold may be preconfigured in hardware and/or software of the terminal device. For example, the values are recorded/written in advance, and may be changed by using software or hardware.

For another example, in another implementation, values of the first threshold and the difference between the first threshold and the second threshold may be configured by the network device (for example, a base station) for the terminal device by using a system information block (system information block, SIB) message, radio resource control (radio resource control, RRC) signaling, or a master information block (master information block, MIB) message, for example, recording/writing hardware and/or software of the terminal device.

For another example, in still another implementation, the first threshold and the difference between the first threshold and the second threshold may be configured by another device (for example, another terminal device) for the terminal device by using PC5-RRC signaling.

For another example, in still another implementation, values of the first threshold and the difference between the first threshold and the second threshold do not need to be configured by another device, but may be information predefined (which may be recorded/written in advance) in hardware and/or software of the terminal device, or may be understood as being unable to be changed by the network device or another terminal device. In other words, the first threshold and the difference between the first threshold and the second threshold may be predefined in the terminal device in a standard or a protocol.

The implementations of the first threshold and the difference between the first threshold and the second threshold are not limited in this application.

It may be understood that, when the first threshold and the difference between the first threshold and the second threshold are predefined, preconfigured, or configured, the terminal device may determine the second threshold based on the first threshold and the difference between the first threshold and the second threshold.

Optionally, in some embodiments, the values of the first threshold and the second threshold, or the values of the first threshold and the difference between the first threshold and the second threshold may be set according to a rule on a network side. A setting rule is not limited herein.

In some other embodiments, the value of the first threshold may be related to the priority of the neighboring cell. Alternatively, the value of the first threshold is determined based on the priority of the neighboring cell.

It may be understood that, as described in the foregoing embodiment, the priority of the neighboring cell may be higher than the priority of the serving cell, or may be the same as or lower than the priority of the serving cell. For the serving cell, the priority of the neighboring cell may include the following cases: (1) The neighboring cell includes only a neighboring cell having a priority lower than that of the serving cell. (2) The neighboring cell includes only a neighboring cell having a priority the same as that of the serving cell. (3) The neighboring cell includes only a neighboring cell having a priority higher than that of the serving cell. (4) The neighboring cell includes only the neighboring cell having a priority lower than that of the serving cell and the neighboring cell having a priority the same as that of the serving cell. (5) The neighboring cell includes only the neighboring cell having a priority lower than that of the serving cell and the neighboring cell having a priority higher than that of the serving cell. (6) The neighboring cell includes only the neighboring cell having a priority the same as that of the serving cell and the neighboring cell having a priority higher than that of the serving cell. (7) The neighboring cell includes the neighboring cell having a priority lower than that of the serving cell, the neighboring cell having a priority the same as that of the serving cell, and the neighboring cell having a priority higher than that of the serving cell.

In a possible design, when the neighboring cell includes only the neighboring cell having a priority lower than that of the serving cell, that is, for the case (1), the first threshold is determined based on the inter-frequency or inter-RAT measurement initiation threshold.

Alternatively, when the neighboring cell includes only the neighboring cell having a priority the same as that of the serving cell, that is, for the case (2), the first threshold is determined based on the intra-frequency measurement initiation threshold.

Alternatively, when the neighboring cell includes only the neighboring cell having a priority higher than that of the serving cell, that is, for the case (3), the first threshold is determined based on a first value, where the first value is an inter-frequency or inter-RAT measurement initiation threshold or another defined value.

Alternatively, when the neighboring cell includes only the neighboring cell having a priority lower than that of the serving cell and the neighboring cell having a priority the same as that of the serving cell, that is, for the case (4), the first threshold is determined based on a larger value of the inter-frequency or inter-RAT measurement initiation threshold and the intra-frequency measurement initiation threshold.

Alternatively, when the neighboring cell includes only the neighboring cell having a priority lower than that of the serving cell and the neighboring cell having a priority higher than that of the serving cell, that is, for the case (5), the first threshold is determined based on a larger value of the inter-frequency or inter-RAT measurement initiation threshold and the first value.

Alternatively, when the neighboring cell includes only the neighboring cell having a priority the same as that of the serving cell and the neighboring cell having a priority higher than that of the serving cell, that is, for the case (6), the first threshold is determined based on a larger value of the intra-frequency measurement initiation threshold and the first value.

Alternatively, when the neighboring cell includes the neighboring cell having a priority lower than that of the serving cell, the neighboring cell having a priority the same as that of the serving cell, and the neighboring cell having a priority higher than that of the serving cell, that is, for the case (7), the first threshold is determined based on a largest value of the inter-frequency or inter-RAT measurement initiation threshold, the intra-frequency measurement initiation threshold, and the first value.

For example, Table 1 shows an example of the value of the first threshold.

**Table 1**

| Neighboring cell priority type | Value of a first threshold |
|---|---|
| Only lower-priority neighboring cell | Inter-frequency or inter-RAT measurement initiation threshold |
| Only same-priority neighboring cell | Intra-frequency measurement initiation threshold |
| Only higher-priority neighboring cell | Another defined value or inter-frequency or inter-RAT measurement initiation threshold |
| Including a lower-priority neighboring cell and a same-priority neighboring cell | Larger value of an inter-frequency or inter-RAT measurement initiation threshold and an intra-frequency measurement initiation threshold |
| Including a lower-priority neighboring cell and a higher-priority neighboring cell | Larger value of (an inter-frequency or inter-RAT measurement initiation threshold or another defined value) and an inter-frequency or inter-RAT measurement initiation threshold |
| Including a same-priority neighboring cell and a higher-priority neighboring cell | Larger value of (an inter-frequency or inter-RAT measurement initiation threshold or another defined value) and an intra-frequency measurement initiation threshold |
| Including a lower-priority neighboring cell, a same-priority neighboring cell, and a higher-priority neighboring cell | Largest value of (an inter-frequency or inter-RAT measurement initiation threshold or another defined value), an inter-frequency or inter-RAT measurement initiation threshold, and an intra-frequency measurement initiation threshold |

As shown in Table 1, when the neighboring cell includes only the neighboring cell having a priority lower than that of the serving cell, the value of the first threshold may be the inter-frequency or inter-RAT measurement initiation threshold. Alternatively, when the neighboring cell includes only the neighboring cell having a priority the same as that of the serving cell, the value of the first threshold may be the intra-frequency measurement initiation threshold. Alternatively, when the neighboring cell includes only the neighboring cell having a priority higher than that of the serving cell, the value of the first threshold may be the first value, where the first value is an inter-frequency or inter-RAT measurement initiation threshold or another defined value. Alternatively, when the neighboring cell includes only the neighboring cell having a priority lower than that of the serving cell and the neighboring cell having a priority the same as that of the serving cell, the value of the first threshold may be a larger value of the inter-frequency or inter-RAT measurement initiation threshold and the intra-frequency measurement initiation threshold. Alternatively, when the neighboring cell includes only the neighboring cell having a priority lower than that of the serving cell and the neighboring cell having a priority higher than that of the serving cell, the value of the first threshold may be a larger value of the first value and the inter-frequency or inter-RAT measurement initiation threshold. Alternatively, when the neighboring cell includes only the neighboring cell having a priority the same as that of the serving cell and the neighboring cell having a priority higher than that of the serving cell, the value of the first threshold may be a larger value of the intra-frequency measurement initiation threshold and the first value. Alternatively, when the neighboring cell includes the neighboring cell having a priority lower than that of the serving cell, the neighboring cell having a priority the same as that of the serving cell, and the neighboring cell having a priority higher than that of the serving cell, the value of the first threshold may be a largest value of the inter-frequency or inter-RAT measurement initiation threshold, the intra-frequency measurement initiation threshold, and the first value.

In some other examples, the value of the first threshold may alternatively be a value obtained through adjustment based on Table 1. For example, when the neighboring cell includes only the neighboring cell having a priority lower than that of the serving cell, the value of the first threshold may be a value obtained by increasing or decreasing the inter-frequency or inter-RAT measurement initiation threshold. Alternatively, when the neighboring cell includes only the neighboring cell having a priority the same as that of the serving cell, the value of the first threshold may be a value obtained by increasing or decreasing the intra-frequency measurement initiation threshold. Other cases are similar. Details are not described again.

In some other possible designs, the value of the first threshold may be related to the priority of the neighboring cell in another manner. A specific relationship between the priority of the neighboring cell and the first threshold is not limited in this application.

In this embodiment, the value of the first threshold is related to the priority of the neighboring cell, and the value of the first threshold is determined based on a priority type of the neighboring cell, so that the value of the first threshold better matches a measurement initiation threshold involved in a neighboring cell measurement scenario, or the value of the first threshold better meets requirements of the neighboring cell measurement scenario.

Optionally, in this embodiment of this application, the difference between the first threshold and the second threshold may be determined based on a first parameter. The first parameter includes at least one of the following: a signal quality gain obtainable by adjusting a channel condition; a signal quality difference between the first information and a paging message; or maximum signal quality that can be received.

As described in the foregoing embodiment, the terminal device may actively adjust hardware and/or software of the terminal device to adjust the channel condition, and/or a user adjusts a posture and/or an external environment of the terminal device to adjust the channel condition. The signal quality gain obtainable by adjusting the channel condition may be a difference between signal quality of the paging message received by the terminal device after the channel condition is adjusted and signal quality of the paging message received by the terminal device before the channel condition is adjusted. In other words, the signal quality gain is signal quality that can be improved by the terminal device by adjusting the channel condition.

In addition, as described in the foregoing embodiment, signal quality of a signal (for example, a first signal) that carries the first information is designed to be strong enough. For example, when a conventional paging message cannot be received by the UE, the signal that carries the first information can still be normally received by the UE. Alternatively, in a same channel condition, the signal quality of the signal that carries the first information is better than that of another signal (for example, a paging message). The signal quality difference between the first information and the paging message may be a difference between the signal quality of the signal carrying the first information and signal quality of the conventional paging message.

The maximum signal quality that can be received may be maximum signal quality that can be received by the terminal device in capability information of the terminal device. For example, as defined in a standard, that the terminal device needs to have a capability of receiving signal quality that is MAX, and the signal quality of the conventional paging message is K. In this case, the first parameter may be maximum signal quality MAX that can be received by the terminal device.

For example, a manner of determining the difference between the first threshold and the second threshold based on the first parameter may include: using the signal quality gain (or a value close to the signal quality gain) that can be obtained by adjusting the channel condition as the difference between the first threshold and the second threshold; using the signal quality difference (or a value close to the signal quality difference) between the first information and the paging message as the difference between the first threshold and the second threshold; or using a difference between the maximum signal quality that can be received by the terminal device and signal quality of a conventional paging message (or a value close to the difference between the maximum signal quality and the signal quality of the conventional paging message) as the difference between the first threshold and the second threshold.

In the foregoing embodiment, the terminal device may not monitor the first information when the signal quality of the serving cell is greater than the first threshold; or may not monitor the first information but perform neighboring cell measurement when the signal quality of the serving cell is less than the second threshold. Optionally, in some embodiments, when the signal quality of the serving cell is less than the first threshold and greater than the second threshold, in a process of monitoring the first information, if the terminal device detects that a first condition is met, the terminal device may exit a monitoring procedure (that is, stop monitoring the first information), and perform neighboring cell measurement, to ensure normal neighboring cell measurement and cell reselection evaluation of the terminal device in a timely manner, thereby ensuring communication performance of the terminal device.

For example, the communication method further includes: when detecting that the first condition is met, stopping monitoring the first information, and obtaining/measuring the signal quality of the neighboring cell. It may be understood that this step may be implemented in a process in which the terminal device monitors the first information.

The first condition includes at least one of the following: a duration for which the signal quality of the serving cell is less than the first threshold reaches a first duration, or the received first information is ignored. A size of the first duration is not limited in this application.

For example, after monitoring the first information delivered by the network device (for example, a satellite base station), the terminal device that is paging unreachable may adjust by itself or prompt the user to adjust the channel condition. When the duration for which the signal quality of the serving cell is less than the first threshold reaches the first duration, it may be considered that the terminal device cannot adjust to a good channel condition even after receiving the first information, and the terminal device may be detached from unnecessary monitoring in a timely manner to perform normal neighboring cell measurement and cell reselection evaluation.

For example, when the terminal device is located at a cell edge, the signal quality of the serving cell may be less than the first threshold and greater than the second threshold. However, even if the terminal device receives the first information, the terminal device cannot adjust to a good channel condition. When the duration for which the signal quality of the serving cell is less than the first threshold reaches the first duration, the terminal device stops monitoring the first information, and measures the signal quality of the neighboring cell, so that the terminal device can be detached from unnecessary monitoring in a timely manner at the cost of some reselection delays, to perform normal neighboring cell measurement and cell reselection evaluation.

For example, when the terminal device prompts the user to adjust the channel condition, the user may actively choose to ignore the first information, or the user may not respond to the first information for a long time. In this case, it may be considered that the first information is ignored. For example, after receiving the first information, the terminal device may give a sound prompt to prompt the user to adjust the channel condition. After the user actively disables the sound prompt, or the sound prompt reaches a specific duration and is automatically disabled because the user does not respond, it may be considered that the first information is ignored. When the first information is ignored, it may also be considered that the terminal device may not be able to adjust to a good channel condition. The terminal device may stop monitoring the first information and measure the signal quality of the neighboring cell, so that the terminal device can be detached from unnecessary monitoring in a timely manner to perform normal neighboring cell measurement and cell reselection evaluation.

It should be noted that the first condition is not limited in this application.

In this embodiment, the first condition may be considered as a back-off condition when the terminal device is in a monitoring state. When it is detected that the first condition is met, monitoring the first information is stopped, and the signal quality of the neighboring cell is measured, so that the terminal device can consider the back-off condition in the monitoring state, and can be detached from unnecessary monitoring in a timely manner, to perform normal neighboring cell measurement and cell reselection evaluation, thereby ensuring communication performance of the terminal device.

For example, FIG. 6 is a diagram of a monitoring threshold and a principle according to an embodiment of this application. As shown in FIG. 6, the first threshold is greater than the second threshold. There is an adjustment value differed between the first threshold and the second threshold. For the adjustment value, refer to the foregoing embodiment, and the adjustment value may be determined based on the first parameter. There may be three possibilities for the signal quality of the serving cell measured by the terminal device: (1) The signal quality is in a range shown by point A in FIG. 6, that is, greater than the first threshold. (2) The signal quality is in a range shown by point B in FIG. 6, that is, less than the first threshold and greater than the second threshold. (3) The signal quality is in a range shown by point C in FIG. 6, that is, less than the second threshold. For a case in which the signal quality of the serving cell is equal to the first threshold, refer to the case in which the signal quality is greater than the first threshold or the case in which the signal quality is less than the first threshold and greater than the second threshold. For a case in which the signal quality of the serving cell is equal to the second threshold, refer to the case in which the signal quality is less than the second threshold or the case in which the signal quality is less than the first threshold and greater than the second threshold. Details are not described again.

When the signal quality of the serving cell is in the range shown by point A in FIG. 6, that is, greater than the first threshold, the terminal device may not trigger starting of neighboring cell measurement, and does not monitor the first information. When the signal quality of the serving cell is in the range shown by point B in FIG. 6, that is, less than the first threshold and greater than the second threshold, the terminal device may not trigger starting of neighboring cell measurement, but start monitoring the first information. When the signal quality of the serving cell is in the range shown by point C in FIG. 6, that is, less than the second threshold, the terminal device may normally trigger starting of neighboring cell measurement, and stop monitoring the first information.

When the signal quality of the serving cell is in the range shown by point B in FIG. 6, when detecting that the first condition (refer to the foregoing embodiment) is met, the terminal device may also stop monitoring the first information, and normally trigger starting of neighboring cell measurement.

The foregoing embodiment describes a process in which the terminal device obtains the signal quality of the serving cell, determines, based on the signal quality of the serving cell, whether to monitor the first information, and obtains/measures the signal quality of the neighboring cell when not monitoring the first information. In some other embodiments, the terminal device may obtain/measure the signal quality of the serving cell and obtain/measure the signal quality of the neighboring cell. After the signal quality of the neighboring cell is obtained/measured, the terminal device may determine, based on the signal quality of the serving cell, whether to monitor the first information, and perform cell reselection evaluation when not monitoring the first information.

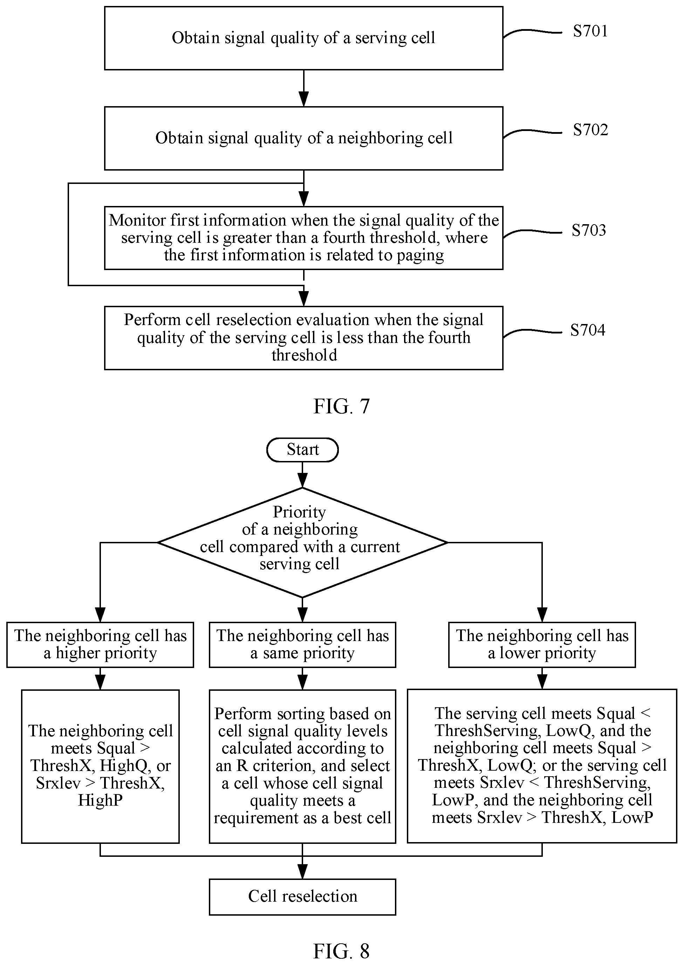

For example, FIG. 7 is still another schematic flowchart of a communication method according to an embodiment of this application. As shown in FIG. 7, the communication method may include S701 to S703. S701 to S703 may be performed by a terminal device or an apparatus (for example, a chip) built in the terminal device.

S701: Obtain the signal quality of a serving cell.

S701 is a process in which the terminal device measures the signal quality of the serving cell. For S701, refer to S401. Details are not described again.

A difference between the embodiment shown in FIG. 7 and the embodiment shown in FIG. 4 lies in: In the embodiment shown in FIG. 4, whether the process of measuring the signal quality of the neighboring cell by the terminal device is performed may be determined based on the criteria about the signal quality of the serving cell in S402 and S403. In the embodiment shown in FIG. 7, after the terminal device performs S702 to measure signal quality of a neighboring cell, whether to perform a cell reselection evaluation procedure may be determined based on the criteria about the signal quality of the serving cell in S703 and S704.

It should be understood that the terminal device in this embodiment of this application may be in an RRC idle state or an RRC inactive state. In addition, the terminal device may normally receive an SSB, and use the SSB for synchronization and measurement.

For example, after performing S701, the terminal device may perform S702.

S702: Obtain the signal quality of the neighboring cell.

For example, for a specific implementation of measuring the signal quality of the neighboring cell in S702, refer to the process of measuring the signal quality of the neighboring cell in the foregoing embodiment. For example, refer to the principle of measuring the signal quality of the neighboring cell shown in FIG. 5. When measuring the signal quality of the neighboring cell, the terminal device may determine, based on the signal quality of the serving cell and the priority of the neighboring cell, whether to trigger neighboring cell measurement, and measure the signal quality of the neighboring cell when triggering neighboring cell measurement. The neighboring cell measurement process is not described herein again.

It should be understood that, when it is determined, based on the priority of the neighboring cell and the signal quality of the serving cell, not to perform signal quality measurement of any neighboring cell in S702, subsequent steps (for example, S703 and S704) are not performed. The procedure shown in FIG. 7 is only for a case in which signal quality of at least one neighboring cell is obtained through measurement in S702.

S703: Monitor first information when the signal quality of the serving cell is greater than a fourth threshold, where the first information is related to paging.

S704: Perform cell reselection evaluation when the signal quality of the serving cell is less than the fourth threshold.

The fourth threshold may be understood or defined as a threshold for stopping monitoring the first information. In this embodiment, after obtaining the signal quality of the serving cell and the signal quality of the neighboring cell through measurement, the terminal device may determine, based on the signal quality of the serving cell, whether to enable monitoring the first information or whether to perform cell reselection evaluation.

Similar to the manner of determining a relative value relationship between the signal quality of the serving cell and the first threshold (and/or the second threshold) in the foregoing embodiment, in a possible design, that the signal quality of the serving cell is less than the fourth threshold may include that the signal quality of the serving cell is less than the fourth threshold at a current moment; and that the signal quality of the serving cell is greater than the fourth threshold may include that the signal quality of the serving cell is greater than the fourth threshold at the current moment. For example, the current moment may be a moment at which the signal quality of the serving cell is obtained through measurement.

In another possible design, that the signal quality of the serving cell is greater than the fourth threshold may include: The signal quality of the serving cell is greater than the fourth threshold in a period of time before or after a current moment. That the signal quality of the serving cell is less than the fourth threshold may include: The signal quality of the serving cell is less than the fourth threshold in the period of time before or after the current moment. A length of the period of time is not limited. For example, that the signal quality of the serving cell is greater than the fourth threshold means that the signal quality of the serving cell is greater than the fourth threshold in the period of time before the current moment. The current moment may be a moment after the foregoing period of time starting from a moment at which the signal quality of the serving cell is obtained through measurement. Alternatively, for example, that the signal quality of the serving cell is greater than the fourth threshold means that the signal quality of the serving cell is greater than the fourth threshold in the period of time after the current moment. The current moment may be a moment at which the signal quality of the serving cell is obtained through measurement.

In some other possible designs, that the signal quality of the serving cell is greater than the fourth threshold may include: The signal quality of the serving cell is greater than the fourth threshold (or an average value is greater than the fourth threshold) at a plurality of consecutive or non-consecutive time points. That the signal quality of the serving cell is less than the fourth threshold may include: The signal quality of the serving cell is less than the fourth threshold (or the average value is less than the fourth threshold) at a plurality of consecutive or non-consecutive time points. A quantity of time points is not limited.

A manner of determining whether the signal quality of the serving cell is greater than the fourth threshold or less than the fourth threshold is not limited in this application.

Optionally, a manner of determining a relative value relationship between the signal quality of the serving cell and the fourth threshold may be the same as the manner of determining the relative value relationship between the signal quality of the serving cell and the first threshold (and/or the second threshold) in the foregoing embodiment. For example, whether the signal quality is greater than the fourth threshold or less than the fourth threshold, whether the signal quality is greater than the second threshold or less than the second threshold, and whether the signal quality is greater than the first threshold or less than the first threshold may be determined based on the signal quality of the serving cell at the current moment.

Optionally, when the signal quality of the serving cell is equal to the fourth threshold, S703 may be performed, or S704 may be performed. This is not limited herein.

For example, after the terminal device measures the signal quality of the serving cell and the signal quality of the neighboring cell, the signal quality of the serving cell may be greater than the fourth threshold, or may be less than or equal to the fourth threshold. When the signal quality of the serving cell is greater than the fourth threshold, the terminal device may not perform cell reselection evaluation, but monitor the first information, where the first information is related to paging. For the first information, a process in which the terminal device monitors the first information, a manner in which the terminal device responds to the monitored first information, and the like, refer to the foregoing embodiments. Details are not described again. When the signal quality of the serving cell is less than or equal to the fourth threshold, the terminal device may perform cell reselection evaluation, and does not monitor the first information.

It should be understood that in this embodiment of this application, S703 and S704 may have an "and/or" relationship. For example, after S703 is performed, the signal quality of the serving cell may change, for example, decrease to be less than the fourth threshold. In this case, the terminal device may perform S704. Monitoring the first information is stopped when S704 is performed.

For example, when the signal quality of the serving cell is less than the fourth threshold, performing cell reselection evaluation may include: determining, based on the signal quality of the neighboring cell and the priority of the neighboring cell, whether the neighboring cell meets a reselection criterion (a cell reselection measurement rule), and based on a determining result, reselecting to a neighboring cell that meets the reselection criterion (that is, performing cell reselection), or not performing cell reselection when the reselection criterion is not met. For example, FIG. 8 is a diagram of a principle of cell reselection evaluation according to an embodiment of this application. As shown in FIG. 8, the terminal device may first compare priorities of the neighboring cell and the current serving cell, and may classify the neighboring cell into the following three cases based on the priorities: (1) The neighboring cell has a higher priority, that is, the priority of the neighboring cell is higher than the priority of the serving cell. (2) The neighboring cell has an equal priority, that is, the priority of the neighboring cell is the same as that of the serving cell. (3) The neighboring cell has a lower priority, that is, the priority of the neighboring cell is lower than that of the serving cell. Cells on a same frequency and of a same RAT have an equal priority, and cells on different frequencies may have an equal priority or different priorities.

For a case in which the neighboring cell has a higher priority, when the higher-priority neighboring cell fulfills Squal > Thresh_{X, HighQ} or Srxlev > Thresh_{X, HighP} within a time interval, and the terminal device camps on the current serving cell for more than 1 second (or a preset camping duration, where the preset camping duration may also be another value, for example, 2 seconds), cell reselection of the higher-priority neighboring cell may be performed. When the higher-priority neighboring cell is a neighboring cell of a higher-priority NR frequency, the time interval may be Treselection_{NR}. When the higher-priority neighboring cell is a neighboring cell of an inter-RAT frequency, the time interval may be Treselection_{RAT}. The time interval may be referred to as first preset time, and Thresh_{X, HighQ} and Thresh_{X, HighP} may be referred to as a first reselection threshold.

If a plurality of neighboring cells all meet the criterion, the terminal device may select a neighboring cell with a highest signal quality level Rn (Rn = Q_{meas,n} - Qoffset - Qoffsetₜₑₘₚ) to perform cell reselection. Q_{meas,n} is RSRP of the neighboring cell, Qoffset is the offset, and Qoffsetₜₑₘₚ is a temporary offset.

For example, Thresh_{X, HighP} and Thresh_{X, HighQ} are cell reselection thresholds of a higher-priority neighboring cell, and cell reselection can be performed only when signal quality of the higher-priority neighboring cell is higher than the value. X indicates a frequency. Each frequency has a corresponding threshold. For inter-frequency higher-priority neighboring cells, this variable is contained in a SIB4. For inter-RAT higher-priority neighboring cells, this variable is contained in a SIB5.

For neighboring cells having an equal priority, an R criterion can be used. If the signal quality of the neighboring cell meets the S criterion (that is, Srxlev > 0 and Squal > 0), cell signal quality levels (for example, Rn) are calculated, then sorting is performed based on the cell signal quality levels, and cells with highest signal quality levels or with levels close to the highest signal quality levels are selected. Finally, among these cells, a cell with a largest quantity of beams and whose beam signal quality meets requirements is selected as a best cell, and the cell meets a cell reselection criterion. If the selected best cell always meets the cell reselection criterion within the time interval Treselection_{NR}, and the terminal device camps on the current serving cell for more than 1s (or preset camping duration, where the preset camping duration may also be another value, for example, 2s), the terminal device starts cell reselection to the neighboring cell.

For a case in which the neighboring cell has a lower priority, when the serving cell fulfills Squal < Thresh_{Serving, LowQ}, and the neighboring cell fulfills Squal > Thresh_{X, LowQ} within a time interval, or when the serving cell fulfills Srxlev < Thresh_{Serving, LowP}, and the neighboring cell fulfills Srxlev > Thresh_{X, LowP} within a time interval, and the terminal device camps on the current serving cell for more than 1s (or preset camping duration, where the preset camping duration may also be another value, for example, 2s), the terminal device starts cell reselection to the neighboring cell. When the lower-priority neighboring cell is a neighboring cell of a lower-priority NR frequency, the time interval may be Treselection_{NR}. When the lower-priority neighboring cell is a neighboring cell of an inter-RAT frequency, the time interval may be Treselection_{RAT}. Herein, the time interval may be referred to as second preset time, Thresh_{X, HighQ} and Thresh_{X, HighP} may be referred to as a second reselection threshold, and Thresh_{Serving, LowP} and Thresh_{Serving, LowQ} may be referred to as a third reselection threshold.

For example, Thresh_{Serving, LowP} and Thresh_{Serving, LowQ} are cell reselection thresholds of the serving cell, and Thresh_{X, LowP} and Thresh_{X, LowQ} are cell reselection thresholds of the lower-priority neighboring cell. X represents a frequency, and each frequency has a corresponding threshold. For inter-frequency lower-priority neighboring cells, this variable is contained in a SIB4. For inter-RAT lower-priority neighboring cells, this variable is contained in a SIB5.

Optionally, in the cell reselection procedure shown in FIG. 8, if a plurality of cells with different priorities meet the cell reselection criterion, reselection to a neighboring cell with a higher priority needs to be performed prior to reselection to a neighboring cell with a lower priority.

It should be noted that the cell reselection evaluation in the embodiment shown in FIG. 7 means that the terminal device determines, based on the procedure shown in FIG. 8, whether a cell reselection criterion is met, and performs cell reselection based on a determining result (or reselects, based on the determining result, a cell that meets the cell reselection criterion), and does not mandate that the terminal device definitely reselect to a new cell.

A relative value relationship between the fourth threshold and the cell reselection threshold is not limited in this embodiment.

It should be understood that after performing cell reselection evaluation, the terminal device may reselect a new cell, or may continue camping on the current serving cell. Alternatively, there may be a case in which no other cell can be camped on and the current serving cell does not meet a camping criterion. In this case, the terminal device may perform cell selection, to select a suitable cell or an acceptable cell for camping. Details are not described again. Alternatively, for a cell selection process, refer to the following descriptions.

As described above, in the communication method provided in this embodiment, a network device may send the first information to the terminal device, and the first information is related to paging. After the terminal device measures the signal quality of the serving cell and the neighboring cell, when the signal quality of the serving cell is greater than the fourth threshold, the terminal device may monitor the first information; when the signal quality of the serving cell is less than the fourth threshold, the terminal device may perform cell reselection evaluation. The terminal device monitors the first information, and responds to the first information to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may preferentially camp on the current serving cell to monitor the first information, to improve a channel condition, thereby continuing to receive paging in the current serving cell. The terminal device starts cell reselection evaluation only when the SSB quality of the serving cell is excessively poor, for example, when the signal quality of the serving cell is less than the fourth threshold (in this case, it may also be considered that the first information is unreachable, or the terminal device cannot receive paging even if the terminal device improves the channel condition), to ensure a communication service of the terminal device. When the terminal device continues receiving paging in the current serving cell and does not start cell reselection evaluation, power consumption of performing cell reselection evaluation by the terminal device is reduced.

In other words, in this embodiment of this application, when the terminal device is in an environment in which the terminal device is unreachable due to obstruction, the terminal device has an opportunity to adjust or improve a channel condition of the terminal device by receiving the first information from the network side, so that cell reselection evaluation does not need to be triggered, and a service is preferentially received in the current serving cell, thereby reducing some overheads of cell reselection evaluation to some extent.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell. The terminal device may not perform a cell reselection evaluation procedure.

In a possible design, monitoring the first information when the signal quality of the serving cell is greater than the fourth threshold in the foregoing embodiment may include: monitoring the first information when the signal quality of the serving cell is less than a third threshold and greater than the fourth threshold.

For example, in this design, the third threshold may be set for starting monitoring the first information. The terminal device may monitor the first information when the signal quality of the serving cell is less than the third threshold and greater than the fourth threshold. When the signal quality of the serving cell is greater than the third threshold, it may be considered that the terminal device has good communication quality in the current serving cell and can normally receive paging. Therefore, the terminal device may neither monitor the first information nor start cell reselection evaluation.

Similar to the manner of determining a relative value relationship between the signal quality of the serving cell and the first threshold, the second threshold, the fourth threshold, and the like in the foregoing embodiment, in a possible design, that the signal quality of the serving cell is less than the third threshold may include that the signal quality of the serving cell is less than the third threshold at a current moment; and that the signal quality of the serving cell is greater than the third threshold may include that the signal quality of the serving cell is greater than the third threshold at the current moment. For example, the current moment may be a moment at which the signal quality of the serving cell is obtained through measurement.

In another possible design, that the signal quality of the serving cell is greater than the third threshold may include: The signal quality of the serving cell is greater than the third threshold in a period of time before or after a current moment. That the signal quality of the serving cell is less than the third threshold may include: The signal quality of the serving cell is less than the third threshold in the period of time before or after the current moment. A length of the period of time is not limited. For example, that the signal quality of the serving cell is greater than the third threshold means that the signal quality of the serving cell is greater than the third threshold in the period of time before the current moment. The current moment may be a moment after the foregoing period of time starting from a moment at which the signal quality of the serving cell is obtained through measurement. Alternatively, for example, that the signal quality of the serving cell is greater than the third threshold means that the signal quality of the serving cell is greater than the third threshold in the period of time after the current moment. The current moment may be a moment at which the signal quality of the serving cell is obtained through measurement.

In some other possible designs, that the signal quality of the serving cell is greater than the third threshold may include: The signal quality of the serving cell is greater than the third threshold (or an average value is greater than the third threshold) at a plurality of consecutive or non-consecutive time points. That the signal quality of the serving cell is less than the third threshold may include: The signal quality of the serving cell is less than the third threshold (or the average value is less than the third threshold) at a plurality of consecutive or non-consecutive time points. A quantity of time points is not limited.

A manner of determining whether the signal quality of the serving cell is greater than the third threshold or less than the third threshold is not limited in this application.

Optionally, a manner of determining a relative value relationship between the signal quality of the serving cell and the third threshold may be the same as the manner of determining the relative value relationship between the signal quality of the serving cell and the first threshold (or the second threshold, the fourth threshold, or the like) in the foregoing embodiment. For example, whether the signal quality is greater than the third threshold or less than the third threshold, whether the signal quality is greater than the fourth threshold or less than the fourth threshold, whether the signal quality is greater than the second threshold or less than the second threshold, and whether the signal quality is greater than the first threshold or less than the first threshold may be determined based on the signal quality of the serving cell at the current moment.

Optionally, when the signal quality of the serving cell is equal to the third threshold, the terminal device may monitor the first information, or may perform an operation based on logic in which the signal quality of the serving cell is greater than the third threshold, for example, neither monitor the first information nor start cell reselection evaluation.

In other words, in this design, a start condition of monitoring the first information is that the signal quality of the serving cell is less than the third threshold and greater than the fourth threshold, and a stop/end condition of monitoring the first information is that the signal quality of the serving cell is less than the fourth threshold or is greater than the third threshold.

In this design, when the signal quality of the serving cell is greater than the third threshold, the terminal device may neither monitor the first information nor start cell reselection evaluation, thereby reducing power consumption of monitoring the first information, or reducing power consumption caused by unnecessary monitoring.

It should be understood that in this design, after the terminal device measures the signal quality of the serving cell and the neighboring cell, an action performed may include: monitoring the first information and performing cell reselection evaluation. In the communication method, when the terminal device monitors the first information, the signal quality of the serving cell is less than the third threshold and greater than the fourth threshold (for a case in which the signal quality is equal to the third threshold, refer to the foregoing descriptions); and when the terminal device performs cell reselection evaluation, the signal quality of the serving cell is less than the fourth threshold.

In a possible design, the third threshold and the fourth threshold are predefined, preconfigured, or configured.

For example, in an implementation, values of the third threshold and the fourth threshold may be preconfigured in hardware and/or software of the terminal device. For example, the values are recorded/written in advance, and may be changed by using software or hardware.

For another example, in another implementation, values of the third threshold and the fourth threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device.

For another example, in still another implementation, values of the third threshold and the fourth threshold may be configured by another device (for example, another terminal device) for the terminal device by using PC5-RRC signaling.

For another example, in still another implementation, values of the third threshold and the fourth threshold do not need to be configured by another device, but may be information predefined (which may be recorded/written in advance) in hardware and/or software of the terminal device, or may be understood as being unable to be changed by the network device or another terminal device. In other words, the third threshold and the fourth threshold may be predefined in the terminal device in a standard or a protocol.

The implementations of the third threshold and the fourth threshold are not limited in this application.

In another possible design, the third threshold and a difference between the third threshold and the fourth threshold may be predefined, preconfigured, or configured.

For example, in an implementation, values of the third threshold and the difference between the third threshold and the fourth threshold may be preconfigured in hardware and/or software of the terminal device. For example, the values are recorded/written in advance, and may be changed by using software or hardware.

For another example, in another implementation, values of the third threshold and the difference between the third threshold and the fourth threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device.

For another example, in still another implementation, values of the third threshold and the difference between the third threshold and the fourth threshold may be configured by another device (for example, another terminal device) for the terminal device by using PC5-RRC signaling.

For another example, in still another implementation, values of the third threshold and the difference between the third threshold and the fourth threshold do not need to be configured by another device, and may be information predefined (which may be recorded/written in advance) in hardware and/or software of the terminal device, or may be understood as being unable to be changed by the network device or another terminal device. In other words, values of the third threshold and the difference between the third threshold and the fourth threshold may be predefined in the terminal device in a standard or a protocol.

The implementations of the third threshold and the difference between the third threshold and the fourth threshold are not limited in this application.

It may be understood that when the third threshold and the difference between the third threshold and the fourth threshold are predefined, preconfigured, or configured, the terminal device may determine the fourth threshold based on the third threshold and the difference between the third threshold and the fourth threshold.

Optionally, in some embodiments, the values of the third threshold and the fourth threshold, or the values of the third threshold and the difference between the third threshold and the fourth threshold may be set according to a rule on a network side. A setting rule is not limited herein.

In some other embodiments, the value of the third threshold may be related to the priority of the neighboring cell. Alternatively, the value of the third threshold is determined based on the priority of the neighboring cell.

It may be understood that, as described in the foregoing embodiment, the priority of the neighboring cell may be higher than the priority of the serving cell, or may be the same as or lower than the priority of the serving cell.

In a possible design, the neighboring cell of the serving cell may be classified into two types based on priority types. In a first type, the neighboring cell of the serving cell includes a neighboring cell having a priority lower than that of the serving cell. In a second type, the neighboring cell of the serving cell includes no neighboring cell having a priority lower than that of the serving cell. For the first type, that is, when the neighboring cell includes the neighboring cell having a priority lower than that of the serving cell, the third threshold may be determined based on a low-priority neighboring cell reselection threshold. For the second type, that is, when the neighboring cell does not include the neighboring cell having a priority lower than that of the serving cell, the third threshold may be determined based on a second value, where the second value is an S-criterion threshold or another defined value.

For example, Table 2 shows an example of the value of the third threshold.

**Table 2**

| Neighboring cell priority type | Value of a third threshold |
|---|---|
| Only lower-priority neighboring cell | Low-priority neighboring cell reselection threshold |
| Only same-priority neighboring cell | S-criterion threshold or another defined value |
| Only higher-priority neighboring cell | S-criterion threshold or another defined value |
| Including a lower-priority neighboring cell and a same-priority neighboring cell | Low-priority neighboring cell reselection threshold |
| Including a lower-priority neighboring cell and a higher-priority neighboring cell | Low-priority neighboring cell reselection threshold |
| Including a same-priority neighboring cell and a higher-priority neighboring cell | S-criterion threshold or another defined value |
| Including a lower-priority neighboring cell, a same-priority neighboring cell, and a higher-priority neighboring cell | Low-priority neighboring cell reselection threshold |

In Table 2, the low-priority neighboring cell reselection threshold refers to a cell reselection threshold of the serving cell in a case of the lower-priority neighboring cell in the cell reselection principle shown in FIG. 8, for example, Thresh_{Serving, LowP} or Thresh_{Serving, LowQ}.

As shown in Table 2, when the neighboring cell includes a neighboring cell having a priority lower than that of the serving cell, the value of the third threshold may be the low-priority neighboring cell reselection threshold. When the neighboring cell does not include the neighboring cell having a priority lower than that of the serving cell, the value of the third threshold may be an S-criterion threshold or another defined value.

In some other examples, the value of the third threshold may alternatively be a value obtained through adjustment based on Table 4. For example, when the neighboring cell includes only the neighboring cell having a priority lower than that of the serving cell, the value of the third threshold may be a value obtained by increasing or decreasing the low-priority neighboring cell reselection threshold. Alternatively, when the neighboring cell does not include the neighboring cell having a priority lower than that of the serving cell, the value of the third threshold may be a value obtained by increasing or decreasing an S-criterion threshold or another defined value.

In some other possible designs, the value of the third threshold may be related to the priority of the neighboring cell in another manner. A specific relationship between the priority of the neighboring cell and the third threshold is not limited in this application.

In this embodiment, a value of the third threshold is related to the priority of the neighboring cell, and the value of the third threshold is determined based on a priority type of the neighboring cell, so that the value of the third threshold can better match a cell reselection threshold involved in a cell reselection scenario, or the value of the third threshold can better meet requirements of the cell reselection scenario.

Optionally, in this embodiment of this application, the difference between the third threshold and the fourth threshold may be determined based on a second parameter. The second parameter includes at least one of the following: a signal quality gain obtainable by adjusting a channel condition; a signal quality difference between the first information and a paging message; or maximum signal quality that can be received.

Implementation of the second parameter is similar to that of the first parameter. For details, refer to the first parameter. Details are not described herein again.

For example, a manner of determining the difference between the third threshold and the fourth threshold based on the second parameter may include: using the signal quality gain (or a value close to the signal quality gain) that can be obtained by adjusting the channel condition as the difference between the third threshold and the fourth threshold; using the signal quality difference (or a value close to the signal quality difference) between the first information and the paging message as the difference between the third threshold and the fourth threshold; or using a difference between the maximum signal quality that can be received by the terminal device and signal quality of a conventional paging message (or a value close to the difference between the maximum signal quality and the signal quality of the conventional paging message) as the difference between the third threshold and the fourth threshold.

In the foregoing embodiment, after the terminal device measures the signal quality of the serving cell and the neighboring cell, when the signal quality of the serving cell is greater than the third threshold, the terminal device may not monitor the first information and do not perform cell reselection evaluation; when the signal quality of the serving cell is less than the fourth threshold, the terminal device does not monitor the first information but performs cell reselection evaluation; or when the signal quality of the serving cell is less than the third threshold and greater than the fourth threshold, the terminal device monitors the first information but does not trigger cell reselection evaluation. Optionally, in some embodiments, when the signal quality of the serving cell is less than the third threshold and greater than the fourth threshold, in a process of monitoring the first information, if the terminal device detects that a second condition is met, the terminal device may exit a monitoring procedure (that is, stop monitoring the first information), and perform cell reselection evaluation, to ensure normal cell reselection evaluation of the terminal device in a timely manner, thereby ensuring communication performance of the terminal device.

For example, the communication method further includes: when detecting that a second condition is met, stopping monitoring the first information, and performing cell reselection evaluation. It may be understood that this step may be implemented in a process in which the terminal device monitors the first information.

The second condition includes at least one of the following: a duration for which the signal quality of the serving cell is less than the third threshold reaches a second duration, or the received first information is ignored. A size of the second duration is not limited in this application.

For example, after monitoring the first information delivered by the network device (for example, a satellite base station), the terminal device that is paging unreachable may adjust by itself or prompt the user to adjust the channel condition. When the duration for which the signal quality of the serving cell is less than the third threshold reaches the second duration, it may be considered that the terminal device cannot adjust to a good channel condition even after receiving the first information, and the terminal device may be detached from unnecessary monitoring in a timely manner to perform normal cell reselection evaluation.

For example, when the terminal device is located at a cell edge, the signal quality of the serving cell may be less than the third threshold and greater than the fourth threshold. However, even if the terminal device receives the first information, the terminal device cannot adjust to a good channel condition. When the duration for which the signal quality of the serving cell is less than the third threshold reaches the second duration, the terminal device stops monitoring the first information, and performs cell reselection evaluation, so that the terminal device can be detached from unnecessary monitoring in a timely manner at the cost of some cell reselection evaluation delays, to perform normal cell reselection evaluation.

For example, for a case in which the first information is ignored, refer to the descriptions in the foregoing embodiment. Details are not described herein again. When the first information is ignored, it may also be considered that the terminal device may not be able to adjust to a good channel condition. The terminal device may stop monitoring the first information and perform cell reselection evaluation, so that the terminal device can be detached from unnecessary monitoring in a timely manner to perform normal cell reselection evaluation.

It should be noted that the second condition is not limited in this application.

In this embodiment, the second condition may be considered as a back-off condition when the terminal device is in a monitoring state. When it is detected that the second condition is met, monitoring the first information is stopped, and cell reselection evaluation is performed, so that the terminal device can consider the back-off condition in the monitoring state, and can be detached from unnecessary monitoring in a timely manner, to perform normal cell reselection evaluation, thereby ensuring communication performance of the terminal device.

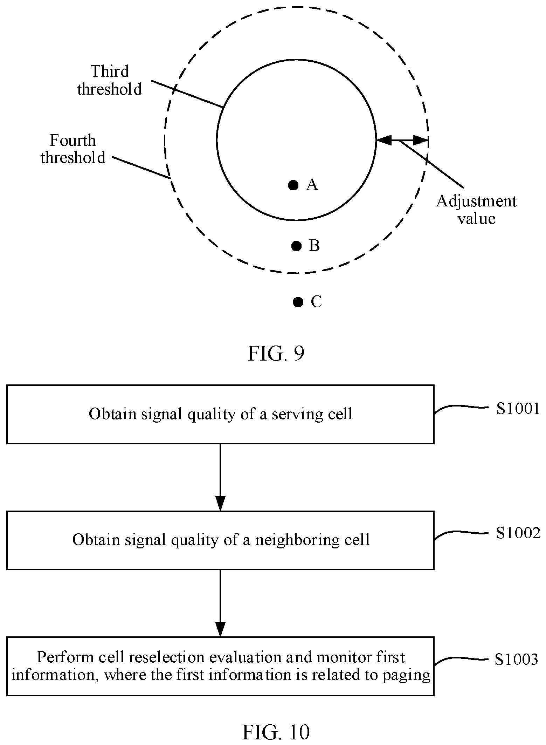

For example, FIG. 9 is another diagram of a monitoring threshold and a principle according to an embodiment of this application. As shown in FIG. 9, the third threshold is greater than the fourth threshold. There is an adjustment value differed between the third threshold and the fourth threshold. For the adjustment value, refer to the foregoing embodiment, and the adjustment value may be determined based on the second parameter. After the terminal device measures the signal quality of the serving cell and the neighboring cell, there may be three possibilities for the signal quality of the serving cell: (1) The signal quality is in a range shown by point A in FIG. 9, that is, greater than the third threshold. (2) The signal quality is in a range shown by point B in FIG. 9, that is, less than the third threshold and greater than the fourth threshold. (3) The signal quality is in a range shown by point C in FIG. 9, that is, less than the fourth threshold. For a case in which the signal quality of the serving cell is equal to the third threshold, refer to the case in which the signal quality is greater than the third threshold or the case in which the signal quality is less than the third threshold and greater than the fourth threshold. For a case in which the signal quality of the serving cell is equal to the fourth threshold, refer to the case in which the signal quality is less than the fourth threshold or the case in which the signal quality is less than the third threshold and greater than the fourth threshold. Details are not described again.

When the signal quality of the serving cell is in the range shown by point A in FIG. 9, that is, greater than the third threshold, the terminal device may not trigger cell reselection evaluation, and does not monitor the first information. When the signal quality of the serving cell is in the range shown by point B in FIG. 9, that is, less than the third threshold and greater than the fourth threshold, the terminal device may not trigger cell reselection evaluation, but start monitoring the first information. When the signal quality of the serving cell is in the range shown by point C in FIG. 9, that is, less than the fourth threshold, the terminal device may normally trigger cell reselection evaluation, and stop monitoring the first information.

When the signal quality of the serving cell is in the range shown by point B in FIG. 9, when detecting that the second condition (refer to the foregoing embodiment) is met, the terminal device may also stop monitoring the first information, and normally trigger cell reselection evaluation.

For example, in a possible scenario, the terminal device may be located in a central area of a current serving area, but is obstructed and is in a paging unreachable state. Compared with a case of reselection to a neighboring cell, in this solution, after the terminal device improves a reception status according to the communication method provided in this application, service quality of the current serving cell needs to be higher than that of the neighboring cell. In addition, due to obstruction, a signal of the neighboring cell may not be for reselection of the terminal device to the neighboring cell. In this application, the first information is preferentially used as a prompt to remind the terminal device to improve the reception status and camp on the current serving cell as much as possible.

The foregoing embodiments separately describe two solutions in which the terminal device monitors the first information. In the first solution, after obtaining/measuring the signal quality of the serving cell, the terminal device determines, based on the signal quality of the serving cell, whether to monitor the first information, and obtains/measures the signal quality of the neighboring cell when not monitoring the first information. In the second solution, after obtaining/measuring the signal quality of the serving cell and the neighboring cell, the terminal device determines, based on the signal quality of the serving cell, whether to monitor the first information, and performs cell reselection evaluation when not monitoring the first information. In some other embodiments, the terminal device may obtain/measure the signal quality of the serving cell and obtain/measure the signal quality of the neighboring cell. After the signal quality of the neighboring cell is obtained/measured, the terminal device may perform cell reselection evaluation while monitoring the first information. Performing cell reselection evaluation may include: determining, based on the signal quality of the neighboring cell and the priority of the neighboring cell, whether the neighboring cell meets a reselection criterion (a cell reselection measurement rule), and based on a determining result, reselecting to a neighboring cell that meets the reselection criterion (that is, performing cell reselection), or not performing cell reselection when the reselection criterion is not met.

For example, FIG. 10 is still another schematic flowchart of a communication method according to an embodiment of this application. As shown in FIG. 10, the communication method may include S1001 to S1003. S1001 to S1003 may be performed by a terminal device or an apparatus (for example, a chip) built in the terminal device. It should be understood that the terminal device in this embodiment of this application may be in an RRC idle state or an RRC inactive state. In addition, the terminal device may normally receive an SSB, and use the SSB for synchronization and measurement.

S1001: Obtain the signal quality of a serving cell.

S1002: Obtain the signal quality of the neighboring cell.

For S1001 and S1002, refer to the processes of measuring the signal quality of the serving cell and the neighboring cell in the foregoing embodiment. Details are not described herein again.

S1003: Perform cell reselection evaluation and monitor first information, where the first information is related to paging.

For example, for a cell reselection evaluation procedure, refer to the foregoing embodiment. Details are not described herein again. In the embodiment shown in FIG. 10, when performing cell reselection evaluation, the terminal device may further enable monitoring the first information. For the first information, a process in which the terminal device monitors the first information, a manner in which the terminal device responds to the monitored first information, and the like, refer to the foregoing embodiments. Details are not described again.

In other words, in the embodiment shown in FIG. 10, a start condition of monitoring the first information may be whether to trigger cell reselection evaluation. The terminal device may simultaneously perform cell reselection evaluation and monitor the first information.

It may be understood that, in a process in which the terminal device performs cell reselection evaluation and monitors the first information, when the terminal device adjusts a channel condition after obtaining the first information through monitoring, so that the channel condition is improved, the terminal device may exit the cell reselection evaluation procedure, and return to the serving cell for camping. Alternatively, the terminal device may reselect a new cell for camping. Alternatively, there may be a case in which no other cell can be camped on and the current serving cell does not meet a camping criterion. In this case, the terminal device may perform cell selection, to select a suitable cell or an acceptable cell for camping.

For example, the suitable cell may be referred to as a "Suitable Cell". If a cell meets the following conditions, the cell is considered as a suitable cell: (1) A public land mobile network (public land mobile network, PLMN) of the cell is a part of a selected PLMN, a registered PLMN, or a PLMN in an equivalent PLMN list. (2) A cell selection criterion is met. (3) Based on latest information provided by a network attached storage (network attached storage, NAS), the cell is not barred, the cell is a part of at least one tracking area (tracking area, TA), and the tracking area does not belong to a list of "tracking areas not allowed for roaming" that meets the above PLMN.

The acceptable cell may be referred to as an "Acceptable Cell". The acceptable cell is a cell in which a terminal device can camp on to obtain limited services, for example, initiating an emergency call and receiving ETWS and CMAS notifications. The acceptable cell meets minimum requirements for initiating an emergency call and receiving ETWS and CMAS notifications in an NR network: The cell is not barred and meets a cell selection criterion.

When the terminal device normally camps on the serving cell, the terminal device is in a normal camping state (which may be defined as a camped normally state). The camped normally state is applicable to terminal devices in an RRC_IDLE state and an RRC_INACTIVE state. When the terminal device is in the camped normally state, the terminal device may perform the following tasks: monitoring a cell paging channel based on information broadcast in the SIB1; monitoring a short message that is transmitted on a physical downlink control channel (physical downlink control channel, PDCCH) and that is scrambled by using a P-RNTI; monitoring related system information; performing necessary measurement for a cell reselection evaluation process; and performing the cell reselection evaluation process in the following scenarios/based on the following triggering: (1) internal triggering of the UE, to meet performance specified in 3GPP TS 38.133; and (2) when information on a broadcast control channel (broadcast control channel, BCCH) for the cell reselection evaluation process is modified.

When the terminal device fails to reselect a suitable cell through cell reselection evaluation, the terminal device may switch from the camped normally state to any cell selection state (which may be defined as an any cell selection state). When the terminal device is in the any cell selection state, the terminal device may perform cell selection. When a suitable cell can be selected through cell selection, the terminal device may camp on the suitable cell, and switch from the any cell selection state to the camped normally state. When no suitable cell is selected during cell selection, the terminal device may select an acceptable cell to camp on, and switch from the any cell selection state to a camping on any cell state (which may be defined as a Camped on Any Cell state).

The any cell selection state is applicable to the RRC_IDLE and RRC_INACTIVE states. In the states, the terminal device needs to perform a cell selection process to find a suitable cell. If no suitable cell is found in a cell selection process after all RATs and all bands supported by the terminal device are fully scanned, the terminal device attempts to find an acceptable cell of any PLMN to camp on, tries all RATs supported by the terminal device, and preferentially searches for a high-quality cell. The terminal device that does not camp on any cell needs to remain in the any cell selection state.

When camping on the acceptable cell, the terminal device may be in an RRC_IDLE state. The terminal device may perform, in the any cell selection state, the following tasks: monitoring a short message that is transmitted on a PDCCH and that is scrambled by using a P-RNTI; monitoring related system information; performing necessary measurement for a cell reselection evaluation process; and triggering to perform the cell reselection evaluation procedure in the following scenarios: (1) internal triggering of the UE, to meet performance specified in 3GPP TS 38.133; (2) when information on a BCCH for the cell reselection evaluation process is modified, periodically attempting to find a suitable cell and trying all frequencies of all RATs supported by the UE. If a suitable cell is found, the UE moves to the camped normally state.

Optionally, when the terminal device has no other cell to camp on and the current serving cell does not meet a camping criterion, the terminal device may continue monitoring the first information during cell selection.

For example, the method may include: The terminal device performs cell reselection evaluation; and performs cell selection when no suitable cell is reselected through cell reselection evaluation, and monitors the first information.

In an implementation, when no suitable cell is reselected through cell reselection evaluation, the terminal device may perform cell selection and monitor the first information on a last serving cell.

For example, when performing cell selection, the terminal device does not camp on the serving cell. The serving cell becomes a previous camped-on cell, or may be referred to as a last serving cell (last serving cell) or a previous serving cell. The terminal device may record the previous camped-on cell, and monitor first information of the previous camped-on cell (the last serving cell).

For example, that no suitable cell is reselected through cell reselection evaluation may be defined as follows: The terminal device fails to reselect a suitable cell after a period of time of cell reselection evaluation. For example, that no suitable cell is reselected through cell reselection evaluation includes: The terminal device performs search and measurement during a third duration, and finds no new suitable cell.

The third duration may be 10 seconds or another duration, and a size of the third duration is not limited. The foregoing period of time (the third duration) being 10 seconds is used as an example. If the UE in the RRC_IDLE state performs search and measurement within 10 seconds by using intra-frequency, inter-frequency, and inter-RAT cell information indicated in a system message, and finds no new suitable cell, the UE may start a cell selection process for a selected PLMN.

In some other implementations, when no suitable cell is reselected through cell reselection evaluation, the terminal device may perform cell selection and monitor the first information in another cell. The another cell may be a nearby cell with good quality, an acceptable cell, or the like.

The last serving cell or the another cell in which the first information is monitored may be referred to as a monitoring cell. Specific implementation of the monitoring cell is not limited in this application.

As described above, in the communication method provided in this embodiment, a network device may send the first information to the terminal device, and the first information is related to paging. After obtaining/measuring the signal quality of the serving cell and the neighboring cell, the terminal device may perform cell reselection evaluation, and may monitor the first information during cell reselection evaluation. The terminal device monitors the first information, and responds to the first information to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may simultaneously perform cell reselection evaluation and monitor the first information. When the first information is preferentially monitored, the terminal device may improve a channel condition, to continue receiving paging in the current serving cell. In the method, the first information may be monitored without changing an existing cell reselection evaluation procedure and cell selection procedure, to continue camping on the current serving cell to receive paging, or return to the last serving cell to receive paging. For example, in a process in which the terminal device performs cell reselection evaluation and monitors the first information, if the terminal device has not reselected a new cell for camping, and adjusts a channel condition after monitoring the first information to improve the channel condition, the terminal device may continue camping on the current serving cell to receive paging; or if the terminal device does not have another cell to camp on and the current serving cell does not meet the camping criterion, when performing cell selection, the terminal device may adjust a channel condition after monitoring the first information to improve the channel condition, to return to the last serving cell to receive paging.

In other words, in this embodiment of this application, when the terminal device is in an environment in which the terminal device is unreachable due to obstruction, and performs cell reselection evaluation, the terminal device has an opportunity to adjust or improve a channel condition of the terminal device by receiving the first information from the network side, so that a service is preferentially received in the current serving cell or the last serving cell.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service in the current serving cell or the last serving cell.

In a possible design, performing cell reselection evaluation and monitoring the first information in the foregoing embodiment may include: performing cell reselection evaluation and monitoring the first information when the signal quality of the serving cell is less than a fifth threshold. The method further includes: performing cell reselection evaluation when the signal quality of the serving cell is greater than the fifth threshold.

The fifth threshold may be understood or defined as a threshold for starting monitoring the first information. For example, when the terminal device performs cell reselection evaluation, the signal quality of the serving cell may be greater than the fifth threshold, or may be less than or equal to the fifth threshold. In this embodiment, when performing cell reselection, the terminal device may determine, based on the signal quality of the serving cell, whether to enable monitoring the first information. For example, when the signal quality of the serving cell is less than the fifth threshold, the first information is monitored.

Similar to the manner of determining a relative value relationship between the signal quality of the serving cell and the first threshold to the fourth threshold, and the like in the foregoing embodiment, in a possible design, that the signal quality of the serving cell is less than the fifth threshold may include that the signal quality of the serving cell is less than the fifth threshold at a current moment; and that the signal quality of the serving cell is greater than the fifth threshold may include that the signal quality of the serving cell is greater than the fifth threshold at the current moment. For example, the current moment may be a moment at which the signal quality of the serving cell is obtained through measurement.

In another possible design, that the signal quality of the serving cell is greater than the fifth threshold may include: The signal quality of the serving cell is greater than the fifth threshold in a period of time before or after a current moment. That the signal quality of the serving cell is less than the fifth threshold may include: The signal quality of the serving cell is less than the fifth threshold in the period of time before or after the current moment. A length of the period of time is not limited. For example, that the signal quality of the serving cell is greater than the fifth threshold means that the signal quality of the serving cell is greater than the fifth threshold in the period of time before the current moment. The current moment may be a moment after the foregoing period of time starting from a moment at which the signal quality of the serving cell is obtained through measurement. Alternatively, for example, that the signal quality of the serving cell is greater than the fifth threshold means that the signal quality of the serving cell is greater than the fifth threshold in the period of time after the current moment. The current moment may be a moment at which the signal quality of the serving cell is obtained through measurement.

In some other possible designs, that the signal quality of the serving cell is greater than the fifth threshold may include: The signal quality of the serving cell is greater than the fifth threshold (or an average value is greater than the fifth threshold) at a plurality of consecutive or non-consecutive time points. That the signal quality of the serving cell is less than the fifth threshold may include: The signal quality of the serving cell is less than the fifth threshold (or the average value is less than the fifth threshold) at a plurality of consecutive or non-consecutive time points. A quantity of time points is not limited.

A manner of determining whether the signal quality of the serving cell is greater than the fifth threshold or less than the fifth threshold is not limited in this application.

Optionally, a manner of determining a relative value relationship between the signal quality of the serving cell and the fifth threshold may be the same as the manner of determining the relative value relationship between the signal quality of the serving cell and the first threshold to the fourth threshold or the like in the foregoing embodiment.

Optionally, when the signal quality of the serving cell is equal to the fifth threshold, cell reselection evaluation may be performed, and the first information may be monitored, or only cell reselection evaluation may be performed, but the first information is not monitored. This is not limited herein.

It should be understood that, in this embodiment of this application, when the signal quality of the serving cell is less than the fifth threshold, in a process in which the terminal device performs cell reselection evaluation and monitors the first information, the signal quality of the serving cell may change, for example, increase to be greater than the fifth threshold. In this case, the terminal device may stop monitoring the first information, and only perform cell reselection evaluation.

A value of the fifth threshold is not limited in this embodiment.

In this embodiment, the case in which the signal quality of the serving cell is greater than the fifth threshold may be considered as a case in which the terminal device cannot normally receive paging even if the channel condition is improved. For example, the terminal device may be located at a cell edge but is not obstructed. When the signal quality of the serving cell is less than the fifth threshold, cell reselection evaluation is performed, and the first information is monitored; and when the signal quality of the serving cell is greater than the fifth threshold, cell reselection evaluation is performed, and monitoring of the first information performed when the signal quality of the serving cell is greater than the fifth threshold can be omitted, so that unnecessary monitoring is reduced.

Optionally, in this embodiment, similar to a condition of monitoring the first information in a cell reselection evaluation phase, when cell selection is performed because no suitable cell is reselected through cell reselection evaluation, if signal quality of a monitored cell (for example, a last serving cell) is less than the fifth threshold, the first information may be monitored in the monitored cell (for example, the last serving cell) while cell selection is performed; and if the signal quality of the monitored cell (for example, the last serving cell) is greater than the fifth threshold, cell selection may be performed, while the first information may not be monitored.

It should be understood that, when the terminal device is in an environment in which the terminal device is unreachable due to obstruction, and performs cell selection, the terminal device has an opportunity to adjust or improve a channel condition of the terminal device by receiving the first information from the network side, so that a service is preferentially received on the last serving cell.

In a possible design, the fifth threshold is predefined, preconfigured, or configured.

For example, in an implementation, a value of the fifth threshold may be preconfigured in hardware and/or software of the terminal device. For example, the values are recorded/written in advance, and may be changed by using software or hardware.

For another example, in another implementation, a value of the fifth threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device.

For another example, in still another implementation, a value of the fifth threshold may be configured by another device (for example, another terminal device) for the terminal device by using PC5-RRC signaling.

For another example, in still another implementation, a value of the fifth threshold does not need to be configured by another device, but may be information predefined (which may be recorded/written in advance) in hardware and/or software of the terminal device, or may be understood as being unable to be changed by the network device or another terminal device. In other words, the fifth threshold may be predefined in the terminal device in a standard or a protocol.

The implementations of the fifth threshold are not limited in this application.

Optionally, in some embodiments, the value of the fifth threshold may be set according to a rule on a network side. A setting rule is not limited herein.

In some other embodiments, the fifth threshold may be determined based on a third value, and the third value is an S-criterion threshold or another defined value.

In some examples, the value of the fifth threshold may be an S-criterion threshold or another defined value.

In some other examples, the value of the fifth threshold may also be a value obtained by adjusting the third value. For example, the value of the fifth threshold may be a value obtained by increasing or decreasing the S-criterion threshold or another defined value.

In a possible design, performing cell reselection evaluation and monitoring the first information when the signal quality of the serving cell is less than the fifth threshold in the foregoing embodiment may include: performing cell reselection evaluation and monitoring the first information when the signal quality of the serving cell is less than the fifth threshold and greater than a sixth threshold. The method further includes: performing cell reselection evaluation when the signal quality of the serving cell is less than the sixth threshold.

Similar to the manner of determining a relative value relationship between the signal quality of the serving cell and the first threshold to the fifth threshold, and the like in the foregoing embodiment, in a possible design, that the signal quality of the serving cell is less than the sixth threshold may include that the signal quality of the serving cell is less than the sixth threshold at a current moment; and that the signal quality of the serving cell is greater than the sixth threshold may include that the signal quality of the serving cell is greater than the sixth threshold at the current moment. For example, the current moment may be a moment at which the signal quality of the serving cell is obtained through measurement.

In another possible design, that the signal quality of the serving cell is greater than the sixth threshold may include: The signal quality of the serving cell is greater than the sixth threshold in a period of time before or after a current moment. That the signal quality of the serving cell is less than the sixth threshold may include: The signal quality of the serving cell is less than the sixth threshold in the period of time before or after the current moment. A length of the period of time is not limited. For example, that the signal quality of the serving cell is greater than the sixth threshold means that the signal quality of the serving cell is greater than the sixth threshold in the period of time before the current moment. The current moment may be a moment after the foregoing period of time starting from a moment at which the signal quality of the serving cell is obtained through measurement. Alternatively, for example, that the signal quality of the serving cell is greater than the sixth threshold means that the signal quality of the serving cell is greater than the sixth threshold in the period of time after the current moment. The current moment may be a moment at which the signal quality of the serving cell is obtained through measurement.

In some other possible designs, that the signal quality of the serving cell is greater than the sixth threshold may include: The signal quality of the serving cell is greater than the sixth threshold (or an average value is greater than the sixth threshold) at a plurality of consecutive or non-consecutive time points. That the signal quality of the serving cell is less than the sixth threshold may include: The signal quality of the serving cell is less than the sixth threshold (or the average value is less than the sixth threshold) at a plurality of consecutive or non-consecutive time points. A quantity of time points is not limited.

A manner of determining whether the signal quality of the serving cell is greater than the sixth threshold or less than the sixth threshold is not limited in this application.

Optionally, a manner of determining a relative value relationship between the signal quality of the serving cell and the sixth threshold may be the same as the manner of determining the relative value relationship between the signal quality of the serving cell and the first threshold to the fifth threshold or the like in the foregoing embodiment.

Optionally, when the signal quality of the serving cell is equal to the sixth threshold, cell reselection evaluation may be performed, and the first information may be monitored, or only cell reselection evaluation may be performed, but the first information is not monitored. This is not limited herein.

For example, in this design, the sixth threshold may be set for stopping monitoring the first information. The terminal device may monitor the first information when the signal quality of the serving cell is less than the fifth threshold and greater than the sixth threshold. When the signal quality of the serving cell is less than the sixth threshold, it may be considered that the first information is also unreachable, or when the terminal device cannot receive paging even if the terminal device improves the channel condition, the terminal device may not monitor the first information, but only perform cell reselection evaluation, thereby reducing power consumption of monitoring the first information.

In other words, in this design, a stop condition of monitoring the first information may be set based on the sixth threshold. For example, the stop/end condition of monitoring the first information is that the signal quality of the serving cell is less than the sixth threshold.

In this design, when the signal quality of the serving cell is less than the sixth threshold, the terminal device may not monitor the first information, but only perform cell reselection evaluation, thereby reducing power consumption of monitoring the first information, or reducing power consumption caused by unnecessary monitoring.

It should be understood that in this design, after the terminal device measures the signal quality of the serving cell and the neighboring cell, an action performed may include: monitoring the first information and performing cell reselection evaluation. In the communication method, when the terminal device simultaneously monitors the first information and performs cell reselection evaluation, the signal quality of the serving cell is less than the fifth threshold and greater than the sixth threshold (for a case in which the signal quality is equal to the fifth threshold, refer to the foregoing descriptions); and when the terminal device only performs cell reselection evaluation, the signal quality of the serving cell is less than the sixth threshold or greater than the fifth threshold.

Optionally, in this design, similar to a condition of monitoring the first information in a cell reselection evaluation phase, when cell selection is performed because no suitable cell is reselected through cell reselection evaluation, if signal quality of a last serving cell is less than the fifth threshold and greater than the sixth threshold, the first information may be monitored on the last serving cell while cell selection is performed; and if the signal quality of the last serving cell is greater than the fifth threshold or less than the sixth threshold, cell selection may be performed, while the first information may not be monitored.

Alternatively, in some other possible designs, when cell selection is performed because no suitable cell is reselected through cell reselection evaluation, for a start condition and a stop condition of monitoring the first information in the cell selection phase, refer to descriptions in the following embodiment, for example, monitoring the first information is started when cell selection is triggered; or when a suitable cell is selected through cell selection, when the received first information is ignored, or when signal quality of a last serving cell is less than a seventh threshold, monitoring the first information is stopped. For details, refer to the following descriptions. Details are not described herein.

In a possible design, the sixth threshold may be predefined, preconfigured, or configured. Alternatively, a difference between the fifth threshold and the sixth threshold may be predefined, preconfigured, or configured.

For example, in an implementation, a value of the sixth threshold may be preconfigured in hardware and/or software of the terminal device. For example, the values are recorded/written in advance, and may be changed by using software or hardware. Alternatively, a value of the difference between the fifth threshold and the sixth threshold may be preconfigured in hardware and/or software of the terminal device.

For another example, in another implementation, a value of the sixth threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device. Alternatively, a value of the difference between the fifth threshold and the sixth threshold may be configured by the network device (for example, a base station) for the terminal device by using a system information block (system information block, SIB) message, radio resource control (radio resource control, RRC) signaling, or a master information block (master information block, MIB) message.

For another example, in still another implementation, the sixth threshold may be configured by another device (for example, another terminal device) for the terminal device by using PC5-RRC signaling. Alternatively, the difference between the fifth threshold and the sixth threshold may be configured by another device (for example, another terminal device) for the terminal device by using PC5-RRC signaling.

For another example, in still another implementation, a value of the sixth threshold does not need to be configured by another device, but may be information predefined (which may be recorded/written in advance) in hardware and/or software of the terminal device, or may be understood as being unable to be changed by the network device or another terminal device. In other words, the sixth threshold may be predefined in the terminal device in a standard or a protocol. Alternatively, the difference between the fifth threshold and the sixth threshold may be predefined in the terminal device in a standard or protocol.

The implementations of the sixth threshold and the difference between the fifth threshold and the sixth threshold are not limited in this application.

It may be understood that when the difference between the fifth threshold and the sixth threshold is predefined, preconfigured, or configured, the terminal device may determine the sixth threshold based on the fifth threshold and the difference between the fifth threshold and the sixth threshold.

Optionally, in this embodiment of this application, the difference between the fifth threshold and the sixth threshold may be determined based on a third parameter. The third parameter includes at least one of the following: a signal quality gain obtainable by adjusting a channel condition; a signal quality difference between the first information and a paging message; or maximum signal quality that can be received.

Implementation of the third parameter is similar to that of the first parameter or the second parameter. Refer to the first parameter. Details are not described herein again.

For example, a manner of determining the difference between the fifth threshold and the sixth threshold based on the third parameter may include: using the signal quality gain (or a value close to the signal quality gain) that can be obtained by adjusting the channel condition as the difference between the fifth threshold and the sixth threshold; using the signal quality difference (or a value close to the signal quality difference) between the first information and the paging message as the difference between the fifth threshold and the sixth threshold; or using a difference between the maximum signal quality that can be received by the terminal device and signal quality of a conventional paging message (or a value close to the difference between the maximum signal quality and the signal quality of the conventional paging message) as the difference between the fifth threshold and the sixth threshold.

In the foregoing embodiment, after measuring the signal quality of the serving cell and the neighboring cell, the terminal device may perform cell reselection evaluation, and monitor the first information. Alternatively, the terminal device may perform cell reselection evaluation when the signal quality of the serving cell is greater than the fifth threshold or less than the sixth threshold; or perform cell reselection evaluation and monitor the first information when the signal quality of the serving cell is less than the fifth threshold and greater than the sixth threshold. Optionally, in some embodiments, in a process in which the terminal device performs cell reselection evaluation and monitors the first information, if it is detected that a third condition is met, the terminal device may exit a monitoring procedure (that is, stop monitoring the first information), to ensure communication performance of the terminal device.

For example, the communication method further includes: when detecting that the third condition is met, stopping monitoring the first information. It may be understood that this step may be implemented in a process in which the terminal device monitors the first information.

The third condition includes at least one of the following: a suitable cell is selected through cell reselection or cell selection, or the received first information is ignored.

For example, for a specific meaning of cell reselection or cell selection to a suitable cell, refer to the descriptions in the foregoing embodiment. Details are not described herein again. For example, cell reselection to a suitable cell means that a neighboring cell meeting a reselection criterion is determined in the cell reselection evaluation procedure, and cell reselection is performed to reselect the neighboring cell. For a case in which the first information is ignored, also refer to the descriptions in the foregoing embodiment. Details are not described herein again. When the first information is ignored, it may also be considered that the terminal device may not be able to adjust to a good channel condition. The terminal device may stop monitoring the first information, so that the terminal device can be detached from unnecessary monitoring in a timely manner.

It should be noted that the third condition is not limited in this application.

In this embodiment, the third condition may be considered as a back-off condition when the terminal device is in a monitoring state. When it is detected that the third condition is met, monitoring the first information is stopped, so that the terminal device can consider the back-off condition in the monitoring state, and can be detached from unnecessary monitoring in a timely manner, thereby ensuring communication performance of the terminal device.

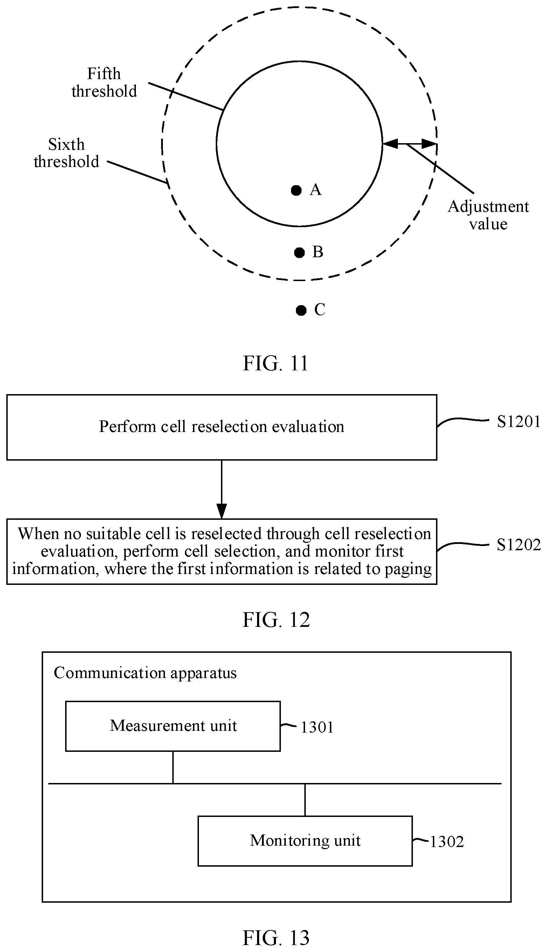

For example, FIG. 11 is still another diagram of a monitoring threshold and a principle according to an embodiment of this application. As shown in FIG. 11, the fifth threshold is greater than the sixth threshold. There is an adjustment value differed between the fifth threshold and the sixth threshold. For the adjustment value, refer to the foregoing embodiment, and the adjustment value may be determined based on the third parameter. After measuring the signal quality of the serving cell and the neighboring cell, the terminal device may perform cell reselection evaluation. When the terminal device performs cell reselection evaluation, there may be three possibilities for the signal quality of the serving cell: (1) The signal quality is in a range shown by point A in FIG. 11, that is, greater than the fifth threshold. (2) The signal quality is in a range shown by point B in FIG. 11, that is, less than the fifth threshold and greater than the sixth threshold. (3) The signal quality is in a range shown by point C in FIG. 11, that is, less than the sixth threshold. For a case in which the signal quality of the serving cell is equal to the fifth threshold, refer to the case in which the signal quality is greater than the fifth threshold or the case in which the signal quality is less than the fifth threshold and greater than the sixth threshold. For a case in which the signal quality of the serving cell is equal to the sixth threshold, refer to the case in which the signal quality is less than the sixth threshold or the case in which the signal quality is less than the fifth threshold and greater than the sixth threshold. Details are not described again.

When the signal quality of the serving cell is in the range shown by point A in FIG. 11, that is, greater than the fifth threshold, the terminal device may perform cell reselection evaluation, but does not monitor the first information. When the signal quality of the serving cell is in the range shown by point B in FIG. 11, that is, less than the fifth threshold and greater than the sixth threshold, the terminal device may perform cell reselection evaluation, and monitor the first information. When the signal quality of the serving cell is in the range shown by point C in FIG. 11, that is, less than the sixth threshold, the terminal device may perform cell reselection evaluation, and stop monitoring the first information.

When the signal quality of the serving cell is in the range shown by point B in FIG. 11, when detecting that the third condition (refer to the foregoing embodiment) is met, the terminal device may also stop monitoring the first information.

For example, in a possible scenario, the terminal device may be located in a central area of a current serving area, but is obstructed and is in a paging unreachable state. Compared with a case of reselection to a neighboring cell, in this solution, after the terminal device improves a reception status according to the communication method provided in this application, service quality of the current serving cell needs to be higher than that of the neighboring cell. In addition, due to obstruction, a signal of the neighboring cell may not be for reselection of the terminal device to the neighboring cell. In this application, the first information is preferentially used as a prompt to remind the terminal device to improve the reception status and camp on the current serving cell as much as possible.

The foregoing embodiments separately describe three solutions in which the terminal device monitors the first information. In the first solution, after obtaining/measuring the signal quality of the serving cell, the terminal device determines, based on the signal quality of the serving cell, whether to monitor the first information, and obtains/measures the signal quality of the neighboring cell when not monitoring the first information. In the second solution, after obtaining/measuring the signal quality of the serving cell and the neighboring cell, the terminal device determines, based on the signal quality of the serving cell, whether to monitor the first information, and performs cell reselection evaluation when not monitoring the first information. In the third solution, after obtaining/measuring the signal quality of the serving cell and the neighboring cell, the terminal device performs cell reselection evaluation while monitoring the first information. In some other embodiments, after measuring the signal quality of the serving cell and the neighboring cell, the terminal device may perform cell reselection evaluation; and when failing to reselect a suitable cell, the terminal device performs cell selection, and monitors the first information, where the first information is related to paging.

For example, FIG. 12 is still another schematic flowchart of a communication method according to an embodiment of this application. As shown in FIG. 12, the communication method may include S1201 and S1202. S1201 and S1202 may be performed by a terminal device or an apparatus (for example, a chip) built in the terminal device. It should be understood that the terminal device in this embodiment of this application may be in an RRC idle state or an RRC inactive state. In addition, the terminal device may normally receive an SSB, and use the SSB for synchronization and measurement.

S1201: Perform cell reselection evaluation.

For example, before performing S1201, the terminal device may measure signal quality of a serving cell and signal quality of a neighboring cell. S1201 may include: determining, based on the signal quality of the neighboring cell and a priority of the neighboring cell, whether the neighboring cell meets a reselection criterion, and based on a determining result, reselecting to a neighboring cell that meets the reselection criterion (that is, performing cell reselection), or not performing cell reselection when the reselection criterion is not met, for example, performing cell selection when no suitable cell is reselected. For a process of measuring the signal quality of the serving cell and the neighboring cell and a specific process of cell reselection evaluation, refer to the foregoing embodiments. Details are not described herein again.

As described in the foregoing embodiments, the cell reselection in S1201 may have the following results: A suitable cell is reselected through cell reselection; or when no suitable cell is reselected through cell reselection, cell selection is performed. In this embodiment, the procedure shown in FIG. 12 is applicable to a case in which cell selection is performed when no suitable cell is reselected through cell reselection.

S1202: When no suitable cell is reselected through cell reselection evaluation, perform cell selection, and monitor first information, where the first information is related to paging.

For example, that no suitable cell is reselected through cell reselection evaluation may be defined as follows: The terminal device fails to reselect a suitable cell after a period of time of cell reselection evaluation. For example, that no suitable cell is reselected through cell reselection evaluation includes: The terminal device performs search and measurement during a third duration, and finds no new suitable cell.

The third duration may be 10 seconds or another duration, and a size of the third duration is not limited. The foregoing period of time (the third duration) being 10 seconds is used as an example. If the UE in the RRC_IDLE state performs search and measurement within 10 seconds by using intra-frequency, inter-frequency, and inter-RAT cell information indicated in a system message, and finds no new suitable cell, the UE may start a cell selection process for a selected PLMN.

For example, when failing to reselect a suitable cell through cell reselection, the terminal device may further enable monitoring the first information while performing cell selection. For the first information, a process in which the terminal device monitors the first information, a manner in which the terminal device responds to the monitored first information, and the like, refer to the foregoing embodiments. Details are not described again.

For a cell selection process, refer to the descriptions in the embodiment related to FIG. 10. Details are not described again.

In other words, in the embodiment shown in FIG. 12, a start condition of monitoring the first information may be whether to trigger cell selection. The terminal device may simultaneously perform cell selection and monitor the first information.

It may be understood that, in a process in which the terminal device performs cell selection and monitors the first information, when the terminal device adjusts a channel condition after obtaining the first information through monitoring, so that the channel condition is improved, the terminal device may exit the cell selection procedure, and return to a last serving cell for camping. Alternatively, the terminal device may select a suitable cell to camp on. Alternatively, the terminal device may select an acceptable cell to camp on.

In an implementation, when no suitable cell is reselected through cell reselection evaluation, the terminal device may perform cell selection and monitor the first information on a last serving cell.

For example, when performing cell selection, the terminal device does not camp on the serving cell. The serving cell becomes a previous camped-on cell, or may be referred to as a last serving cell (last serving cell) or a previous serving cell. The terminal device may record the previous camped-on cell, and monitor first information of the previous camped-on cell (the last serving cell).

For example, if the UE performs cell reselection evaluation but fails to reselect or camp on any suitable cell, that is, is in an any cell selection state, the UE is to perform cell selection and monitor the first information on the last serving cell (last serving cell).

In some other implementations, when no suitable cell is reselected through cell reselection evaluation, the terminal device may perform cell selection and monitor the first information in another cell. The another cell may be a nearby cell with good quality, an acceptable cell, or the like.

The last serving cell or the another cell in which the first information is monitored may be referred to as a monitoring cell. Specific implementation of the monitoring cell is not limited in this application.

As described above, in the communication method provided in this embodiment, a network device may send the first information to the terminal device, and the first information is related to paging. When no suitable cell is reselected through cell reselection evaluation, the terminal device may perform cell selection and monitor the first information. The terminal device monitors the first information, and responds to the first information to improve a channel condition, so that communication performance of receiving a paging message by the terminal device can be improved. For example, in a scenario in which a channel condition is poor due to obstruction, the terminal device may monitor the first information and respond to the first information, so that the terminal device changes from an original paging unreachable state to a paging reachable state.

In addition, in the communication method, when SSB quality of the serving cell is poor, the terminal device may simultaneously perform cell selection and monitor the first information. When the first information is preferentially monitored, the terminal device may improve a channel condition, to return to the last serving cell to receive paging. In the method, the first information may be monitored without changing an existing cell selection procedure, to return to camp on a cell on which the terminal device camps last time to receive paging.

In other words, in this embodiment of this application, when the terminal device is in an environment in which the terminal device is unreachable due to obstruction, and performs cell selection, the terminal device has an opportunity to adjust or improve a channel condition of the terminal device by receiving the first information from the network side, to return to a cell on which the terminal device camps last time to receive a service.

For example, in an NTN scenario, when the terminal device is paged in an environment in which the terminal device is located at a non-cell edge but a channel condition of the current serving cell is poor due to obstruction, a satellite base station can prompt, by using a stronger pre-prompt signal, the terminal device to improve the channel condition, so that the terminal device continues obtaining a normal service, for example, returns to the last serving cell to receive paging.

In the embodiment shown in FIG. 12, when no suitable cell is reselected through cell reselection evaluation, the terminal device may perform cell selection and monitor the first information of the last serving cell. Optionally, in some embodiments, in a process in which the terminal device performs cell selection and monitors the first information, if it is detected that a fourth condition is met, the terminal device may exit a monitoring procedure (that is, stop monitoring the first information), to ensure communication performance of the terminal device.

For example, the communication method further includes: when detecting that the fourth condition is met, stopping monitoring the first information. It may be understood that this step may be implemented in a process in which the terminal device monitors the first information.

The fourth condition includes at least one of the following: a suitable cell is selected through cell selection, the received first information is ignored, or signal quality of a monitored cell (for example, the last serving cell, and the following uses an example in which the first information is monitored on the last serving cell) is less than a seventh threshold.

For example, for a specific meaning of cell selection to a suitable cell, refer to the descriptions in the foregoing embodiment. Details are not described herein again. For a case in which the first information is ignored, also refer to the descriptions in the foregoing embodiment. Details are not described herein again. When the first information is ignored, it may also be considered that the terminal device may not be able to adjust to a good channel condition. The terminal device may stop monitoring the first information, so that the terminal device can be detached from unnecessary monitoring in a timely manner.

Optionally, when the signal quality of the last serving cell is equal to the seventh threshold, monitoring of the first information may be stopped, or monitoring of the first information may continue. This is not limited herein. The seventh threshold may be used as a threshold for stopping monitoring the first information. When the signal quality of the last serving cell is less than the seventh threshold, the terminal device may consider that the first information is also unreachable, or when the terminal device cannot receive paging even if the terminal device improves the channel condition, the terminal device may not monitor the first information, thereby reducing power consumption of monitoring the first information.

In other words, in this embodiment, a stop condition of monitoring the first information may be set based on the seventh threshold. For example, the stop/end condition of monitoring the first information is that the signal quality of the last serving cell is less than the seventh threshold.

Similar to the manner of determining a relative value relationship between the signal quality of the serving cell and the first threshold to the sixth threshold, and the like in the foregoing embodiment, in a possible design, that the signal quality of the last serving cell is less than the seventh threshold may include that the signal quality of the last serving cell is less than the seventh threshold at a current moment; and that the signal quality of the last serving cell is greater than the seventh threshold may include that the signal quality of the last serving cell is greater than the seventh threshold at the current moment. For example, the current moment may be a moment at which the signal quality of the serving cell is obtained through measurement.

In another possible design, that the signal quality of the last serving cell is greater than the seventh threshold may include: The signal quality of the last serving cell is greater than the seventh threshold in a period of time before or after a current moment. That the signal quality of the last serving cell is less than the seventh threshold may include: The signal quality of the last serving cell is less than the seventh threshold in the period of time before or after the current moment. A length of the period of time is not limited. For example, that the signal quality of the last serving cell is greater than the seventh threshold means that the signal quality of the last serving cell is greater than the seventh threshold in the period of time before the current moment. The current moment may be a moment after the foregoing period of time starting from a moment at which the signal quality of the serving cell is obtained through measurement. Alternatively, for example, that the signal quality of the last serving cell is greater than the seventh threshold means that the signal quality of the last serving cell is greater than the seventh threshold in the period of time after the current moment. The current moment may be a moment at which the signal quality of the serving cell is obtained through measurement.

In some other possible designs, that the signal quality of the last serving cell is greater than the seventh threshold may include: The signal quality of the last serving cell is greater than the seventh threshold (or an average value is greater than the seventh threshold) at a plurality of consecutive or non-consecutive time points. That the signal quality of the last serving cell is less than the seventh threshold may include: The signal quality of the last serving cell is less than the seventh threshold (or the average value is less than the seventh threshold) at a plurality of consecutive or non-consecutive time points. A quantity of time points is not limited.

A manner of determining whether the signal quality of the last serving cell is greater than the seventh threshold or less than the seventh threshold is not limited in this application.

Optionally, a manner of determining a relative value relationship between the signal quality of the last serving cell and the seventh threshold may be the same as the manner of determining the relative value relationship between the signal quality of the serving cell and the first threshold to the sixth threshold or the like in the foregoing embodiment.

In this embodiment, the third condition may be considered as a back-off condition when the terminal device is in a monitoring state. When it is detected that the third condition is met, monitoring the first information is stopped, so that the terminal device can consider the back-off condition in the monitoring state, and can be detached from unnecessary monitoring in a timely manner, thereby ensuring communication performance of the terminal device. For example, when detecting that the fourth condition is met, the terminal device stops monitoring the first information, so that power consumption of monitoring the first information is reduced, or power consumption caused by unnecessary monitoring is reduced.

It should be understood that in the communication method, when the terminal device simultaneously monitors the first information and performs cell selection, the terminal device fails to reselect a suitable cell during cell reselection.

It should be noted that the fourth condition is not limited in this application.

In a possible design, the seventh threshold is predefined, preconfigured, or configured.

For example, in an implementation, a value of the seventh threshold may be preconfigured in hardware and/or software of the terminal device. For example, the values are recorded/written in advance, and may be changed by using software or hardware.

For another example, in another implementation, a value of the seventh threshold may be configured by the network device (for example, a base station) for the terminal device by using a system information block (system information block, SIB) message, radio resource control (radio resource control, RRC) signaling, or a master information block (master information block, MIB) message, for example, recorded/written in hardware and/or software of the terminal device.

For another example, in still another implementation, a value of the seventh threshold may be configured by another device (for example, another terminal device) for the terminal device by using PC5-RRC signaling.

For another example, in still another implementation, a value of the seventh threshold does not need to be configured by another device, but may be information predefined (which may be recorded/written in advance) in hardware and/or software of the terminal device, or may be understood as being unable to be changed by the network device or another terminal device. In other words, the seventh threshold may be predefined in the terminal device in a standard or a protocol.

The implementations of the seventh threshold are not limited in this application.

Optionally, in some embodiments, the value of the seventh threshold may be set according to a rule on a network side. A setting rule is not limited herein.

In some other embodiments, the seventh threshold may be determined based on a fourth value, and the fourth value is an S-criterion threshold or another defined value.

In some examples, the value of the seventh threshold may be a value obtained by decreasing the S-criterion threshold or another defined value by a specific adjustment value.

In some other examples, a value of the seventh threshold may alternatively be the fourth value or a value greater than the fourth value. This is not limited herein.

Optionally, in this embodiment of this application, the seventh threshold may be less than the fourth value, and a difference between the seventh threshold and the fourth value is determined based on a fourth parameter. The fourth parameter includes at least one of the following: a signal quality gain obtainable by adjusting a channel condition; a signal quality difference between the first information and a paging message; or maximum signal quality that can be received.

Implementation of the fourth parameter is similar to that of the first parameter, the second parameter, or the third parameter. For example, refer to the first parameter. Details are not described herein again.

For example, a manner of determining the difference between the seventh threshold and the fourth value based on the fourth parameter may include: using the signal quality gain (or a value close to the signal quality gain) that can be obtained by adjusting the channel condition as the difference between the seventh threshold and the fourth value; using the signal quality difference (or a value close to the signal quality difference) between the first information and the paging message as the difference between the seventh threshold and the fourth value; or using a difference between the maximum signal quality that can be received by the terminal device and signal quality of a conventional paging message (or a value close to the difference between the maximum signal quality and the signal quality of the conventional paging message) as the difference between the seventh threshold and the fourth value.

Optionally, in this embodiment, when the terminal device in a cell selection and pre-prompt monitoring state (that is, a state of monitoring the first information) finds an acceptable cell, the terminal device may ignore the acceptable cell and does not camp on the acceptable cell, for example, continue searching for a suitable cell and monitor the first information.

Based on the foregoing embodiments, this embodiment of this application may provide at least four solutions of monitoring the first information. After measuring the signal quality of the serving cell, the terminal device determines, based on the signal quality of the serving cell, whether to monitor the first information, and measures the signal quality of the neighboring cell when the terminal device does not monitor the first information. This may be referred to as a solution 1. After measuring the signal quality of the serving cell and the neighboring cell, the terminal device determines, based on the signal quality of the serving cell, whether to monitor the first information, and performs cell reselection evaluation when not monitoring the first information. This may be referred to as a solution 2. After measuring the signal quality of the serving cell and the neighboring cell, the terminal device performs cell reselection evaluation while monitoring the first information. This may be referred to as a solution 3. The terminal device performs cell reselection evaluation, performs cell selection when the terminal device fails to reselect a suitable cell through cell reselection evaluation, and monitors the first information of the last serving cell. This may be referred to as a solution 4.

In each of the solutions 1 to 4, for a scenario in which a channel condition is poor due to obstruction of the terminal device, the first information may be used to prompt the terminal device to improve the channel condition, so that the terminal device changes from originally paging unreachable to paging reachable, or the terminal device can continue camping on the current serving cell or the last serving cell to receive a service.

Optionally, in some other embodiments, in the foregoing solution 1 to solution 4, embodiments related to some solutions may be combined to implement more embodiments.

For example, the embodiment related to the foregoing solution 1 and the embodiment related to the foregoing solution 2 may be implemented in combination. For example, after measuring the signal quality of the serving cell, the terminal device may determine, based on the signal quality of the serving cell, whether to monitor the first information, and measure the signal quality of the neighboring cell when the first information is not measured. After measuring the signal quality of the neighboring cell, the terminal device may further determine, based on the signal quality of the serving cell, whether to monitor the first information, and perform cell reselection evaluation when the first information is not measured.

For another example, the embodiment related to the foregoing solution 1 and the embodiment related to the foregoing solution 3 may be implemented in combination. For example, after measuring the signal quality of the serving cell, the terminal device may determine, based on the signal quality of the serving cell, whether to monitor the first information, and measure the signal quality of the neighboring cell when the first information is not measured. After measuring the signal quality of the neighboring cell, the terminal device performs cell reselection evaluation while monitoring the first information.

For another example, the embodiment related to the foregoing solution 1 and the embodiment related to the foregoing solution 4 may be implemented in combination. For example, after measuring the signal quality of the serving cell, the terminal device may determine, based on the signal quality of the serving cell, whether to monitor the first information, and measure the signal quality of the neighboring cell when the first information is not measured. After measuring the signal quality of the neighboring cell, the terminal device performs cell reselection evaluation; and performs cell selection when no suitable cell is reselected through cell reselection evaluation, and monitors the first information on the last serving cell.

Similarly, the embodiment related to the foregoing solution 2 and the embodiment related to the foregoing solution 4 may also be combined for implementation, the embodiment related to the foregoing solution 1, the embodiment related to the foregoing solution 3, and the embodiment related to the foregoing solution 4 may be combined for implementation, or the like. Details are not listed herein in this application.

Optionally, a solution (for example, one of the foregoing solutions 1 to 4 or a combination of some of the foregoing solutions) used by the terminal device to monitor the first information may be preconfigured or defined, or may be indicated by the network device to the terminal device.

For example, in some embodiments, the method may further include: The terminal device receives indication information from the network device (for example, a base station), where the indication information indicates the terminal device to monitor the first information by using a target solution. The target solution may be one of the foregoing solutions 1 to 4 or a combination of some solutions.

Optionally, in this embodiment of this application, the network device may send a paging message again after sending the first information or in a gap of sending the first information. After adjusting the channel condition, the terminal device may monitor the paging message. When the network device does not receive a response from the terminal device after paging the terminal device or re-sending the paging message for a specific period of time, the network device may stop sending the first information.

Optionally, in this embodiment of this application, after the terminal device performs cell reselection or cell selection, the serving cell on which the terminal device previously camps may be referred to as an old cell, a source cell, or a previous camped cell. A cell on which the terminal device newly camps after performing cell reselection or cell selection may be referred to as a new cell, a target cell, or a new camped cell.

It should be understood that in the foregoing embodiments, the terminal device and/or the network device may perform a part or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

It may be understood that, to implement the foregoing functions, the network elements in the foregoing embodiments, such as the terminal device and the network device, include corresponding hardware structures and/or software modules for performing the functions.

For example, an embodiment of this application may provide a communication apparatus configured to implement a function of the foregoing terminal device. The communication apparatus may be a terminal device, or may be an apparatus (for example, a chip) built in the terminal device. FIG. 13 is a diagram of a structure of a communication apparatus according to an embodiment of this application. As shown in FIG. 13, the communication apparatus may include a measurement unit 1301 and a monitoring unit 1302.

The measurement unit 1301 is configured to obtain signal quality of a serving cell.

The monitoring unit 1302 is configured to monitor first information when the signal quality of the serving cell is greater than a second threshold, where the first information is related to paging.

The measurement unit 1301 is further configured to obtain signal quality of a neighboring cell when the signal quality of the serving cell is less than the second threshold.

In a possible design, the monitoring unit 1302 is specifically configured to monitor the first information when the signal quality of the serving cell is less than a first threshold and greater than the second threshold.

In a possible design, the first threshold is related to a priority of the neighboring cell.

In a possible design, when the neighboring cell includes only a neighboring cell having a priority lower than that of the serving cell, the first threshold is determined based on an inter-frequency or inter-RAT measurement initiation threshold; when the neighboring cell includes only a neighboring cell having a priority the same as that of the serving cell, the first threshold is determined based on an intra-frequency measurement initiation threshold; when the neighboring cell includes only a neighboring cell having a priority higher than that of the serving cell, the first threshold is determined based on a first value, where the first value is an inter-frequency or inter-RAT measurement initiation threshold or another defined value; when the neighboring cell includes only the neighboring cell having a priority lower than that of the serving cell and the neighboring cell having a priority the same as that of the serving cell, the first threshold is determined based on a larger value of the inter-frequency or inter-RAT measurement initiation threshold and the intra-frequency measurement initiation threshold; when the neighboring cell includes only the neighboring cell having a priority lower than that of the serving cell and the neighboring cell having a priority higher than that of the serving cell, the first threshold is determined based on a larger value of the inter-frequency or inter-RAT measurement initiation threshold and the first value; when the neighboring cell includes only the neighboring cell having a priority the same as that of the serving cell and the neighboring cell having a priority higher than that of the serving cell, the first threshold is determined based on a larger value of the intra-frequency measurement initiation threshold and the first value; or when the neighboring cell includes the neighboring cell having a priority lower than that of the serving cell, the neighboring cell having a priority the same as that of the serving cell, and the neighboring cell having a priority higher than that of the serving cell, the first threshold is determined based on a largest value of the inter-frequency or inter-RAT measurement initiation threshold, the intra-frequency measurement initiation threshold, and the first value.

In a possible design, a difference between the first threshold and the second threshold is determined based on a first parameter. The first parameter includes at least one of the following: a signal quality gain obtainable by adjusting a channel condition; a signal quality difference between the first information and a paging message; or maximum signal quality that can be received.

In a possible design, the monitoring unit 1302 is further configured to: when detecting that a first condition is met, stop monitoring the first information; and the measurement unit 1301 is further configured to obtain the signal quality of the neighboring cell after monitoring the first information is stopped, where
the first condition includes at least one of the following: a duration for which the signal quality of the serving cell is less than the first threshold reaches a first duration, or the received first information is ignored.

Optionally, the communication apparatus shown in FIG. 13 may further include a sending unit to implement a sending function, and include a receiving unit to implement a receiving function.

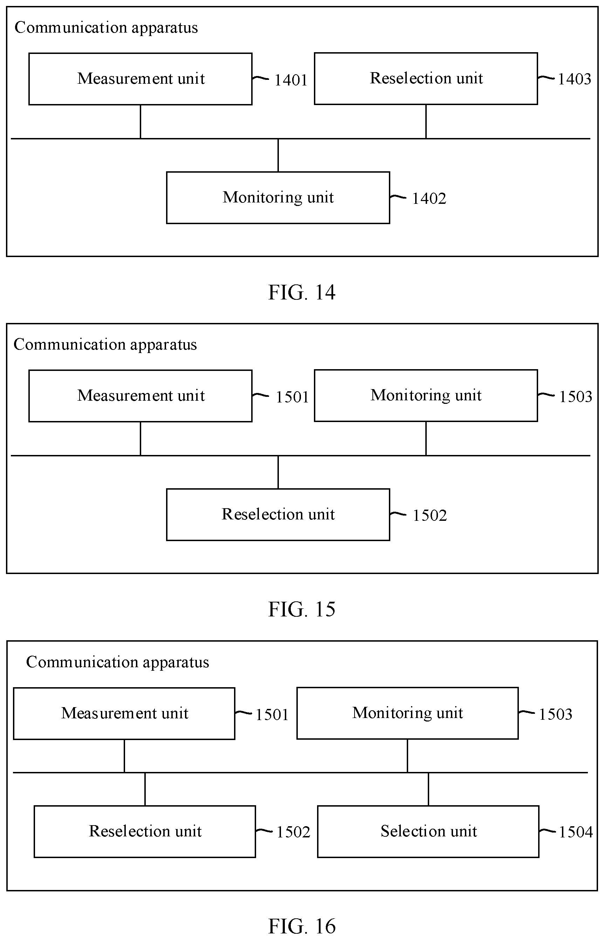

For another example, an embodiment of this application may further provide a communication apparatus configured to implement a function of the foregoing terminal device. The communication apparatus may be a terminal device, or may be an apparatus (for example, a chip) built in the terminal device. FIG. 14 is another diagram of a structure of a communication apparatus according to an embodiment of this application. As shown in FIG. 14, the communication apparatus may include a measurement unit 1401, a monitoring unit 1402, and a reselection unit 1403.

The measurement unit 1401 is configured to obtain signal quality of a serving cell.

The measurement unit 1401 is further configured to obtain signal quality of a neighboring cell.

The monitoring unit 1402 is configured to monitor first information when the signal quality of the serving cell is greater than a fourth threshold, where the first information is related to paging.

The reselection unit 1403 is configured to perform cell reselection evaluation when the signal quality of the serving cell is less than the fourth threshold.

In a possible design, the monitoring unit 1402 is specifically configured to monitor the first information when the signal quality of the serving cell is less than a third threshold and greater than the fourth threshold.

In a possible design, the third threshold is related to a priority of the neighboring cell.

In a possible design, when the neighboring cell includes a neighboring cell having a priority lower than that of the serving cell, the third threshold is determined based on a low-priority neighboring cell reselection threshold; or when the neighboring cell does not include the neighboring cell having a priority lower than that of the serving cell, the third threshold is determined based on a second value, where the second value is an S-criterion threshold or another defined value.

In a possible design, a difference between the third threshold and the fourth threshold is determined based on a second parameter. The second parameter includes at least one of the following: a signal quality gain obtainable by adjusting a channel condition; a signal quality difference between the first information and a paging message; or maximum signal quality that can be received.

In a possible design, the monitoring unit 1402 is further configured to: when detecting that a second condition is met, stop monitoring the first information; and the reselection unit 1403 is further configured to perform cell reselection evaluation after monitoring the first information is stopped.

The second condition includes at least one of the following: a duration for which the signal quality of the serving cell is less than the third threshold reaches a second duration, or the received first information is ignored.

Optionally, the communication apparatus shown in FIG. 14 may further include a sending unit to implement a sending function, and include a receiving unit to implement a receiving function.

For another example, an embodiment of this application may further provide a communication apparatus configured to implement a function of the foregoing terminal device. The communication apparatus may be a terminal device, or may be an apparatus (for example, a chip) built in the terminal device. FIG. 15 is still another diagram of a structure of a communication apparatus according to an embodiment of this application. As shown in FIG. 15, the communication apparatus may include a measurement unit 1501, a reselection unit 1502, and a monitoring unit 1503.

The measurement unit 1501 is configured to obtain signal quality of a serving cell.

The measurement unit 1501 is further configured to obtain signal quality of a neighboring cell.

The reselection unit 1502 is configured to perform cell reselection evaluation.

The monitoring unit 1503 is configured to monitor first information when the reselection unit 1502 performs cell reselection evaluation, where the first information is related to paging.

In a possible design, the reselection unit 1502 is specifically configured to perform cell reselection evaluation when the signal quality of the serving cell is less than a fifth threshold. The monitoring unit 1503 is specifically configured to monitor the first information when the reselection unit 1502 performs cell reselection evaluation when the signal quality of the serving cell is less than the fifth threshold. The reselection unit 1502 is further configured to perform cell reselection evaluation when the signal quality of the serving cell is greater than the fifth threshold.

In a possible design, the fifth threshold is determined based on a third value, and the third value is an S-criterion threshold or another defined value.

In a possible design, the reselection unit 1502 is specifically configured to perform cell reselection evaluation when the signal quality of the serving cell is less than the fifth threshold and greater than a sixth threshold. The monitoring unit 1503 is specifically configured to monitor the first information when the reselection unit 1502 performs cell reselection evaluation when the signal quality of the serving cell is less than the fifth threshold and greater than the sixth threshold. The reselection unit 1502 is further configured to perform cell reselection evaluation when the signal quality of the serving cell is less than the sixth threshold.

In a possible design, a difference between the sixth threshold and the fifth threshold is determined based on a third parameter. The third parameter includes at least one of the following: a signal quality gain obtainable by adjusting a channel condition; a signal quality difference between the first information and a paging message; or maximum signal quality that can be received.

FIG. 16 is still another diagram of a structure of a communication apparatus according to an embodiment of this application. As shown in FIG. 16, based on FIG. 15, the communication apparatus may further include a selection unit 1504, configured to perform cell selection when no suitable cell is reselected through cell reselection evaluation.

The monitoring unit 1503 is further configured to monitor the first information when the selection unit 1504 performs cell selection.

In an implementation, the monitoring unit 1503 is specifically configured to monitor the first information on a last serving cell when the selection unit 1504 performs cell selection.

For example, that no suitable cell is reselected through cell reselection evaluation includes: Search and measurement are performed during a third duration, and no new suitable cell is found.

In a possible design, the monitoring unit 1503 is further configured to: when detecting that a third condition is met, stop monitoring the first information. The third condition includes at least one of the following: a suitable cell is selected through cell reselection or cell selection, or the received first information is ignored.

Optionally, the communication apparatus shown in FIG. 15 or FIG. 16 may further include a sending unit to implement a sending function, and include a receiving unit to implement a receiving function.

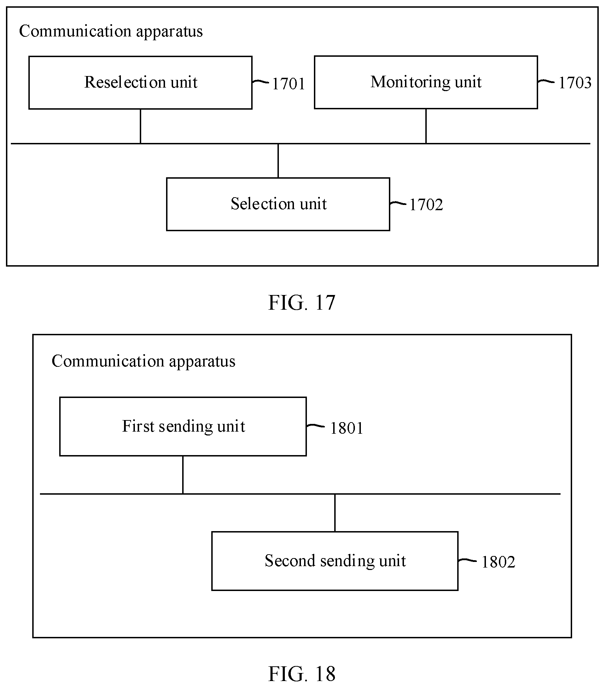

For another example, an embodiment of this application may further provide a communication apparatus configured to implement a function of the foregoing terminal device. The communication apparatus may be a terminal device, or may be an apparatus (for example, a chip) built in the terminal device. FIG. 17 is still another diagram of a structure of a communication apparatus according to an embodiment of this application. As shown in FIG. 17, the communication apparatus may include a reselection unit 1701, a selection unit 1702, and a monitoring unit 1703.

The reselection unit 1701 is configured to perform cell reselection evaluation.

The selection unit 1702 is configured to perform cell selection when no suitable cell is reselected through cell reselection evaluation.

The monitoring unit 1703 is configured to monitor first information when cell selection is performed because no suitable cell is reselected through cell reselection evaluation, where the first information is related to paging.

In an implementation, the monitoring unit 1703 is specifically configured to monitor the first information on a last serving cell.

For example, that no suitable cell is reselected through cell reselection evaluation includes: Search and measurement are performed during a third duration, and no new suitable cell is found.

In a possible design, the monitoring unit 1703 is further configured to: when detecting that a fourth condition is met, stop monitoring the first information. The fourth condition includes at least one of the following: a suitable cell is selected through cell selection, the received first information is ignored, or signal quality of the last serving cell is less than a seventh threshold.

In a possible design, the seventh threshold is determined based on a fourth value, and the fourth value is an S-criterion threshold or another defined value.

In a possible design, a difference between the seventh threshold and the fourth value is determined based on a fourth parameter. The fourth parameter includes at least one of the following: a signal quality gain obtainable by adjusting a channel condition; a signal quality difference between the first information and a paging message; or maximum signal quality that can be received.

Optionally, the communication apparatus shown in FIG. 17 may further include a sending unit to implement a sending function, and include a receiving unit to implement a receiving function.

For another example, an embodiment of this application may further provide a communication apparatus configured to implement a function of the foregoing network device. The communication apparatus may be a network device, or may be an apparatus (for example, a chip) built in the network device. FIG. 18 is still another diagram of a structure of a communication apparatus according to an embodiment of this application. As shown in FIG. 18, the communication apparatus may include a first sending unit 1801 and a second sending unit 1802.

The first sending unit 1801 is configured to send a paging message.

The second sending unit 1802 is configured to send first information, where the first information is related to paging.

Optionally, the communication apparatus shown in FIG. 18 may further include a receiving unit to implement a receiving function.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit with a signal processing capability. In an implementation process, the steps in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these forms of integrated circuits.

For another example, when a unit in the apparatus may be implemented in a manner in which a processing element schedules a program, the processing element may be a general-purpose processor, such as a CPU or another processor that can invoke a program. For still another example, the units may be integrated and implemented in a form of a system-on-a-chip (system-on-a-chip, SoC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus. The communication apparatus may include a processor and an interface circuit. There may be one or more processors.

When the communication apparatus is used in the network device, the processor is configured to communicate with another apparatus through the interface circuit, and perform the steps performed by the network device in the foregoing methods.

When the communication apparatus is used in the terminal device, the processor is configured to communicate with another apparatus through the interface circuit, and perform the steps performed by the terminal device in the foregoing methods.

In an implementation, the units of the terminal device or the network device that respectively implement the corresponding steps in the foregoing methods may be implemented by a processing element by scheduling a program. For example, the apparatus used in the terminal device or the network device may include the processing element and a storage element. The processing element invokes a program stored in the storage element, to perform the method performed by the corresponding terminal device or the network device in the foregoing method embodiments. The storage element may be a storage element located on a same chip as the processing element, that is, an on-chip storage element.

In another implementation, the program used to perform the method performed by the terminal device or the network device in the foregoing methods may be in a storage element located on a different chip from the processing element, that is, an off-chip storage element. In this case, the processing element invokes or loads the program from the off-chip storage element to the on-chip storage element, to invoke and perform the method performed by the corresponding terminal device or network device in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the method performed by the terminal device or the network device. The memory may be located inside the communication apparatus or outside the communication apparatus. In addition, there are one or more processors.

In still another implementation, the units used by the terminal device or the network device to implement the steps in the foregoing methods may be configured as one or more processing elements. These processing elements may be correspondingly disposed on the terminal device or the network device. The processing element herein may be an integrated circuit, for example, one or more ASICs, one or more DSPs, one or more FPGAs, or a combination of these integrated circuits. These integrated circuits may be integrated together to form a chip.

The units of the terminal device or the network device that implement the steps in the foregoing methods may be integrated together, and implemented in a form of an SoC. The SoC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units are implemented by invoking a program by the processing element, and functions of some units are implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be used in the foregoing terminal device or network device. The chip system includes one or more interface circuits and one or more processors. The interface circuit and the processor are interconnected through a line. The processor receives computer instructions from a memory of an electronic device through the interface circuit and executes the computer instructions, to implement the method performed by the corresponding terminal device or network device in the foregoing method embodiments. The electronic device may be the terminal device, the network device, or a device in the terminal device or the network device, or may be another device communicating with the electronic device.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are executed, the steps performed by the terminal device or the network device in the methods in the foregoing embodiments are implemented.

For example, when the computer software instructions are executed by the network device or an apparatus (for example, a chip) built in the network device, the network device is enabled to implement the steps performed by the network device in the foregoing embodiments.

Alternatively, when the computer software instructions are executed by the terminal device or an apparatus (for example, a chip) built in the terminal device, the terminal device is enabled to implement the steps performed by the terminal device in the foregoing embodiments.

Optionally, an embodiment of this application further provides a communication apparatus. The communication apparatus may include a transceiver unit and a processing unit. The transceiver unit may be configured to send and receive information, or configured to communicate with another network element. The processing unit may be configured to process data. For example, the apparatus may implement, via the transceiver unit and the processing unit, the method performed by the terminal device or the network device.

Optionally, an embodiment of this application further provides a computer program product. When the computer program product is executed, the method performed by the terminal device or the network device may be implemented.

Based on the foregoing embodiments, an embodiment of this application further provides a communication system, including a network device and a terminal device. The network device performs the steps performed by the network device in the methods described in the foregoing embodiments. The terminal device performs the steps performed by the terminal device in the methods described in the foregoing embodiments.

For example, an embodiment of this application further provides a network element or a network device, which may be configured to implement the methods performed by the network device in the foregoing embodiments.

For example, an embodiment of this application further provides a terminal device, which may be configured to implement the methods performed by the terminal device in the foregoing embodiments.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any suitable manner. A person skilled in the art may understand that an embodiment may be implemented without one or more specific technical features or technical solutions, or beneficial effect in a specific embodiment. In other embodiments, additional technical features and beneficial effects may also be identified in specific embodiments that do not reflect all embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
obtaining signal quality of a serving cell; and
monitoring first information when the signal quality of the serving cell is greater than a second threshold, wherein the first information is related to paging; and/or
obtaining signal quality of a neighboring cell when the signal quality of the serving cell is less than the second threshold.

2. The method according to claim 1, wherein monitoring the first information when the signal quality of the serving cell is greater than the second threshold comprises:
monitoring the first information when the signal quality of the serving cell is less than a first threshold and greater than the second threshold.

3. The method according to claim 2, wherein the first threshold is related to a priority of the neighboring cell.

4. The method according to claim 3, wherein when the neighboring cell comprises only a neighboring cell having a priority lower than that of the serving cell, the first threshold is determined based on an inter-frequency or inter-RAT measurement initiation threshold;
when the neighboring cell comprises only a neighboring cell having a priority the same as that of the serving cell, the first threshold is determined based on an intra-frequency measurement initiation threshold;
when the neighboring cell comprises only a neighboring cell having a priority higher than that of the serving cell, the first threshold is determined based on a first value, wherein the first value is an inter-frequency or inter-RAT measurement initiation threshold or another defined value;
when the neighboring cell comprises only the neighboring cell having a priority lower than that of the serving cell and the neighboring cell having a priority the same as that of the serving cell, the first threshold is determined based on a larger value of the inter-frequency or inter-RAT measurement initiation threshold and the intra-frequency measurement initiation threshold;
when the neighboring cell comprises only the neighboring cell having a priority lower than that of the serving cell and the neighboring cell having a priority higher than that of the serving cell, the first threshold is determined based on a larger value of the inter-frequency or inter-RAT measurement initiation threshold and the first value;
when the neighboring cell comprises only the neighboring cell having a priority the same as that of the serving cell and the neighboring cell having a priority higher than that of the serving cell, the first threshold is determined based on a larger value of the intra-frequency measurement initiation threshold and the first value; or
when the neighboring cell comprises the neighboring cell having a priority lower than that of the serving cell, the neighboring cell having a priority the same as that of the serving cell, and the neighboring cell having a priority higher than that of the serving cell, the first threshold is determined based on a largest value of the inter-frequency or inter-RAT measurement initiation threshold, the intra-frequency measurement initiation threshold, and the first value.

5. The method according to any one of claims 2 to 4, wherein a difference between the first threshold and the second threshold is determined based on a first parameter, and the first parameter comprises at least one of the following:
a signal quality gain obtainable by adjusting a channel condition;
a signal quality difference between the first information and a paging message; or
maximum signal quality that can be received.

6. The method according to any one of claims 2 to 5, wherein the method further comprises:
when detecting that a first condition is met, stopping monitoring the first information, and obtaining the signal quality of the neighboring cell, wherein
the first condition comprises at least one of the following: a duration for which the signal quality of the serving cell is less than the first threshold reaches a first duration, or the received first information is ignored.

7. A communication method, wherein the method comprises:
obtaining signal quality of a serving cell; and
obtaining signal quality of a neighboring cell; and
monitoring first information when the signal quality of the serving cell is greater than a fourth threshold, wherein the first information is related to paging; and/or
performing cell reselection evaluation when the signal quality of the serving cell is less than the fourth threshold.

8. The method according to claim 7, wherein monitoring the first information when the signal quality of the serving cell is greater than the fourth threshold comprises:
monitoring the first information when the signal quality of the serving cell is less than a third threshold and greater than the fourth threshold.

9. The method according to claim 8, wherein the third threshold is related to a priority of the neighboring cell.

10. The method according to claim 9, wherein when the neighboring cell comprises a neighboring cell having a priority lower than that of the serving cell, the third threshold is determined based on a low-priority neighboring cell reselection threshold; or
when the neighboring cell does not comprise a neighboring cell having a priority lower than that of the serving cell, the third threshold is determined based on a second value, wherein the second value is an S-criterion threshold or another defined value.

11. The method according to any one of claims 8 to 10, wherein a difference between the third threshold and the fourth threshold is determined based on a second parameter, and the second parameter comprises at least one of the following:
a signal quality gain obtainable by adjusting a channel condition;
a signal quality difference between the first information and a paging message; or
maximum signal quality that can be received.

12. The method according to any one of claims 8 to 11, wherein the method further comprises:
when detecting that a second condition is met, stopping monitoring the first information, and performing cell reselection evaluation, wherein
the second condition comprises at least one of the following: a duration for which the signal quality of the serving cell is less than the third threshold reaches a second duration, or the received first information is ignored.

13. A communication method, wherein the method comprises:
obtaining signal quality of a serving cell; and
obtaining signal quality of a neighboring cell; and
performing cell reselection evaluation and monitoring first information, wherein the first information is related to paging.

14. The method according to claim 13, wherein performing cell reselection evaluation and monitoring the first information comprises:
performing cell reselection evaluation and monitoring the first information when the signal quality of the serving cell is less than a fifth threshold; and
the method further comprises:
performing cell reselection evaluation when the signal quality of the serving cell is greater than the fifth threshold.

15. The method according to claim 14, wherein the fifth threshold is determined based on a third value, and the third value is an S-criterion threshold or another defined value.

16. The method according to claim 14 or 15, wherein performing cell reselection evaluation and monitoring the first information when the signal quality of the serving cell is less than the fifth threshold comprises:
performing cell reselection evaluation and monitoring the first information when the signal quality of the serving cell is less than the fifth threshold and greater than a sixth threshold; and
the method further comprises:
performing cell reselection evaluation when the signal quality of the serving cell is less than the sixth threshold.

17. The method according to claim 16, wherein a difference between the sixth threshold and the fifth threshold is determined based on a third parameter, and the third parameter comprises at least one of the following:
a signal quality gain obtainable by adjusting a channel condition;
a signal quality difference between the first information and a paging message; or
maximum signal quality that can be received.

18. The method according to any one of claims 13 to 17, wherein the method further comprises:
when no suitable cell is reselected through cell reselection evaluation, performing cell selection and monitoring the first information.

19. The method according to claim 18, wherein when no suitable cell is reselected through cell reselection evaluation, performing cell selection and monitoring the first information comprises:
when no suitable cell is reselected through cell reselection evaluation, performing cell selection and monitoring the first information on a last serving cell.

20. The method according to claim 18 or 19, wherein that no suitable cell is reselected through cell reselection evaluation comprises:
search and measurement are performed during a third duration, and no new suitable cell is found.

21. The method according to any one of claims 18 to 20, wherein the method further comprises:
when detecting that a third condition is met, stopping monitoring the first information, wherein
the third condition comprises at least one of the following: a suitable cell is selected through cell reselection or cell selection, or the received first information is ignored.

22. A communication method, wherein the method comprises:
performing cell reselection evaluation; and
when no suitable cell is reselected through cell reselection evaluation, performing cell selection and monitoring first information, wherein the first information is related to paging.

23. The method according to claim 22, wherein monitoring the first information comprises:
monitoring the first information on a last serving cell.

24. The method according to claim 22 or 23, wherein that no suitable cell is reselected through cell reselection evaluation comprises:
search and measurement are performed during a third duration, and no new suitable cell is found.

25. The method according to any one of claims 22 to 24, wherein the method further comprises:
when detecting that a fourth condition is met, stopping monitoring the first information, wherein
the fourth condition comprises at least one of the following: a suitable cell is selected through cell selection, the received first information is ignored, or signal quality of the last serving cell is less than a seventh threshold.

26. The method according to claim 25, wherein the seventh threshold is determined based on a fourth value, and the fourth value is an S-criterion threshold or another defined value.

27. The method according to claim 26, wherein a difference between the seventh threshold and the fourth value is determined based on a fourth parameter, and the fourth parameter comprises at least one of the following:
a signal quality gain obtainable by adjusting a channel condition;
a signal quality difference between the first information and a paging message; or
maximum signal quality that can be received.

28. A communication method, wherein the method comprises:
sending a paging message; and
sending first information, wherein the first information is related to paging.

29. A communication apparatus, wherein the apparatus comprises:
a measurement unit, configured to obtain signal quality of a serving cell; and
a monitoring unit, configured to monitor first information when the signal quality of the serving cell is greater than a second threshold, wherein the first information is related to paging, wherein
the measurement unit is further configured to obtain signal quality of a neighboring cell when the signal quality of the serving cell is less than the second threshold.

30. The apparatus according to claim 29, wherein the monitoring unit is specifically configured to monitor the first information when the signal quality of the serving cell is less than a first threshold and greater than the second threshold.

31. The apparatus according to claim 30, wherein the first threshold is related to a priority of the neighboring cell.

32. The apparatus according to claim 31, wherein when the neighboring cell comprises only a neighboring cell having a priority lower than that of the serving cell, the first threshold is determined based on an inter-frequency or inter-RAT measurement initiation threshold;
when the neighboring cell comprises only a neighboring cell having a priority the same as that of the serving cell, the first threshold is determined based on an intra-frequency measurement initiation threshold;
when the neighboring cell comprises only a neighboring cell having a priority higher than that of the serving cell, the first threshold is determined based on a first value, wherein the first value is an inter-frequency or inter-RAT measurement initiation threshold or another defined value;
when the neighboring cell comprises only the neighboring cell having a priority lower than that of the serving cell and the neighboring cell having a priority the same as that of the serving cell, the first threshold is determined based on a larger value of the inter-frequency or inter-RAT measurement initiation threshold and the intra-frequency measurement initiation threshold;
when the neighboring cell comprises only the neighboring cell having a priority lower than that of the serving cell and the neighboring cell having a priority higher than that of the serving cell, the first threshold is determined based on a larger value of the inter-frequency or inter-RAT measurement initiation threshold and the first value;
when the neighboring cell comprises only the neighboring cell having a priority the same as that of the serving cell and the neighboring cell having a priority higher than that of the serving cell, the first threshold is determined based on a larger value of the intra-frequency measurement initiation threshold and the first value; or
when the neighboring cell comprises the neighboring cell having a priority lower than that of the serving cell, the neighboring cell having a priority the same as that of the serving cell, and the neighboring cell having a priority higher than that of the serving cell, the first threshold is determined based on a largest value of the inter-frequency or inter-RAT measurement initiation threshold, the intra-frequency measurement initiation threshold, and the first value.

33. The apparatus according to any one of claims 30 to 32, wherein a difference between the first threshold and the second threshold is determined based on a first parameter, and the first parameter comprises at least one of the following:
a signal quality gain obtainable by adjusting a channel condition;
a signal quality difference between the first information and a paging message; or
maximum signal quality that can be received.

34. The apparatus according to any one of claims 30 to 33, wherein the monitoring unit is further configured to: when detecting that a first condition is met, stop monitoring the first information; and
the measurement unit is further configured to obtain the signal quality of the neighboring cell after monitoring the first information is stopped, wherein
the first condition comprises at least one of the following: a duration for which the signal quality of the serving cell is less than the first threshold reaches a first duration, or the received first information is ignored.

35. A communication apparatus, wherein the apparatus comprises:
a measurement unit, configured to obtain signal quality of a serving cell, wherein
the measurement unit is further configured to obtain signal quality of a neighboring cell;
a monitoring unit, configured to monitor first information when the signal quality of the serving cell is greater than a fourth threshold, wherein the first information is related to paging; and
a reselection unit, configured to perform cell reselection evaluation when the signal quality of the serving cell is less than the fourth threshold.

36. The apparatus according to claim 35, wherein the monitoring unit is specifically configured to monitor the first information when the signal quality of the serving cell is less than a third threshold and greater than the fourth threshold.

37. The apparatus according to claim 36, wherein the third threshold is related to a priority of the neighboring cell.

38. The apparatus according to claim 37, wherein when the neighboring cell comprises a neighboring cell having a priority lower than that of the serving cell, the third threshold is determined based on a low-priority neighboring cell reselection threshold; or
when the neighboring cell does not comprise a neighboring cell having a priority lower than that of the serving cell, the third threshold is determined based on a second value, wherein the second value is an S-criterion threshold or another defined value.

39. The apparatus according to any one of claims 36 to 38, wherein a difference between the third threshold and the fourth threshold is determined based on a second parameter, and the second parameter comprises at least one of the following:
a signal quality gain obtainable by adjusting a channel condition;
a signal quality difference between the first information and a paging message; or
maximum signal quality that can be received.

40. The apparatus according to any one of claims 36 to 39, wherein the monitoring unit is further configured to: when detecting that a second condition is met, stop monitoring the first information; and
the reselection unit is further configured to perform cell reselection evaluation after monitoring the first information is stopped, wherein
the second condition comprises at least one of the following: a duration for which the signal quality of the serving cell is less than the third threshold reaches a second duration, or the received first information is ignored.

41. A communication apparatus, wherein the apparatus comprises:
a measurement unit, configured to obtain signal quality of a serving cell, wherein
the measurement unit is further configured to obtain signal quality of a neighboring cell;
a reselection unit, configured to perform cell reselection evaluation; and
a monitoring unit, configured to monitor first information when the reselection unit performs cell reselection evaluation, wherein the first information is related to paging.

42. The apparatus according to claim 41, wherein the reselection unit is specifically configured to perform cell reselection evaluation when the signal quality of the serving cell is less than a fifth threshold;
the monitoring unit is specifically configured to monitor the first information when the reselection unit performs cell reselection evaluation when the signal quality of the serving cell is less than the fifth threshold; and
the reselection unit is further configured to perform cell reselection evaluation when the signal quality of the serving cell is greater than the fifth threshold.

43. The apparatus according to claim 42, wherein the fifth threshold is determined based on a third value, and the third value is an S-criterion threshold or another defined value.

44. The apparatus according to claim 42 or 43, wherein the reselection unit is specifically configured to perform cell reselection evaluation when the signal quality of the serving cell is less than the fifth threshold and greater than a sixth threshold;
the monitoring unit is specifically configured to monitor the first information when the reselection unit performs cell reselection evaluation when the signal quality of the serving cell is less than the fifth threshold and greater than the sixth threshold; and
the reselection unit is further configured to perform cell reselection evaluation when the signal quality of the serving cell is less than the sixth threshold.

45. The apparatus according to claim 44, wherein a difference between the sixth threshold and the fifth threshold is determined based on a third parameter, and the third parameter comprises at least one of the following:
a signal quality gain obtainable by adjusting a channel condition;
a signal quality difference between the first information and a paging message; or
maximum signal quality that can be received.

46. The apparatus according to any one of claims 41 to 45, wherein the apparatus further comprises:
a selection unit, configured to perform cell selection when no suitable cell is reselected through cell reselection evaluation; and
the monitoring unit is further configured to monitor the first information when the selection unit performs cell selection.

47. The apparatus according to claim 46, wherein the monitoring unit is specifically configured to monitor the first information on a last serving cell when the selection unit performs cell selection.

48. The apparatus according to claim 46 or 47, wherein that no suitable cell is reselected through cell reselection evaluation comprises:
search and measurement are performed during a third duration, and no new suitable cell is found.

49. The apparatus according to any one of claims 46 to 48, wherein the monitoring unit is further configured to: when detecting that a third condition is met, stop monitoring the first information; and
the third condition comprises at least one of the following: a suitable cell is selected through cell reselection or cell selection, or the received first information is ignored.

50. A communication apparatus, wherein the apparatus comprises:
a reselection unit, configured to perform cell reselection evaluation; and
a selection unit, configured to perform cell selection when no suitable cell is reselected through cell reselection evaluation; and
a monitoring unit, configured to monitor first information when cell selection is performed because no suitable cell is reselected through cell reselection evaluation, wherein the first information is related to paging.

51. The apparatus according to claim 50, wherein the monitoring unit is specifically configured to monitor the first information on a last serving cell.

52. The apparatus according to claim 50 or 51, wherein that no suitable cell is reselected through cell reselection evaluation comprises:
search and measurement are performed during a third duration, and no new suitable cell is found.

53. The apparatus according to any one of claims 50 to 52, wherein the monitoring unit is further configured to: when detecting that a fourth condition is met, stop monitoring the first information; and
the fourth condition comprises at least one of the following: a suitable cell is selected through cell selection, the received first information is ignored, or signal quality of the last serving cell is less than a seventh threshold.

54. The apparatus according to claim 53, wherein the seventh threshold is determined based on a fourth value, and the fourth value is an S-criterion threshold or another defined value.

55. The apparatus according to claim 54, wherein a difference between the seventh threshold and the fourth value is determined based on a fourth parameter, and the fourth parameter comprises at least one of the following:
a signal quality gain obtainable by adjusting a channel condition;
a signal quality difference between the first information and a paging message; or
maximum signal quality that can be received.

56. A communication apparatus, wherein the apparatus comprises:
a first sending unit, configured to send a paging message; and
a second sending unit, configured to send first information, wherein the first information is related to paging.

57. A communication apparatus, wherein the apparatus comprises a processor, and the processor is configured to perform the method according to any one of claims 1 to 6, the method according to any one of claims 7 to 12, the method according to any one of claims 13 to 21, the method according to any one of claims 22 to 27, or the method according to claim 28.

58. A computer-readable storage medium, wherein the computer-readable storage medium comprises instructions; and when the instructions are executed, the method according to any one of claims 1 to 6 is implemented, the method according to any one of claims 7 to 12 is implemented, the method according to any one of claims 13 to 21 is implemented, the method according to any one of claims 22 to 27 is implemented, or the method according to claim 28 is implemented.

59. A computer program product, wherein when the computer program product is executed, the method according to any one of claims 1 to 6 is implemented, the method according to any one of claims 7 to 12 is implemented, the method according to any one of claims 13 to 21 is implemented, the method according to any one of claims 22 to 27 is implemented, or the method according to claim 28 is implemented.

60. A chip system, wherein the chip system comprises one or more interface circuits and one or more processors, wherein
the interface circuit and the processor are interconnected through a line; and
the processor receives computer instructions from a memory of an electronic device through the interface circuit, and executes the computer instructions, to implement the method according to any one of claims 1 to 6, implement the method according to any one of claims 7 to 12, implement the method according to any one of claims 13 to 21, implement the method according to any one of claims 22 to 27, or implement the method according to claim 28.
